(19) **Europäisches Patentamt**
**European Patent Office**
**Office européen des brevets**

(11) **EP 4 505 926 B1**

(12) **EUROPEAN PATENT SPECIFICATION**

(45) Date of publication and mention
of the grant of the patent:
**05.08.2026 Bulletin 2026/32**

(21) Application number: **23816201.0**

(22) Date of filing: **31.03.2023**

(51) International Patent Classification (IPC):
*A47L 9/28* (2006.01)   *A47L 5/26* (2006.01)
*A47L 7/00* (2006.01)   *G06N 3/08* (2023.01)
*G06N 20/00* (2019.01)   *G16Y 40/10* (2020.01)

(52) Cooperative Patent Classification (CPC):
**A47L 5/26; A47L 9/2805; A47L 9/281;**
**A47L 9/2842; A47L 9/2847; A47L 9/2857;**
**A47L 9/2873; A47L 9/2889; A47L 9/2894;**
**G06N 3/08; G06N 20/00; G16Y 40/10**

(86) International application number:
**PCT/KR2023/004377**

(87) International publication number:
**WO 2023/234535 (07.12.2023 Gazette 2023/49)**

(54) **CLEANING SYSTEM CAPABLE OF SELF-DIAGNOSIS, AND SELF-DIAGNOSIS METHOD OF CLEANING SYSTEM**

REINIGUNGSSYSTEM MIT FÄHIGKEIT ZUR SELBSTDIAGNOSE UND
SELBSTDIAGNOSEVERFAHREN DES REINIGUNGSSYSTEMS

SYSTÈME DE NETTOYAGE POUVANT S'AUTO-DIAGNOSTIQUER, ET PROCÉDÉ
D'AUTO-DIAGNOSTIC DE SYSTÈME DE NETTOYAGE

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priority: **02.06.2022   KR 20220067827**
**19.01.2023   KR 20230008110**

(43) Date of publication of application:
**12.02.2025 Bulletin 2025/07**

(60) Divisional application:
**26187940.7**

(73) Proprietor: **Samsung Electronics Co., Ltd.**
**Suwon-si, Gyeonggi-do 16677 (KR)**

(72) Inventors:
• **LEE, Seongu**
**Suwon-si, Gyeonggi-do 16677 (KR)**
• **KIM, Minji**
**Suwon-si, Gyeonggi-do 16677 (KR)**
• **KIM, Hyeongjun**
**Suwon-si, Gyeonggi-do 16677 (KR)**
• **LEE, Ahyoung**
**Suwon-si, Gyeonggi-do 16677 (KR)**
• **LEE, Yeongju**
**Suwon-si, Gyeonggi-do 16677 (KR)**
• **JEONG, Jaeshik**
**Suwon-si, Gyeonggi-do 16677 (KR)**
• **CHO, Yoonkyung**
**Suwon-si, Gyeonggi-do 16677 (KR)**

(74) Representative: **Walaski, Jan Filip et al**
**Venner Shipley LLP**
**TIDE Bankside**
**8 Emerson Street**
**London SE1 9DU (GB)**

(56) References cited:
**WO-A1-2022/008869      WO-A1-2022/008872**
**JP-B2- 5 899 427       KR-A- 20150 126 046**
**KR-B1- 102 130 691     US-A1- 2021 007 569**
**US-A1- 2022 160 201**

**Description**

Technical Field

An embodiment of the present invention relates to a cleaning system capable of self-diagnosis and a self-diagnosis method of the cleaning system.

Background Art

A wireless vacuum cleaner is already known e.g. from WO-A-2022008869. Recently released cleaning systems include a wireless vacuum cleaner and a station device.

The wireless vacuum cleaner is configured not to use a cable for supplying power and configured to use a battery as a power supply. The wireless vacuum cleaner includes a suction motor configured to generate a suction force. The wireless vacuum cleaner may use the suction force generated by the suction motor to suck in impurities, such as dust, etc. along with air, from a brush device (a cleaner head). The wireless vacuum cleaner includes a dust collection part configured to collect the impurities separated from the air sucked in.

The station device may perform a docking operation (stroke or cycle) of the wireless vacuum cleaner, a battery charge operation (stroke or cycle) of the wireless vacuum cleaner, and a dust discharge operation (stroke or cycle) of the wireless vacuum cleaner.

The wireless vacuum cleaner and the station device included in the cleaning system may have structures appropriate for various use environments. For example, the wireless vacuum cleaner may have a structure in which a cleaning body, a pipe, and a cleaning head are combined (the cleaning body + the pipe + the cleaning head). For example, the wireless vacuum cleaner may have a structure in which a cleaning body and a crack cleaner tool are combined (the cleaning body + the crack cleaner tool). For example, the wireless vacuum cleaner may have a structure in which a cleaning body and a pipe having an adjusted length are combined (the cleaning body + the pipe having the adjusted length).

For example, when a cleaning object surface is a floor, the wireless vacuum cleaner may have a structure in which a cleaning body, a pipe, and a floor-dedicated brush device are combined. For example, when the cleaning object surface is bedclothes or a sofa and pet hair is to be cleaned, the wireless vacuum cleaner may have a structure in which a pet-dedicated brush is combined. For example, when the wireless vacuum cleaner is docked on the station device, the cleaning system may have a structure to automatically discharge the dust in the dust collection part attached to the wireless vacuum cleaner to a dust collection part of the station device.

As described above, the wireless vacuum cleaner and the station device included in the cleaning system have various structures according to the user environments, and thus, operation conditions of the cleaning system may become diversified. Thus, it is difficult to diagnose the state (for example, a malfunction) of the cleaning system.

For example, when the station device is not able to discharge dust, it is difficult to diagnose whether it is because an abnormality occurs in an operation of a suction motor of the station device, whether it is because an abnormality occurs in the dust collection part of the station device, or whether it is because a connection abnormality occurs between the station device and the wireless vacuum cleaner.

Also, when an abnormal state occurs due to complex factors of the cleaning system, when an abnormal state occurs due to a user's misuse, or when an abnormal state occurs due to an external factor (for example, impurities stuck in a brush drum), it is difficult to accurately diagnose a reason of the occurrence of the abnormal state. In particular, it is even more difficult to diagnose a progressive abnormal state (or abnormal symptom) which is an operation state of the cleaning system not corresponding to a normal state or a broken state. For example, in a progressive abnormal state, in which a flow path (or a passage) is not completely blocked although impurities get stuck in a portion of the flow path, it is hard to diagnose a blockage state of the flow path.

Due to the difficulty of diagnosis with respect to a state of the cleaning system, a misuse or wrong determination of the cleaning system may occur. For example, a user may determine a normal state of the cleaning system as a defective state and may waste unnecessary costs and time or may determine a defective state as a normal state to damage components of the cleaning system.

Disclosure

Technical Solution

A wireless vacuum cleaner according to an embodiment of the present invention may include a cleaning body, a brush device, a load sensor, a first pressure sensor, a first memory, and at least one processor. The cleaning body may include a first suction motor configured to generate a suction force of the wireless vacuum cleaner. The brush device may be connected to the cleaning body. The load sensor may be configured to sense a load value of the brush device. The first pressure sensor may be configured to measure a pressure value in a flow path in which the cleaning body and the brush device are connected to each other. The first memory may store one or more instructions. The at least one processor may be configured to execute the one or more instructions to identify a type of the brush device. The at least one processor may be configured to identify whether or not a use environment state of the brush device is a lift state. When the use environment state of the brush device is the lift state, the at least one processor may be configured to perform a self-diagnosis on a state of the wireless vacuum cleaner by using at least one of the load value of the brush device sensed by the load sensor according to the type of the brush device and a flow path pressure value based on the pressure value measured by the first pressure sensor.

A self-diagnosis method of a wireless vacuum cleaner according to an embodiment of the present invention may include identifying a type of the brush device. The self-diagnosis method of the wireless vacuum cleaner according to an embodiment of the present invention may include identifying whether or not a use environment state of the brush device is a lift state. The self-diagnosis method of the wireless vacuum cleaner according to an embodiment of the present invention may include, when the use environment state of the brush device is the lift state, performing a self-diagnosis on a state of the wireless vacuum cleaner by using at least one of a load value of the brush device sensed by a load sensor according to the type of the brush device and a flow path pressure value based on a pressure value measured by a first pressure sensor.

A station device on which a wireless vacuum cleaner is docked, according to an embodiment of the present invention, may include a second communication interface communicating with the wireless vacuum cleaner, a second memory storing one or more instructions, and at least one processor. The at least one processor included in the station device may be configured to execute the one or more instructions to receive at least one of a flow path pressure value from the wireless vacuum cleaner and a load value of a brush device included in the wireless vacuum cleaner through the second communication interface. The at least one processor included in the station device may be configured to execute the one or more instructions to perform a self-diagnosis on a state of the wireless vacuum cleaner by using the received at least one of the flow path pressure value and the load value of the brush device.

A self-diagnosis method of a station device on which a wireless vacuum cleaner is docked, according to an embodiment of the present invention, may include receiving at least one of a flow path pressure value from the wireless vacuum cleaner and a load value of a brush device included in the wireless vacuum cleaner through a second communication interface. The self-diagnosis method of the station device may include performing a self-diagnosis on a state of the wireless vacuum cleaner by using the received at least one of the flow path pressure value and the load value of the brush device.

A wireless vacuum cleaner according to an embodiment of the present invention may include a cleaning body, a brush device, a load sensor, a first pressure sensor, a first memory, and at least one processor. The cleaning body may include a first suction motor configured to generate a suction force of the wireless vacuum cleaner. The brush device may be connected to the cleaning body. The load sensor may be configured to sense a load value of the brush device. The first pressure sensor may be configured to measure a pressure value in a flow path in which the cleaning body and the brush device are connected to each other. The first memory may store one or more instructions. The at least one processor may be configured to execute the one or more instructions to identify whether or not a use environment state of the brush device is a lift state. When the use environment state of the brush device is the lift state, the at least one processor may be configured to perform a self-diagnosis on a state of the wireless vacuum cleaner by using at least one of the load value of the brush device sensed by the load sensor according to the type of the brush device and a flow path pressure value based on the pressure value measured by the first pressure sensor.

A self-diagnosis method of a wireless vacuum cleaner according to an embodiment of the present invention may include identifying whether or not a use environment state of a brush device (2000) is a lift state. The self-diagnosis method of the wireless vacuum cleaner according to an embodiment of the present invention may include, when the use environment state of the brush device is the lift state, performing a self-diagnosis on a state of the wireless vacuum cleaner by using at least one of a load value of the brush device sensed by a load sensor according to the type of the brush device and a flow path pressure value based on a pressure value measured by a first pressure sensor.

Description of Drawings

FIG. 1 is a diagram for describing a cleaning system according to an embodiment of the present disclosure.
FIG. 2 is a diagram for describing a wireless vacuum cleaner and a station device according to an embodiment of the present disclosure.
FIG. 3 is an example of controlling power consumption of a wireless vacuum cleaner and drum revolutions per minute (RPM) of a brush device in a general mode and an artificial intelligence (AI) mode, when the brush device is a multi-brush.

FIG. 4 is a diagram for describing a cleaning body according to an embodiment of the present disclosure.

FIG. 5 is a diagram for describing operations of processors of a wireless vacuum cleaner according to an embodiment of the present disclosure.

FIG. 6 is a diagram for describing a type of a brush device according to an embodiment of the present disclosure.

FIG. 7 is a diagram for describing an operation, performed by a cleaning body, of identifying a type of a brush device, according to an embodiment of the present disclosure.

FIG. 8 is a diagram for describing an identification resistor (an ID resistor) of a brush device according to an embodiment of the present disclosure.

FIG. 9 is a flowchart of a self-diagnosis method of a cleaning system, according to an embodiment of the present disclosure.

FIG. 10 is a diagram for describing a use environment state of a brush device according to an embodiment of the present disclosure.

FIG. 11 is a detailed flowchart of a self-diagnosis process according to an embodiment of the present disclosure.

FIG. 12 is a diagram for describing a self-diagnosis process with respect to a state of a wireless vacuum cleaner based on a flow path pressure value of the wireless vacuum cleaner, according to an embodiment of the present disclosure.

FIG. 13 is a diagram for describing a use environment state of a brush device that automatically corrects a boundary surface of a lift state, according to an embodiment of the present disclosure.

FIG. 14 is a detailed flowchart of a self-diagnosis process according to an embodiment of the present disclosure.

FIG. 15 is a diagram for describing a self-diagnosis process with respect to a state of a wireless vacuum cleaner based on data related to a load of a brush device.

FIG. 16 is a diagram of an example of a display of information with respect to a result of performing a self-diagnosis according to an embodiment of the present disclosure.

FIG. 17 is a flowchart of a self-diagnosis method of a cleaning system, according to an embodiment of the present disclosure.

FIG. 18 is a diagram for describing a self-diagnosis process with respect to a station device, according to an embodiment of the present disclosure.

FIG. 19 is a flowchart of a self-diagnosis method of a cleaning system, according to an embodiment of the present disclosure.

FIG. 20 is a diagram for describing an operation, performed by a station device, of sensing a docking state of a wireless vacuum cleaner, according to an embodiment of the present disclosure.

FIG. 21 is a flowchart of an operation of a self-diagnosis method of a cleaning system, according to an embodiment of the present disclosure.

FIG. 22 is a flowchart of an operation of a self-diagnosis method of a cleaning system, according to an embodiment of the present disclosure.

FIG. 23 is a diagram for describing a cleaning system according to an embodiment of the present disclosure.

FIG. 24 is a flowchart of a self-diagnosis method of a cleaning system, according to an embodiment of the present disclosure.

Mode for Invention

The terms used in the present disclosure will be briefly described, and an embodiment of the present invention will be described in detail.

The terms used in the present invention are general terms as possible that have been widely used nowadays in consideration of the functions in the present invention, which, however, may be changed according to an intention of a technician in the art, a precedent, the advent of new technologies, or the like. Also, particular cases may include terms arbitrary selected by an applicant, and in this case, the meaning of the terms will be described in detail in the corresponding description. Therefore, the terms used in the present invention should be defined based on the meanings of the terms and the content throughout the present invention, rather than simply based on the titles of the terms.

Throughout the present invention, the expression "at least one of a, b or c" may indicate "a," "b," "c," "a and b," "a and c," "b and c," "all of a, b, and c," or variations thereof.

In this invention, the expression "and/or" includes a combination of a plurality of described components or any component of the plurality of described components. In this disclosure, terms such as "1st," "2nd," "first," and "second" may be merely used to distinguish a corresponding component from other corresponding components and do not limit the corresponding components in terms of other aspects (for example, the degree of importance or the order).

Throughout the present invention, when a part "includes" or "comprises" an element, the part may further include other elements, not excluding the other elements, unless there is a particular description contrary thereto.

Also, the terms "portion," "module," etc. described in this invention denote a unit configured to process at least one function or operation, and the "portion," and the "module" may be realized as hardware or software, such as a field programmable gate array (FPGA) or an application specific integrated circuit (ASIC), or a combination of the hardware and the software. The term "portion" used in an embodiment of the present invention does not have a meaning limited to software or hardware. A "portion" described in the present invention may be configured to be in a storage medium which may be addressed or may be configured to play one or more processors. According to an embodiment of the present invention, a "portion" may include components, such as software components, object-oriented software components, class components, and task components, processes, functions, attributes, procedures, sub-routines, segments of a program code, drivers, firmware, a microcode, a circuit, data, a database, data structures, tables, arrays, and variables. Functions provided through a predetermined component or a predetermined "portion" may be combined to reduce the number of functions or may be divided into additional components. Also, according to an embodiment, a "portion" may include one or more processors.

According to an embodiment of the present invention, each of blocks of the flowcharts and combinations of the flowcharts may be performed by computer program instructions. The computer program instructions may be loaded on a general-purpose computer, a specialized computer, or a processor of other programmable data processing device. The instructions performed through the computer or the processor of the other programmable data processing device may generate a medium for performing the functions described in the flowchart block(s). The computer program instructions may also be stored in a computer-available or computer-readable memory oriented for the computer or the other programmable data processing device in order to realize the functions in a predetermined way. The instructions stored in the computer-available or computer-readable memory may also produce manufacturing items embedding an instruction medium for performing the functions described in the flowchart block(s). The computer program instructions may also be loaded on the computer or the other programmable data processing device.

Furthermore, each block in the flowcharts may represent a module, segment, or a part of code including one or more executable instructions to perform particular logic function(s). According to an embodiment of the present invention, the functions described with respect to the blocks may also be generated not according to an order. For example, two blocks illustrated in succession may be executed substantially concurrently, or the blocks may sometimes be executed in a reverse order, depending on the functions involved therein.

Hereinafter, an embodiment of the present invention will be described in detail with reference to the accompanying drawings, so that the embodiment of the present invention may be easily implemented by one of ordinary skill in the art. However, an embodiment of the present invention may have different forms and should not be construed as being limited to the embodiment of the present invention described herein.

Also, in the drawings, parts not related to descriptions are omitted for the clear description of an embodiment of the present invention, and throughout the specification, like reference numerals are used for like elements.

According to an embodiment of the present invention, a cleaning system capable of self-diagnosis with respect to a state in various use structures and a self-diagnosis method of the cleaning system may be provided.

According to an embodiment of the present invention, a cleaning system capable of self-diagnosis using a learning model (or an artificial intelligence (AI) model) in various use structures and a self-diagnosis method of the cleaning system may be provided.

According to an embodiment of the present invention, a cleaning system capable of self-diagnosis after a wireless vacuum cleaner performs a dust discharge operation while being docked on a station device, and a self-diagnosis method of the cleaning system may be provided.

Therefore, based on a result of performing the self-diagnosis with respect to a state of the cleaning system having various use structures, a user may accurately identify a location or a component requiring a state check and may appropriately take measures. Accordingly, costs and time for maintaining the cleaning system may be reduced. Also, it is possible to prevent the occurrence of wrong determination or misuse due to the complex factors (e.g., the state of a cleaning object surface, the assembling state of the cleaning system, the type of a brush device, etc.) of the cleaning system. Thus, the cleaning system may be maintained as an optimal operation state.

The self-diagnosis with respect to the state of the cleaning system according to an embodiment of the present invention may be referred to as a state check or a malfunction check of the cleaning system. The self-diagnosis with respect to the state of the cleaning system according to an embodiment of the present invention may include an operation of examining the state (e.g., a brush stuck state, a flow path stuck state, an inappropriate assembling state of a filter, door opening of a dust collection part (or lid opening of a dust bin), or a battery shortage state) of a wireless vacuum cleaner. The self-diagnosis with respect to the state of the cleaning system according to an embodiment of the present invention may include an operation of checking the state (e.g., a replacement state of a dust collection part, a misconnection state between the wireless vacuum cleaner and the station device, and a malfunction state of a suction motor) of the station device. The self-diagnosis with respect to the state of the cleaning system according to an embodiment of the present invention may include an operation of pre-diagnosing a progressive abnormal state of the cleaning system. The progressive abnormal state denotes a state in which a malfunction or abnormality is gradually happening. The progressive abnormal state may denote a state which is neither a broken or abnormal state nor a normal state.

Various use structures of the cleaning system according to an embodiment of the present invention may include the structure of the wireless vacuum cleaner in which various types of brush devices are connected to a cleaning body. Various use structures of the cleaning system according to an embodiment of the present invention may include a general mode and an AI mode. The general mode may be a mode in which the cleaning system operates according to an operation mode selected by a user. The AI mode may be a mode in which the cleaning system operates according to an operating environment inferred by an AI model (or a learning model).

Various use structures of the cleaning system according to an embodiment of the present invention may include a state (or a brush operation mode) in which the wireless vacuum cleaner solely operates. Here, the wireless vacuum cleaner may have a structure in which the cleaning body and the brush device are connected or a structure in which the cleaning body, the brush device, and an extension pipe are connected. Various use structures of the cleaning system according to an embodiment of the present invention may include a state (or a handy operation mode) in which the cleaning body included in the wireless vacuum cleaner solely operates. Various use structures of the cleaning system according to an embodiment of the present invention may include a state in which the cleaning system operates (for example, a battery charge operation or a dust discharge operation) after the wireless vacuum cleaner is docked on the station device. Various use structures of the cleaning system according to an embodiment of the present invention are not limited to the descriptions above.

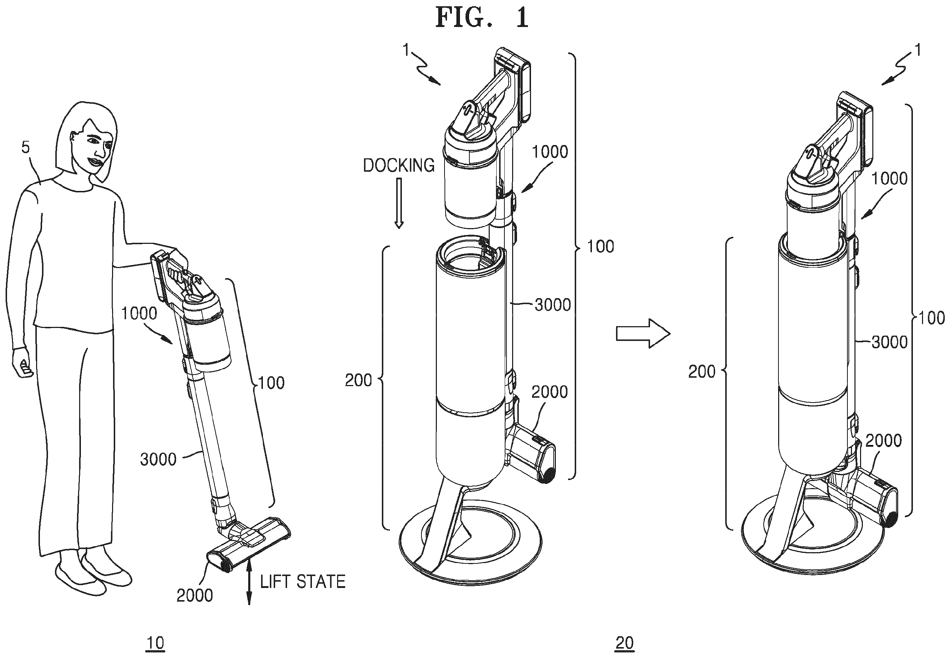

FIG. 1 is a diagram for describing a cleaning system 1 according to an embodiment of the present disclosure.

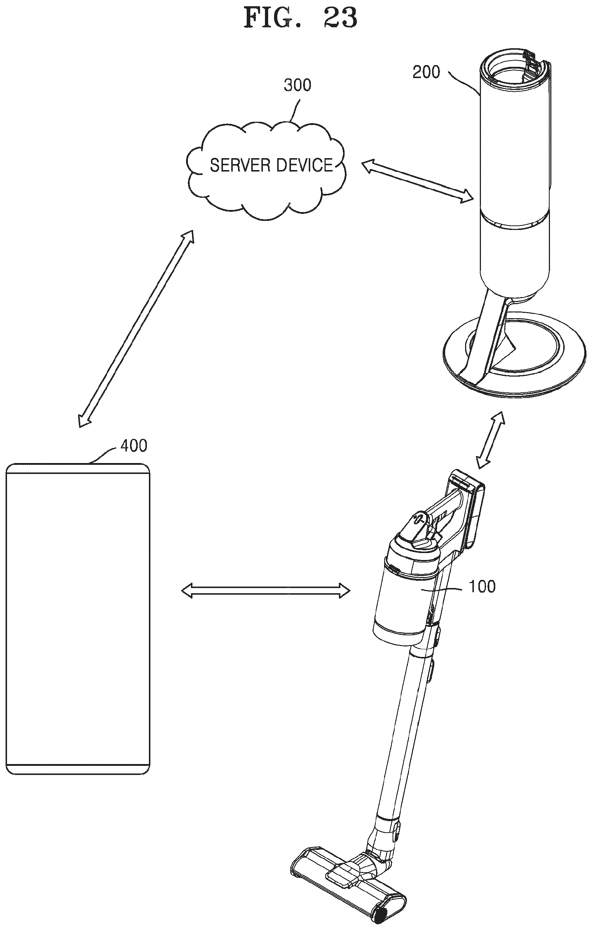

Referring to FIG. 1, the cleaning system 1 according to an embodiment of the present disclosure may include a wireless vacuum cleaner 100 and a station device 200 but is not limited thereto. For example, the cleaning system 1 may include a server device 300 of FIG. 23 to be described below. For example, the cleaning system 1 may include a user terminal 400 of FIG. 23 to be described below.

The cleaning system 1 according to an embodiment of the present disclosure may perform a self-diagnosis with respect to a state of the wireless vacuum cleaner 100 while the wireless vacuum cleaner 100 is not being docked on the station device 200, as shown by 10 of FIG. 1. 10 of FIG. 1 may indicate a case where a user 5 is using the wireless vacuum cleaner 100. 10 of FIG. 1 may be defined as a case where the wireless vacuum cleaner 100 solely performs the self-diagnosis. 10 of FIG. 1 indicates a case of the wireless cleaner 100 in which a cleaning body 1000, a brush device 2000, and an extension pipe 3000 are connected.

In 10 of FIG. 1, a use environment state of the brush device 2000 may be a lift state. The lift state of the brush device 2000 may be referred to as a lift state of the wireless vacuum cleaner 100. The lift state of the brush device 2000 is a state in which a bottom load is not applied to the brush device 2000 and may be referred to as a non-load state. The lift state of the brush device 2000 may be defined as a state in which the brush device 2000 is apart from a cleaning object surface by a predetermined value (e.g., a load value (or operation load power, an operation load current value, or data related an operation load) whereby a bottom load is not applied to the brush device 2000) or greater.

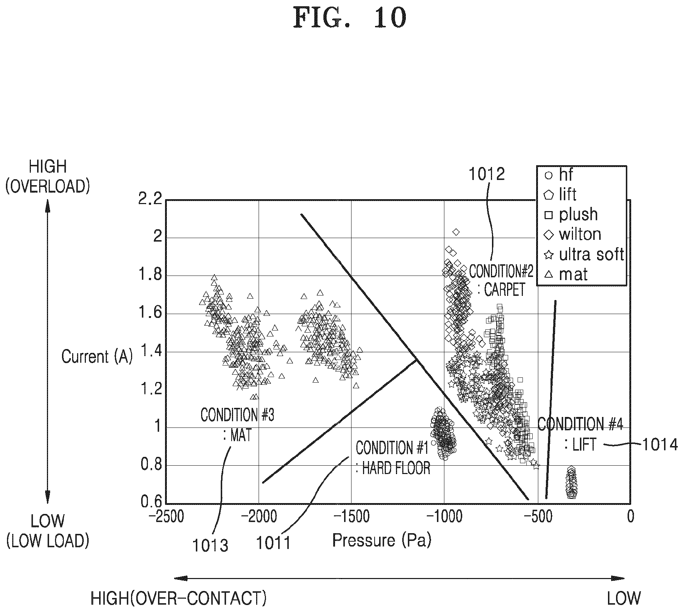

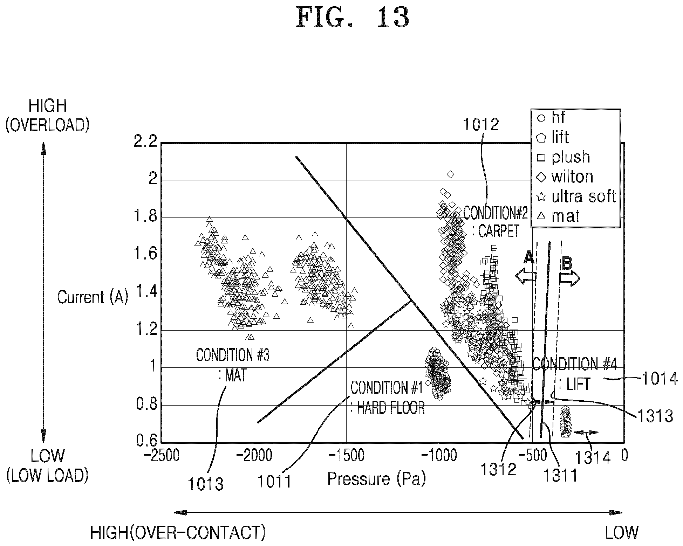

For example, as illustrated in FIGS. 10 and 13 to be described below, when the load value of the brush device 2000 is an operation current value (an operation current value of the brush device 2000) that is less than 0.8 A (or a defined current value) and a flow path pressure value of the wireless vacuum cleaner 100 is -800 Pa (or a defined flow path pressure value) or greater, the wireless vacuum cleaner 100 may identify the use environment state of the brush device 2000 as the lift state, but it is not limited thereto. This is because the load value (e.g., the operation current value) of the brush device 2000 and the flow path pressure value to identify the lift state of the wireless vacuum cleaner 100 may vary according to types of the brush device 2000 and the power consumption of the wireless vacuum cleaner 100. For example, when the power consumption of the wireless vacuum cleaner 100 is 115 W and the brush device 2000 is an AI floor brush, the wireless vacuum cleaner 100 may identify the use environment state of the brush device 2000 as the lift state when the load value of the brush device 2000 is the operation current value of 0.515 A and the flow path pressure value of the wireless vacuum cleaner 100 is -795.1 Pa For example, when the power consumption of the wireless vacuum cleaner 100 is 50 W and the brush device 2000 is an AI floor brush, the wireless vacuum cleaner 100 may identify the use environment state of the brush device 2000 as the lift state when the load value of the brush device 2000 is the operation current value of 0.533311 A and the flow path pressure value of the wireless vacuum cleaner 100 is - 396.4 Pa As described above, the lift state of the brush device 2000 according to an embodiment of the present disclosure may be identified based on the load value (e.g., the operation current value) of the brush device 2000, the flow path pressure value, the type of the brush device 2000, and the power consumption of the wireless vacuum cleaner 100.

10 of FIG. 1 may be a case where the self-diagnosis is performed on the state of the wireless vacuum cleaner 100, based on at least one of the flow path pressure value of the wireless vacuum cleaner 100 and the load value (e.g., the operation current value or the data related to the load) of the brush device 2000, according to the type of the brush device 2000, when the brush device 2000 is in the lift state. The reason of using at least one of the flow path pressure value of the wireless vacuum cleaner 100 and the load value (e.g., the operation current value) of the brush device 2000 when the self-diagnosis is performed on the state of the wireless vacuum cleaner 100 is that the flow path pressure value of the wireless vacuum cleaner 100 and the load value (e.g., the operation current value) of the brush device 2000 may vary according to the types of the brush device 2000. The load value of the brush device 2000 according to the present disclosure may be referred to as including the operation current value of the brush device 2000.

10 of FIG. 1 may also be a case where the self-diagnosis is performed with respect to the state of the wireless vacuum cleaner 100, based on at least one of the flow path pressure value of the wireless vacuum cleaner 100 and the load value (e.g., the operation current value or the data related to the load) of the brush device 2000, when the brush device 2000 is in the lift state.

In the case of 10 of FIG. 1, information about a result of performing the self-diagnosis may be displayed through a display 1710 of the wireless vacuum cleaner 100, but it is not limited thereto. For example, the information about the result of performing the self-diagnosis according to an embodiment of the present disclosure may be output as notification sound through a speaker (not shown) included in a user interface 1700 of the wireless vacuum cleaner 100. The displaying of the information about the result of performing the self-diagnosis through the display 1710 included in the wireless vacuum cleaner 100 may be referred to as an operation of outputting the information about the result of performing the self-diagnosis. The displaying of the information about the result of performing the self-diagnosis via a speaker (not shown) included in the wireless vacuum cleaner 100 may be referred to as an operation of outputting the information about the result of performing the self-diagnosis. For example, the information about the result of performing the self-diagnosis according to an embodiment of the present disclosure may not be output through the wireless vacuum cleaner 100.

The information about the result of performing the self-diagnosis according to an embodiment of the present disclosure may be referred to as self-diagnosis result information. The self-diagnosis result information may include information about an abnormal state, information about a malfunction, or check guide information (e.g., a brush check, a dust collection part check, etc.) but is not limited thereto. The case of 10 of FIG. 1 may be referred to as a case in which a self-diagnosis mode with respect to the state of the wireless vacuum cleaner 100 or a state check mode is performed.

As illustrated in 20 of FIG. 1, the cleaning system 1 according to an embodiment of the present disclosure may identify the state in which the wireless vacuum cleaner 100 is docked on the station device 200 as the lift state of the brush device 2000 and may perform the self-diagnosis on the state of the cleaning system 1. 20 of FIG. 1 may be defined as a case where the self-diagnosis is performed on the state of the cleaning system 1 during a charge state of the wireless vacuum cleaner 100 or a stand-by state of the cleaning system 1. The stand-by state of the cleaning system 1 may be referred to as the state in which the wireless vacuum cleaner 100 is docked on the station device 200.

According to an embodiment of the present disclosure, the wireless vacuum cleaner 100 may identify at least one of the case in which the load value (the operation current value) of the brush device 2000 and the flow path pressure value of the wireless vacuum cleaner 100 indicate the lift state of the brush device 2000 and the state in which the wireless vacuum cleaner 100 is docked on the station device 200, as the lift state of the brush device 2000.

The case of 20 of FIG. 1 may be defined as a case where the self-diagnosis is performed on the state of the cleaning system 1, while the wireless vacuum cleaner 100 is being docked on the station device 200. In the case of 20 of FIG. 1, while the wireless vacuum cleaner 100 is being docked on the station device 200, the self-diagnosis on the state of the wireless vacuum cleaner 100 may be performed based on at least one of the flow path pressure value of the wireless vacuum cleaner 100 and the load value (e.g., the operation current value) of the brush device 2000 according to the type of the brush device 2000, and the self-diagnosis on the state of the station device 200 may be performed by using a pressure value before the station device 200 discharges dust and a pressure value after the station device 200 discharges the dust. The self-diagnosis on the state of the wireless vacuum cleaner 100 and the self-diagnosis on the state of the station device 200 may be performed by the wireless vacuum cleaner 100, by the station device 200, or by both the wireless vacuum cleaner 100 and the station device 200 in a shared manner. The case of 20 of FIG. 1 may be referred to as a case where the wireless vacuum cleaner 100 is docked on the station device 200, and after a dust discharge operation is performed, the self-diagnosis on the state of the wireless vacuum cleaner 100 is performed.

In the case of 20 of FIG. 1, the self-diagnosis result information may be output through the wireless vacuum cleaner 100 as described with reference to 10 of FIG. 1. In the case of 20 of FIG. 1, the self-diagnosis result information may be simultaneously or selectively output through the wireless vacuum cleaner 100 and the station device 200. For example, the self-diagnosis result information may be displayed through the display 1710 included in the wireless vacuum cleaner 100. For example, the self-diagnosis result information may be displayed through a display (not shown) included in the station device 200. For example, the self-diagnosis result information may be output as notification sound through a speaker (not shown) included in the wireless vacuum cleaner 100. The self-diagnosis result information may be output as notification sound through a speaker (not shown) included in the station device 200.

The case of 20 of FIG. 1 may be referred to as a self-diagnosis mode with respect to the state of the cleaning system 1 while the wireless vacuum cleaner 10 is being docked on the station device 200 or a state check mode of the cleaning system 1 while the wireless vacuum cleaner 100 is being docked on the station device 200.

The self-diagnosis performed in 10 and 20 of FIG. 1 may be performed based on a pre-trained learning model (or AI model). The pre-trained learning model may be stored in the wireless vacuum cleaner 100 and used or may be stored in the station device 200 and used. The pre-trained learning model may be downloaded from a server device 300 or a user terminal 400 in FIG. 23 described below. The self-diagnosis on the state of the wireless vacuum cleaner 100 may be performed by applying at least one of the flow path pressure value of the wireless vacuum cleaner 100 and the load value (e.g., the operation current value) of the brush device 200 to the pre-trained learning model. The self-diagnosis on the state of the station device 200 may be performed by applying the pressure value of the station device 200 to the pre-trained learning model. The pre-trained learning model (AI model) may identify the lift state of the wireless vacuum cleaner 100 based on type information of the brush device 2000, the load value (e.g., the operation current value) of the brush device 2000, the flow path pressure value, and the power consumption (power consumption of a suction motor 1110) of the wireless vacuum cleaner 100.

The wireless vacuum cleaner 100 illustrated in 20 of FIG. 1 may have a structure including the cleaning body 1000, the brush device 2000, and the extension pipe 3000 connected between the cleaning body 1000 and the brush device 2000.

The station device 200 may be a device configured to discharge the dust of the wireless vacuum cleaner 100, charge the battery of the wireless vacuum cleaner 100, or keep (dock) the wireless vacuum cleaner 100. The station device 200 may be expressed as a cleaning station. For example, the station device 200 may transmit and receive data to and from the wireless vacuum cleaner 100 through a short-range wireless network (a wireless personal area network (WPAN)) not via an access point (AP). For example, the station device 200 may transmit and receive data to and from the wireless vacuum cleaner 100 through Bluetooth low energy (BLE) communication. For example, when a communication channel is established between the station device 200 and the wireless vacuum cleaner 100 based on the BLE communication, the station device 200 and the wireless vacuum cleaner 100 may transmit and receive data related to the self-diagnosis according to an embodiment of the present disclosure to and from each other. For example, the data related to the self-diagnosis may include at least one of the flow path pressure value of the wireless vacuum cleaner 100, the load value (e.g., the operation current value) of the brush device 200, the pressure value of the station device 200 before the dust discharge operation (or an atmospheric pressure value of the station device 200), the pressure value of the station device 200 after the dust discharge operation (or a pressure value of a suction motor 207 of the station device 200), and a docking completion signal of the wireless vacuum cleaner 100, but the data related to the self-diagnosis is not limited thereto. For example, the data related to the self-diagnosis may include state check data, a self-diagnosis-based check guide, self-diagnosis result information, or the like.

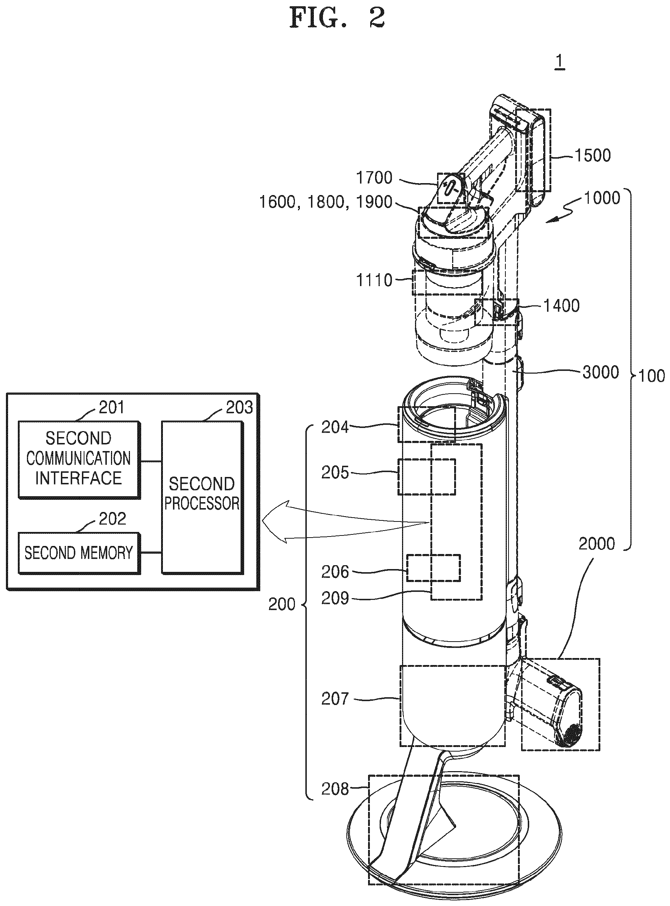

FIG. 2 is a diagram for describing the wireless vacuum cleaner 100 and the station device 200 according to an embodiment of the present disclosure.

The wireless vacuum cleaner 100 according to an embodiment of the present disclosure may be a stick-type cleaner including the cleaning body 1000, the brush device 2000, and the extension pipe 3000. However, not all of the components illustrated in FIG. 2 are essential components. The wireless vacuum cleaner 100 may be realized by including more or less components than the components illustrated in FIG. 2. For example, the wireless vacuum cleaner 100 may be realized by including the cleaning body 1000 and the brush device 2000 excluding the extension pipe 3000.

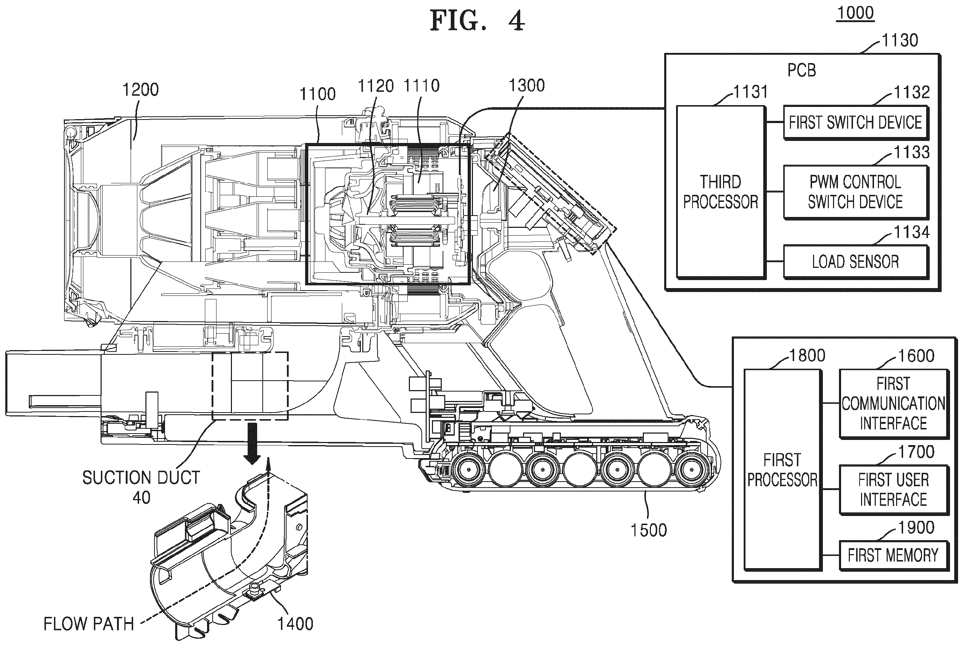

The cleaning body 1000 may be a portion held and moved by the user 5 during cleaning and may include the first suction motor 1110 forming a vacuum in the wireless vacuum cleaner 100. The first suction motor 1110 may be located in a first dust collection part 1200 configured to collect impurities sucked in from a cleaning object surface (e.g., a floor, bedclothes, a sofa, etc.). In addition to the first suction motor 1110, the cleaning body 1000 may further include a first processor 1800, a battery 1500, a first memory 1900 storing software related to the control of the wireless vacuum cleaner 100, etc., to be described below with reference to FIG. 4, but is not limited thereto. The cleaning body 1000 will be described in detail with reference to FIG. 4.

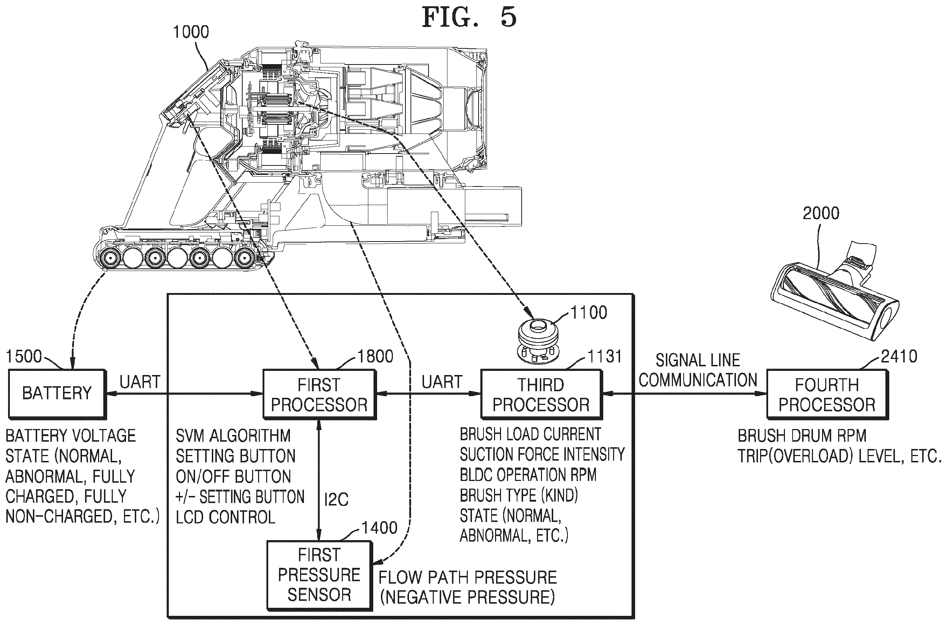

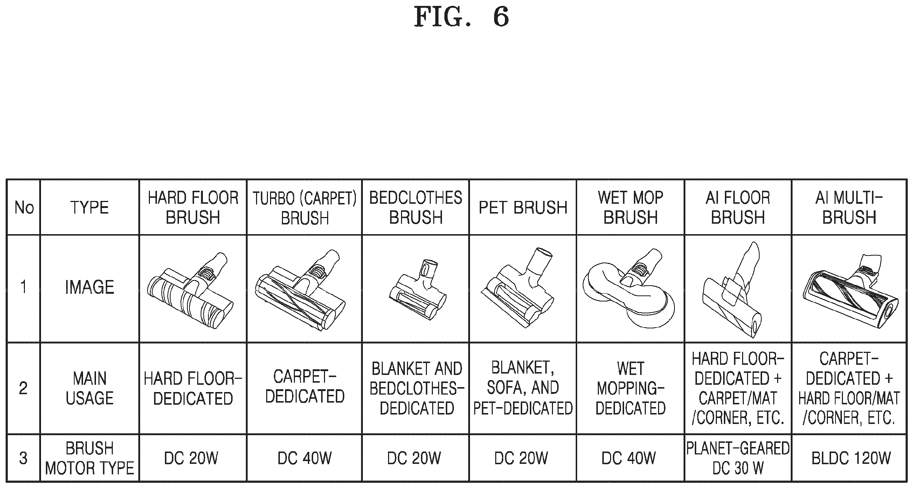

The brush device 2000 is a device that can adhere to a cleaning object surface and suck in air and impurities of the cleaning object surface. The brush device 2000 may be referred to as a cleaning head. The brush device 2000 may be coupled to the extension pipe 3000 to be rotatable. The brush device 2000 may include a motor, a drum to which a rotating brush is attached, etc. but is not limited thereto. According to an embodiment of the present disclosure, the brush device 2000 may include at least one processor (a fourth processor 2410 of FIG. 5) configured to control communication with the cleaning body 1000. Types of the brush device 2000 may be various, which will be described in detail with reference to FIG. 6.

The extension pipe 3000 may be formed as a pipe having a certain rigidity or a flexible hose. The extension pipe 3000 may transmit a suction force generated through the first suction motor 1110 of the cleaning body 1000 to the brush device 2000 and may transport the air and the impurities sucked in through the brush device 2000 to the cleaning body 1000. The extension pipe 3000 may be detachably connected with the brush device 2000. The extension pipe 3000 may be formed as multi-steps between the cleaning body 1000 and the brush device 2000. The extension pipe 3000 may be formed as two or more extension pipes.

According to an embodiment of the present disclosure, each of the cleaning body 1000, the brush device 2000, and the extension pipe 3000 included in the wireless vacuum cleaner 100 may include power lines (for example, a + power line and a - power line) and signal lines.

The power line may be a line configured to transmit a power supply from the battery 1500 to the cleaning body 1000 and the brush device 2000 connected to the cleaning body 1000. The signal line may be different from the power line and may be a line configured for the transmission and reception of a signal between the cleaning body 1000 and the brush device 2000. The signal line may be realized in the brush device 2000 to be connected to the power line.

According to an embodiment of the present disclosure, each of the first processor 1800 of the cleaning body 1000 and the fourth processor 2410 of the brush device 2000 may control an operation of a switch device connected to the signal line, thereby performing bidirectional communication between the cleaning body 1000 and the brush device 2000. When the cleaning body 1000 and the brush device 2000 communicate with each other through the signal line, the communication between the cleaning body 1000 and the brush device 2000 may be defined as "signal line communication." Also, the cleaning body 1000 and the brush device 2000 may perform communication by using an inter integrated circuit (I2C) or a universal asynchronous receiver/transmitter (UART).

According to an embodiment of the present disclosure, the cleaning body 1000 may sense whether the brush device 2000 is attached or detached. According to an embodiment of the present disclosure, the cleaning body 1000 may identify a type of the brush device 2000. According to an embodiment of the present disclosure, the cleaning body 1000 may adaptively control operations (e.g., drum RPM) of the brush device 2000 according to a use environment state (e.g., a hard floor, a carpet, a mat, a corner, a lift state thereof at a cleaning object surface, etc.) of the brush device 2000. It may be said that the operations (e.g., sensing detachment or attachment of the brush device 2000, identifying a type of the brush device 2000, and controlling operations of the brush device 2000) of the cleaning body 1000 described above are performed by the first processor 1800.

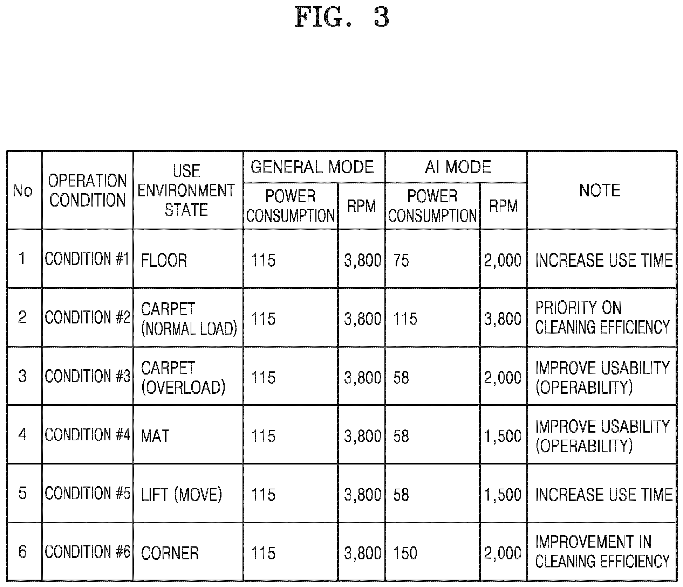

FIG. 3 is an example of controlling the power consumption of the wireless vacuum cleaner 100 and the drum RPM of the brush device 2000 in a general mode and an AI mode, when the brush device 2000 is a multi-brush.

A general mode may be a manual mode in which the intensity of a suction force of the first suction motor 1110 is adjusted according to an intensity (e.g., strong, intermediate, weak, etc.) selected by the user 5. An AI mode may be an automatic mode in which the intensity of a suction force of the first suction motor 1110 or the rotation speed (drum RPM) of the brush device 2000 is automatically adjusted according to a use environment state (e.g., the state of a cleaning object surface (a floor, a carpet, a mat, a corner, etc.)) of the brush device 2000. The suction force is the input power consumed to operate the wireless vacuum cleaner 100, and the intensity of the suction force of the first suction motor 1110 may be expressed as the power consumption of the first suction motor 1110.

According to a control program (or process) corresponding to the general mode, when the user 5 selects a strong mode, the wireless vacuum cleaner 100 may adjust the power consumption of the first suction motor 1110 as 115 W and the drum RPM of the brush device 2000 as 3800 rpm.

According to a control program (or process) corresponding to the AI mode, the wireless vacuum cleaner 100 may automatically adjust the intensity of the suction force of the first suction motor 1110 according to a current use environment state of the brush device 2000 that is inferred by an AI model. For example, when the state of the cleaning object surface is changed from a hard floor to a carpet, the wireless vacuum cleaner 100 may increase the intensity of the suction force of the first suction motor 1110 to increase the cleaning performance. In contrast, when the state of the cleaning object surface is changed from the carpet to the hard floor again, the wireless vacuum cleaner 100 may increase the use time of the battery 1500, may reduce an operation noise (e.g., a drum friction noise of the brush device 2000, an operation noise of the first suction motor 1110, etc.), and to reduce the damage (e.g., scuffing, scratching, scraping, abrasion, etc.) to the brush device 2000 due to the friction of the cleaning object surface due to the rotation of the drum 2200, may reduce the intensity of the suction force of the first suction motor 1110 again. When the state of the cleaning object surface is changed from a hard floor to a mat, the wireless vacuum cleaner 100 may automatically reduce the intensity of the suction force of the first suction motor 1110 in order to increase the manipulation convenience, decrease an operation noise, and reduce the damage to the brush device 2000 due to the friction of the cleaning object surface due to the drum RPM. When the brush device 2000 is in a lift state (an idle state) with respect to the cleaning object surface, the wireless vacuum cleaner 100 may reduce the intensity of the suction force of the first suction motor 1110 as much as possible, in order to increase the use time of the battery 1500 and reduce the operation noise.

According to the control program (process) corresponding to the AI mode, the wireless vacuum cleaner 100 may control the operation of the brush device 2000 through the communication between the cleaning body 1000 and the brush device 2000. The wireless vacuum cleaner 100 may adjust the motor rotation speed (e.g., the drum RPM) of the brush device 2000, the trip level, the setting value (e.g., the color, the brightness, etc.) of the illumination device, etc. according to a current use environment state of the brush device 2000. For example, when the state of the cleaning object surface is changed from a hard floor to a carpet, the wireless vacuum cleaner 100 may increase the motor rotation speed (e.g., the drum RPM) of the brush device 2000 in order to increase the cleaning performance. However, when the state of the cleaning object surface is changed from the carpet to the hard floor again, the wireless vacuum cleaner 100 may reduce the motor rotation speed (e.g., the drum RPM) of the brush device 2000 again, in order to increase the use time of the battery 1500, reduce the operation noise, and reduce the damage (e.g., scuffing, scratching, scraping, abrasion, etc.) due to the friction of the cleaning object surface. Also, when the brush device 2000 is in a lift state (e.g., an idle state) with respect to the cleaning object surface, the wireless vacuum cleaner 100 may reduce the motor rotation speed (e.g., the drum RPM) of the brush device 2000 as much as possible in order to increase the use time of the battery 1500 and decrease the operation noise.

For example, referring to FIG. 3, the wireless vacuum cleaner 100 may operate as below according to the control program (process) corresponding to the AI mode. When the use environment state of the brush device 2000 is determined to be a hard floor (a first condition), the wireless vacuum cleaner 100 may determine the power consumption of the first suction motor 1110 to be 75 W and the drum RPM of the brush device 2000 to be 2000 rpm. When the use environment state of the brush device 2000 is determined to be a general carpet (a second condition), the wireless vacuum cleaner 100 may determine the power consumption of the first suction motor 1110 to be 115 W and the drum RPM of the brush device 2000 to be 3800 rpm. When the use environment state of the brush device 2000 is determined to be a high-density carpet (a third condition), the wireless vacuum cleaner 100 may determine the power consumption of the first suction motor 1110 to be 58 W and the drum RPM of the brush device 2000 to be 2000 rpm. When the use environment state of the brush device 2000 is determined to be a mat (a fourth condition), the wireless vacuum cleaner 100 may determine the power consumption of the first suction motor 1110 to be 58 W and the drum RPM of the brush device 2000 to be 1500 rpm. When the use environment state of the brush device 2000 is determined to be a lift state (or a moving state, a fifth condition), the wireless vacuum cleaner 100 may determine the power consumption of the first suction motor 1110 to be 58 W and the drum RPM of the brush device 2000 to be 1500 rpm. When the use environment state of the brush device 2000 is determined to be a corner (a sixth condition), the wireless vacuum cleaner 100 may determine the power consumption of the first suction motor 1110 to be 150 W and the drum RPM of the brush device 2000 to be 2000 rpm.

Thus, according to the control program (process) corresponding to the AI mode, the wireless vacuum cleaner 100 may automatically adjust the intensity of the suction force of the first suction motor 1110 or the motor rotation speed of the brush device 2000 according to the current use environment state of the brush device 2000 that is inferred by the AI model, and thus, the cleaning performance and the manipulation convenience for the user 5 may be efficiently improved, and the usage time of the battery 1500, the operation noise (e.g., a drum friction noise of the brush device 2000, an operation noise of the first suction motor 1110 of the cleaning body 1000, etc.), and the damage (e.g., scuffing, scratching, scraping, abrasion, etc.) due to the friction of the cleaning object surface due to the drum rotation of the brush device 2000 may be efficiently improved.

According to an embodiment of the present disclosure, when the power consumption of the first suction motor 1110 or the drum RPM corresponding to the intensity of the suction force (e.g., jet, ultra-intense, intense, regular, etc.) is changed, when an operation condition is added in the AI mode, or when a control factor (e.g., the color of an illumination device) of the brush device 2000 is added, the AI model related to the controlling of the wireless vacuum cleaner 100 may be updated.

According to an embodiment of the present disclosure, the cleaning body 1000 may periodically communicate with the brush device 2000 to transmit a signal configured to control the operation of the brush device 2000 to the brush device 2000.

Referring to FIG. 2, the station device 200 according to an embodiment of the present disclosure may include a second communication interface 201, a second memory 202, and a second processor 203. Also, the station device 200 may further include a second user interface 204, a wired connector 205, a second pressure sensor 206, a second suction motor 207, a power supply device 208, a second dust collection part 209, a dust collection part combiner (not shown), and a filter portion (not shown). Hereinafter, each of the components is to be described.

The station device 200 may include the second communication interface 201 for performing communication with an external device. For example, the station device 200 may perform communication with the cleaning body 1000 of the wireless vacuum cleaner 100 through the second communication interface 201. Here, the communication interface 201 may communicate with the wireless vacuum cleaner 100 through a BLE communication method. The station device 200 may transmit and receive data related to self-diagnosis or self-diagnosis result information to and from the wireless vacuum cleaner 100 through the second communication interface 201.

The second communication interface 201 may perform communication with the server device 300 or the user terminal 400 to be described below. The second communication interface 201 may communicate with the server device 300 or the user terminal 400 through a different communication method from the wireless vacuum cleaner 100. For example, the second communication interface 201 may communicate with the server device 300 or the user terminal 400 through a WiFi communication method. The station device 200 may transmit the self-diagnosis result information with respect to the state of the cleaning system 1 to the server device 300 or the user terminal 400 through the second communication interface 201.

Thus, the server device 300 or the user terminal 400 may provide feedback information with respect to the self-diagnosis result information to the station device 200. For example, the feedback information may include information related to a service application for a manufacturing company (e.g., service booking schedule information, service costs information, etc.) or check guide information with respect to to the self-diagnosis result information. The check guide information with respect to the self-diagnosis result may include, but is not limited to, notification information corresponding to a state check, guide information corresponding to a state check, or control information (e.g., a control command for restraining the suction force of the first suction motor 1110 of the wireless vacuum cleaner 100) for restraining the operation of the cleaning system 1 until a state check with respect to the self-diagnosis result information is completed.

The second communication interface 201 may include a short-range wireless communication interface, a remote communicator, etc. The short-range wireless communication interface may include a Bluetooth communicator, a BLE communicator, a near-field communication (NFC) interface, a wireless local area network (WLAN) (or WiFi) communicator, a Zigbee communicator, an infrared data association (IrDA) communicator, a WiFi direct (WFD) communicator, a ultra wideband (UWB) communicator, an Ant+ communicator, etc., but is not limited thereto. The remote communicator may be used for the station device 200 to remotely communicate with the server device 300 or the user terminal 400 to be described below. The remote communicator may include the Internet, a computer network (for example, a local area network (LAN) or a wide area network (WAN)), and a mobile communicator. The mobile communicator may include a 3rd generation (3G) module, a 4th generation (4G) module, a 5th generation (5G) module, a long term evolution (LTE) module, an NB-IoT module, an LTE-M module, etc., but is not limited thereto.

The communication interface 201 may transmit data to the second processor 203 through a UART but is not limited thereto.

The second memory 202 of the station device 200 may store programs (e.g., one or more instructions or commands) for processing and controlling by the second processor 203 or may store input/output data. For example, the second memory 202 of the station device 200 may include, but is not limited to, software related to controlling of the station device 200, state data of the second suction motor 207, a measurement value of the second pressure sensor 206, condition data (or a predetermined condition value) for a self-diagnosis, etc. The software related to the controlling of the station device 200 may include self-diagnosis software of the cleaning system 1.

The second memory 202 of the station device 200 may store data received from the cleaning body 1000. For example, the station device 200 may store product information (e.g., identification information, model information, standards information, etc.) of the wireless vacuum cleaner 100 docked on the station device 200, information about a version of software installed on the wireless vacuum cleaner 100, self-diagnosis result information (or breakdown history data or error occurrence data) of the wireless vacuum cleaner 100, etc.

The second memory 202 may include a storage medium of at least one of a flash memory-type, a hard disk-type, a multimedia card micro-type, a card-type memory (for example, SD or XD memory), random-access memory (RAM), static RAM (SRAM), read-only memory (ROM), electrically erasable programmable ROM (EEPROM), programmable ROM (PROM), a magnetic memory, a magnetic disk, an optical disk, or a universal serial bus (USB) memory. The programs stored in the second memory 202 may be classified into a plurality of modules according to their functions.

The station device 200 may include the second processor 203. The second processor 203 may include one processor or a plurality of processors, and thus, may be referred to as including at least one processor. The second processors 203 according to the present disclosure may include at least one of a central processing unit (CPU), a graphics processing unit (GPU), an accelerated processing unit (APU), many integrated cores (MIC), a digital signal processor (DSP), and a neural processing unit (NPU). The second processor 203 may be realized as an integrated system on a chip (SoC) including one or more electronic components. Each second processor 203 may be realized as separate hardware (H/W). The second processor 203 may also be referred to as a microprocessor controller (MICOM), a micro-processor unit (MPU), or a micro controller unit (MCU).

The second processor 203 according to the present disclosure may be realized as a single-core processor or a multi-core processor.

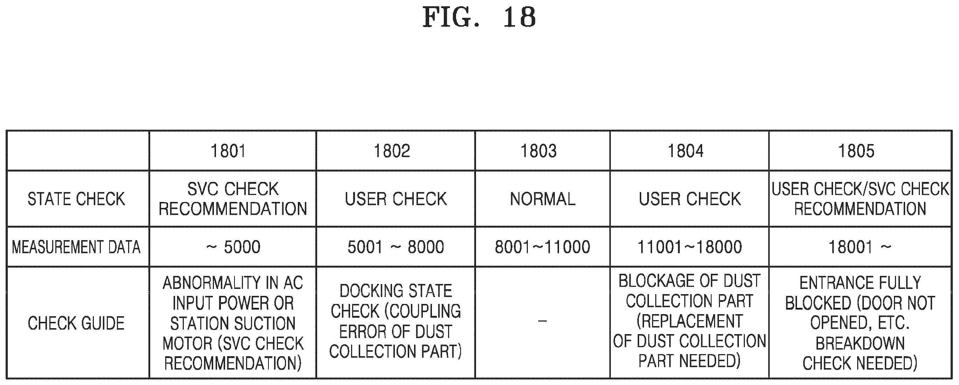

The second processor 203 may control the overall operations of the station device 200. For example, when it is identified that the wireless vacuum cleaner 100 is docked on the station device 200, the second processor 203 may diagnose the state of the station device 200 by using a pressure value measured by the second pressure sensor 206 included in the station device 200. For example, before a dust discharge operation is performed, the second processor 203 may obtain a first pressure value (or an atmospheric pressure value) PA1 measured by the second pressure sensor 206. After the dust discharge operation of the station device 200 is performed, the second processor 203 may obtain a second pressure value (or a pressure value of the suction motor 207) PA2 measured by the second pressure sensor 206. The second processor 203 may diagnose the state of the station device 200 based on a difference value PA1-PA2=PA between the first pressure value PA1 and the second pressure value PA2. For example, the second processor 203 may diagnose the state of the station device 200 by comparing diagnosis condition data (or a pre-set condition value) pre-stored in the second memory 202 with the difference value PA between the first pressure value PA1 and the second pressure value PA2. The diagnosis condition data according to an embodiment of the present disclosure may be the data to identify the state of the station device 200 and may include measurement data illustrated in FIG. 18 to be described below but is not limited thereto. For example, the diagnosis condition data may include information of 5000 or less, 5001 to 8000, 8001 to 11000, 11001 to 18000, and 18001 and greater but is not limited thereto.

The second processor 203 may output the self-diagnosis result information through the second user interface 204. For example, the second processor 203 may display the self-diagnosis result information through a display (not shown) included in the second user interface 204. For example, the second processor 203 may display the self-diagnosis result information through a speaker (not shown) included in the second user interface 204. For example, the second processor 203 may display the self-diagnosis result information through a light-emitting diode (LED) display (not shown) included in the second user interface 204. The second processor 203 may transmit the self-diagnosis result information to the wireless vacuum cleaner 100 through the second communication interface 201. The second processor 203 may transmit the self-diagnosis result information to the server device 300 or the user terminal 400 through the second communication interface 201.

The second processor 203 may control the second communication interface 201 to receive software of a new version related to controlling of the wireless vacuum cleaner 100 from the server device 300 to be described below and may store the received software of the new version in the second memory 202. The second processor 203 may identify whether or not a pre-set condition to download the new version of software on the wireless vacuum cleaner 100 is satisfied, and when the pre-set condition is satisfied, may control the second communication interface 201 to transmit the new version of software stored in the second memory 202 to the wireless vacuum cleaner 100. The new version of software may include a self-diagnosis function or self-diagnosis software with respect to the state of the cleaning system 1.

The pre-set condition may include at least one of a communication connection condition of the wireless vacuum cleaner 100 or a docking state condition of the wireless vacuum cleaner 100 but is not limited thereto. The pre-set condition may include a pre-set download time condition, a battery residue condition of the cleaning body 1000, etc. For example, when the pre-set condition is a condition where a BLE communication channel is established with the wireless vacuum cleaner 100, the second processor 203 may transmit the new version of software to the memory 1900 of the wireless vacuum cleaner 100 when a BLE communication connection with the wireless vacuum cleaner 100 is available. When the pre-set condition is related to establishing a BLE communication channel with the wireless vacuum cleaner 100 and docking the wireless vacuum cleaner 100 on the station device 200, the second processor 203 may transmit the new version of software to the first memory 1900 of the wireless vacuum cleaner 100 when the BLE communication with the wireless vacuum cleaner 100 is available while the wireless vacuum cleaner 100 is being docked on the station device 200. The new version of software transmitted to the first memory 1900 of the wireless vacuum cleaner 100 may include the software of a new version for the self-diagnosis with respect to the state of the wireless vacuum cleaner 100, the station device 200, or the cleaning system 1.

The second user interface 204 of the station device 200 may include an input interface and an output interface. The input interface may include a self-diagnosis button, a discharge button, a mode selection button, etc. The output interface may include an LED, a liquid crystal display (LCD), a touch screen, etc. but is not limited thereto. A display (not shown) included in the output interface may display the self-diagnosis result information, the charge amount of the battery 1500 of the cleaning body 1000, software update progression information, etc. but is not limited thereto.

The station device 200 may include the wired connector 205. The wired connector 205 may include a terminal for connecting a computing device of a system manager (e.g., a service engineer). The system manager may connect a computing device storing a new version of software to the wired connector 205 and may transmit the new version of software to the second memory 202 of the station device 200. Here, when the new version of software is a kind of software related to the controlling of the station device 200, the software pre-installed on the station device 200 may be updated.

However, when the new version of software is a kind of software related to the controlling of the wireless vacuum cleaner 100, the station device 200 may transmit the new version of software to the wireless vacuum cleaner 100 according to whether or not a pre-set condition is satisfied. For example, when the wireless vacuum cleaner 100 is docked on the station device 200 and BLE communication with the wireless vacuum cleaner 100 is available, the station device 200 may transmit the new version of software (or a new version of self-diagnosis software) to the wireless vacuum cleaner 100. Here, the wireless vacuum cleaner 100 may update the pre-installed software (or the pre-installed self-diagnosis software). For example, when the wireless vacuum cleaner 100 is docked on the station device 200 and the BLE communication with the wireless vacuum cleaner 100 is available, the station device 200 may transmit the self-diagnosis result information with respect to the state of the station device 200 or the pressure values PA1 and PA2 obtained for the self-diagnosis to the wireless vacuum cleaner 100. Here, the wireless vacuum cleaner 100 may output the self-diagnosis result information with respect to the state of the station device 200 or perform the self-diagnosis with respect to the state of the station device 200.

The second pressure sensor 206 of the station device 200 may be a sensor configured to measure the pressure in the station device 200. The second pressure sensor 206 may measure the pressure value PA1 before the discharging of the dust as the atmospheric pressure value and measure the pressure value PA2 after the discharging of the dust as the pressure value of the second suction motor 207. The second pressure sensor 206 may transmit the measured pressure values to the second processor 203 through I2C communication.

The second suction motor 207 may be a device configured to generate a suction force for discharging impurities collected in the first dust collection part 1200 (or a dust bin) of the cleaning body 1000 from the cleaning body 1000. The second suction motor 207 may rotate a suction fan that moves air. The suction fan may include an impeller.

The power supply device 208 may include a switching mode power supply (SMPS) that receives an alternating current power source from a power source and switches the alternating current power source to a direct current power source. When the wireless vacuum cleaner 100 is docked on the station device 200, the direct current power source converted by the power supply device 208 may be supplied to the battery 1500 of the cleaning body 1000 through a charge terminal to charge the battery 1500.

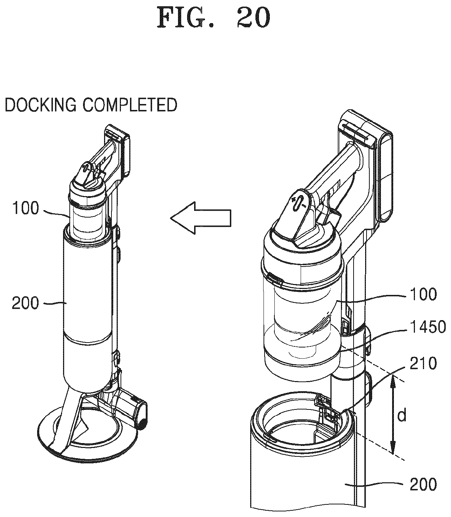

The dust collection combiner may be provided to connect the first dust collection part 1200 of the cleaning body 1000 with the second dust collection part 209 of the station device 200. When the first dust collection part 1200 of the cleaning body 1000 is docked on the dust collection combiner of the station device 200, the docking of the cleaning body 1000 and the station device 200 may be completed. The dust connection combiner may include a docking sensor 210 to sense the docking of the cleaning body 1000. The docking sensor 210 may be mounted as illustrated in FIG. 20 to be described below.

The docking sensor 210 may include a tunnel magneto-resistance (TMR) sensor but is not limited thereto. The TMR sensor may sense a magnetic material mounted on the first dust collection part 1200 of the cleaning body 1000 and may sense whether or not the cleaning body 1000 is docked. The sensing of whether or not the cleaning body 1000 is docked denotes an operation of identifying whether or not the wireless vacuum cleaner 100 is docked on the station device 200. The station device 200 may include a step motor to pressurize a side of a door of the first dust collection part 1200 to open the door of the first dust collection part 1200, when the first dust collection part 1200 of the cleaning body 1000 is docked on the station device 200.

The second dust collection part 209 of the station device 200 may be a space in which the impurities discharged from the first dust collection part 1200 of the cleaning body 1000 may be collected. The second dust collection part 209 may include a dust bag in which the impurities discharged from the first dust collection part 1200 are collected. The second dust collection part 209 may be formed of a material transmitting air and not transmitting impurities and may be configured to collect the impurities introduced into the second dust collection part 209 from the first dust collection part 1200. The second dust collection part 209 may be provided to be detachable from the station device 200. The station device 200 may include an ultraviolet irradiator configured to irradiate ultraviolet rays to the second dust collection part 209. The ultraviolet irradiator may include a plurality of ultraviolet lamps. The ultraviolet irradiator may suppress amplification of germs in the second dust collection part 209 including the dust bag. For example, the ultraviolet irradiator may suppress the amplification of germs in the dust accumulated in the second dust collection part 209 including the dust bag.

The filter portion included in the station device 200 may filter out ultrafine dust, etc. not collected in the second dust collection part 209. The filter portion may include an outlet to discharge the air transmitted through the filter to the outside of the station device 200. The filter portion may include a motor filter, a HEPA filter, etc. but is not limited thereto.

FIG. 4 is a diagram for describing the cleaning body 1000 according to an embodiment of the present disclosure.

Referring to FIG. 4, the cleaning body 1000 may include a suction force generator (hereinafter, referred to as a motor assembly 1100) generating a suction force necessary to suck in impurities on a cleaning object surface, the first dust collection part 1200 (or referred to as a dust bin) collecting the impurities sucked in from the cleaning object surface, a filter portion 1300, a first pressure sensor 1400, the battery 1500 configured to supply power to the motor assembly 1100, a first communication interface 1600, the first user interface 1700, the first processor 1800, and the first memory 1900. However, not all of the components illustrated in FIG. 4 are essential components of the cleaning body 1000. The cleaning body 1000 may be realized by including a greater or less number of components than the components illustrated in FIG. 4.

Hereinafter, each of the components is described.

The motor assembly 1100 may include the first suction motor 1110 configured to switch an electrical force to a mechanical rotational force, a fan 1120 connected to the first suction motor 1110 and rotating, and a driving circuit (a printed circuit board (PCB)) 1130 connected to the first suction motor 1110. The first suction motor 1110 may form a vacuum in the wireless vacuum cleaner 100. The fan 1120 may include an impeller. Here, the vacuum denotes a state having an air pressure lower than the atmospheric pressure. The first suction motor 1110 may include a brushless motor (hereinafter, referred to as a brushless direct current (BLDC) motor) but is not limited thereto.

The driving circuit 1130 may include a third processor 1131 configured to control the first suction motor 1110 and control communication with the brush device 2000, a first switch device 1132 connected to a signal line, a switch device (hereinafter, referred to as a pulse wide modulation (PWM) control switch device 1133) (e.g., a field-effect transistor (FET), a transistor, an insulated gate bipolar transistor (IGBT), etc.) configured to control a power supply to the brush device 2000, and a load sensor 1134 (e.g., a shunt resistor, a shunt resistor and an operational amplifier (OP-AMP) circuit, a current sensor, a magnetic-field detection sensor (a non-contact method), etc.) configured to sense the load (or a load value (e.g., an operation current value) of the brush device 2000, but is not limited thereto. Hereinafter, for convenience of explanation, the FET will be described as an example of the PWM control switch device 1133, and the shunt resistor will be described as an example of the load sensor 1134.

The third processor 1131 may obtain data (hereinafter, referred to as state data) related to the state of the first suction motor 1110 and may transmit the state data of the first suction motor 1110 to the first processor 1800. Also, the third processor 1131 may control (e.g., turn on or turn off) an operation of the first switch device 1132 connected to the signal line and may transmit a signal (hereinafter, referred to as a first signal) to the brush device 2000 through the signal line.

The first switch device 1132 may be a device configured to make the state of the signal line as low. For example, the first switch device 1132 may be a device configured to make the voltage of the signal line as 0V. The first signal may include data indicating at least one of target RPM (hereinafter, also referred to as target drum RPM) of a rotating brush of the brush device 2000, a target trip level of the brush device 2000, or power consumption of the first suction motor 1110 but is not limited thereto. The first signal may be realized as a pre-set number of bits. For example, the first signal may be realized as 5 bits or 8 bits and may have a transmission cycle of 10 ms per bit, but the first signal is not limited thereto.

The third processor 1131 may sense a signal (hereinafter, referred to as a second signal) transmitted from the brush device 2000 through the signal line. The second signal may include data indicating a current state of the brush device 2000 but is not limited thereto. For example, the second signal may include data related to a current operating condition (e.g., current drum RPM, a current trip level, a current illumination device setting value, etc.). Also, the second signal may further include data indicating a type of the brush device 2000. The third processor 1311 may transmit the data indicating the current state of the brush device 2000 or the data indicating the type of the brush device 2000 included in the second signal to the first processor 1800.

Accordingly, when the first processor 1800 performs a self-diagnosis with respect to the state of wireless vacuum cleaner 100, the station device 200, or the cleaning system 1, the first processor 1800 may identify whether the brush device 2000 is a type, for which self-diagnosis is available. When the brush device 2000 is a type, for which the self-diagnosis is available, the first processor 1800 may perform the self-diagnosis according to an embodiment of the present disclosure. When the brush device 2000 is not a type, for which the self-diagnosis is available, the first processor 1800 may not perform the self-diagnosis according to an embodiment of the present disclosure. For example, types of the brush device 2000, for which the self-diagnosis according to an embodiment of the present disclosure is available, may include a turbo brush (or a felt brush or a carpet brush), a multi-brush, a floor brush, an AI floor brush, and an AI multi-brush, but are not limited thereto. For example, types of the brush device 2000, for which the self-diagnosis according to an embodiment of the present disclosure is not available, may include a wet mop brush, but are not limited thereto.

The motor assembly 1100 may be located in the first dust collection part 1200. The first dust collection part 1200 may be configured to filter out and gather the dust or dirt of the air introduced through the brush device 2000. The first dust collection part 1200 may be provided to be detachable from the cleaning body 1000.

The first dust collection part 1200 may collect the impurities through a cyclone method that separates impurities using a centrifugal force. The air from which the impurities are removed through the cyclone method may be discharged to the outside of the cleaning body 1000 and the impurities may be stored in the first dust collection part 1200. Multi-cyclones may be arranged in the first dust collection part 1200. The first dust collection part 1200 may be provided to collect the impurities below the multi-cyclones. The first dust collection part 1200 may include a door provided to open the first dust collection part 1200 when the first dust collection part 1200 is connected to the cleaning station. The first dust collection part 1200 may include a dust collector configured to primarily collect impurities and collect impurities having a relatively large size and a dust collector configured to collect impurities through the multi-cyclones and collect impurities having a relatively little size. Both of the dust collectors may be provided to be opened when the door of the first dust collection part 1200 is opened.

The filter portion 1300 may filter out ultrafine dust, etc. not filtered by the first dust collection part 1200. The filter portion 1300 may include an outlet to discharge the air transmitted through the filter to the outside of the wireless vacuum cleaner 100. The filter portion 1300 may include a motor filter, a HEPA filter, etc. but is not limited thereto.

The first pressure sensor 1400 may measure the pressure (hereinafter, also referred to as flow path pressure) in a flow path. The first pressure sensor 1400 provided at a suction end (e.g., a suction duct 40) may measure the static pressure and measure a velocity change of a corresponding location. The first pressure sensor 1400 may be an absolute pressure sensor or a relative pressure sensor. When the first pressure sensor 1400 is an absolute pressure sensor, the first processor 1800 may obtain the first pressure value PB1 (the atmospheric pressure value) before the first suction motor 1110 is operated, by using the first pressure sensor 1400.

The first processor 1800 may obtain the second pressure value PB2 after the first suction motor 1110 is operated by the target RPM (e.g., the minimum power consumption (40 W) or the maximum power consumption (115 W)). The first processor 1800 may obtain the difference value PB1-PB2=PB between the first pressure value PB1 and the second pressure value PB2 as a pressure value in the flow path (or a flow path pressure value). Here, the first pressure value PB1 may be the atmospheric pressure value, which is the pressure value based on internal/external effects, such as the weather, the altitude, the state of the wireless vacuum cleaner 100, the amount of dust introduction, etc. The second pressure value PB2 may be the pressure value based on internal/external effects, such as the altitude, the state of the wireless vacuum cleaner 100, the amount of dust introduction, etc., and the pressure value based on the operation of the first suction motor 1110. The difference value PB between the first pressure value PB1 and the second pressure value PB2 may be the pressure value (or the flow path pressure value of the wireless vacuum cleaner 100) based on the operation of the first suction motor 1110. When the difference value PB between the first pressure value PB1 and the second pressure value PB2 is used as the pressure value (or the flow path pressure value) in the flow path of the wireless vacuum cleaner 100, the internal/external effects excluding the first suction motor 1110 may be minimized.

The flow path pressure value obtained by using the first pressure sensor 1400 may be used to identify a current use environment state (e.g., the state of a cleaning object surface (a floor, a carpet, a mat, a corner, etc.), a lift state on the cleaning object surface, etc.) of the brush device 2000 and may be used for the self-diagnosis (e.g., a contamination state of the dust collection part 1200, a flow path blockage state, etc.) with respect to the state of the wireless vacuum cleaner 100.

The first pressure sensor 1400 may be located at the suction end (e.g., the suction duct 40). The suction duct 40 may be a structure to connect the first dust collection part 1200 with the extension pipe 3000 or connect the first dust collection part 1200 with the brush device 2000 so that a fluid including impurities may move to the first dust collection part 1200. The first pressure sensor 1400 may be located at an end portion of a straight line portion (or an inflection point of the straight line portion and a curved line portion) of the suction duct 40 by considering the contamination of impurities/dust, but is not limited thereto. The first pressure sensor 1400 may be located in the center of the straight line portion of the suction duct 40. When the first pressure sensor 1400 is located at the suction duct 40, the first pressure sensor 1400 may be located at a front end of the first suction motor 1110 generating a suction force, and thus, the first pressure sensor 1400 may be realized as a negative pressure sensor.

In the present disclosure, it is described the first pressure sensor 1400 is located at the suction duct 40, for example. However, the first pressure sensor 1400 is not limited thereto. The first pressure sensor 1400 may be located at an outlet end (e.g., in the motor assembly 1100). When the first pressure sensor 1400 is located at the outlet end, the first pressure sensor 1400 may be located at a rear end of the first suction motor 1110, and thus, may be realized as a positive pressure sensor. Also, the first pressure sensor 1000 may be provided in a plural number in the wireless vacuum cleaner 100.

The battery 1500 may be detachably mounted on the cleaning body 1000. The battery 1500 may be electrically connected to a charge terminal provided in the station device 200. The battery 1500 may be charged by receiving a power supply from the charge terminal.

The cleaning body 1000 may include the first communication interface 1600 configured to perform communication with an external device. For example, the cleaning body 1000 may perform communication with the station device 200 (or the server device 300) through the first communication interface 1600. The first communication interface 1600 may transmit the data related to the self-diagnosis of the wireless vacuum cleaner 100 or the cleaning system 1 to the station device 200. The first communication interface 1600 may receive the data related to the self-diagnosis of the station device 200.

The first communication interface 1600 may include a short-range wireless communication interface, a remote communicator, etc. The short-range wireless communication interface may include a Bluetooth communicator, a BLE communicator, an NFC, a WLAN (or WiFi) communicator, a Zigbee communicator, an IrDA communicator, a WFD communicator, a UWB communicator, an Ant+ communicator, etc., but is not limited thereto.

The first user interface 1700 may be provided at a wheel. The first user interface 1700 may include an input interface and an output interface. Through the first user interface 1700, the cleaning body 1000 may receive a user input related to an operation of the wireless vacuum cleaner 100 or output information related to the operation of the wireless vacuum cleaner 100. The input interface may include a power button, a suction force intensity adjusting button, a self-diagnosis button, etc. The self-diagnosis according to an embodiment of the present disclosure may be performed by controlling the self-diagnosis button. The output interface may include an LED display, an LCD, a touch screen, etc. but is not limited thereto. The output interface may output self-diagnosis result information. The self-diagnosis result information may be output as a notification (or as a voice or sound). The self-diagnosis result information may be output as a message. The self-diagnosis result information may be output as an image. The self-diagnosis result information may be output as a combination of at least two from among the notification, the message, and the image.

The cleaning body 1000 may include the first processor 1800. The first processor 1800 may include a processor or a plurality of processors, and thus, may be referred to as at least one processor. For example, the cleaning body 1000 may set the first processor 1800 connected to the first user interface 1700 as a main processor and the third processor 1131 connected to the first suction motor 1110 and the fourth processor 2410 included in the brush device 2000 as sub-processors controlled or managed by the first processor 1800.

The first processor 1800 may control overall operations of the wireless vacuum cleaner 100. For example, the first processor 1800 may determine the power consumption (the intensity of the suction force) of the first suction motor 1110, the drum RPM of the brush device 2000, the trip level of the brush device 2000, etc.

The first processor 1800 according to the present disclosure may include at least one of a CPU, a GPU, an APU, MIC, a DSP, and an NPU. The first processor 1800 may be realized as an integrated SoC including one or more electronic components. Each first processor 1800 may be realized as separate H/W. The first processor 1800 may also be referred to as an MICOM, an MPU, or an MCU. The first processor 1800 according to the present disclosure may be realized as a single-core processor or a multi-core processor.

The first memory 1900 may store programs for processing and controlling by the first processor 1800 and may store input/output data. For example, the first memory 1900 may store a pre-trained AI model (e.g., a support vector machine (SVM) algorithm, etc.) or training model, state data (e.g., power consumption data) of the first suction motor 1110, a measurement value (a pressure value) of the first pressure sensor 1400, state data (e.g., a charge state) of the battery 1500, state data (e.g., drum RPM) of the brush device 2000, a flow path pressure value of the wireless vacuum cleaner 100 and a load value (e.g., an operation current value) of the brush device 2000 according to type information of the brush device 2000, self-diagnosis condition data (or pre-set diagnosis condition data) used to identify the state of the wireless vacuum cleaner 100, the station device 200, or the cleaning system 1 according to an embodiment of the present disclosure, power consumption of the first suction motor 1110 corresponding to an operation condition, the RPM or the trip level of the drum to which the rotating brush is attached, etc. However, the data stored in the first memory 1900 is not limited thereto. The trip level may be used to prevent the overload of the brush device 2000 and may denote a reference load value (e.g., a reference current value) to stop the operation of the brush device 2000.

The first memory 1900 may include a storage medium of at least one of a flash memory-type, a hard disk-type, a multimedia card micro-type, a card-type memory (for example, SD or XD memory), RAM, SRAM, ROM, EEPROM, PROM, a magnetic memory, a magnetic disk, an optical disk, or a USB memory. The programs stored in the first memory 1900 may be classified into a plurality of modules according to their functions. The first memory 1900 may include an embedded memory and an external memory but is not limited thereto.

Hereinafter, operations of the processors of the wireless vacuum cleaner 100 will be described in detail with reference to FIG. 5.

FIG. 5 is a diagram for describing the operations of the processors of the wireless vacuum cleaner 100 according to an embodiment of the present disclosure.

Referring to FIG. 5, the first processor 1800 may identify the states of the components in the wireless vacuum cleaner 100 by communicating with the battery 1500, the first pressure sensor 1400, and the third processor 1131 in the motor assembly 1100. Here, the first processor 1800 may communicate with each component by using an UART or an I2C but is not limited thereto. For example, the first processor 1800 may obtain, from the battery 1500, data with respect to a voltage state (e.g., normal, abnormal, fully charged, fully discharged, etc.) of the battery 1500 by using the UART. For example, the first processor 1800 may obtain the voltage value of the battery 1500 from the battery 1500 by using the UART. The first processor 1800 may obtain data (or the flow path pressure value) with respect to the flow path pressure from the first pressure sensor 1400 by using the I2C.

The first processor 1800 may obtain data with respect to the flow path pressure value PB, the suction force intensity, the RPM of the first suction motor 1110, and the state (e.g., normal, abnormal, etc.) of the first suction motor 1110 from the third processor 1131 connected to the first suction motor 1110 by using the UART. The suction force may refer to an electrical force consumed to operate the wireless vacuum cleaner 100 and may be represented by the power consumption. The first processor 1800 may obtain, from the third processor 1131, data (e.g., an operation current value) related to the load of the brush device 2000 and data related to the type of the brush device 2000.

The first processor 1800 may identify, based on the obtained data with respect to the type of the brush device 2000, whether or not the brush device 2000 is a type, for which self-diagnosis according to an embodiment of the present disclosure is available. When the brush device 2000 is the type for which self-diagnosis according to an embodiment of the present disclosure is available, the first processor 1800 may identify whether or not the wireless vacuum cleaner 100 is in a lift state, based on the flow path pressure value PB and the operation current value of the brush device 2000 transmitted from the third processor 1132.

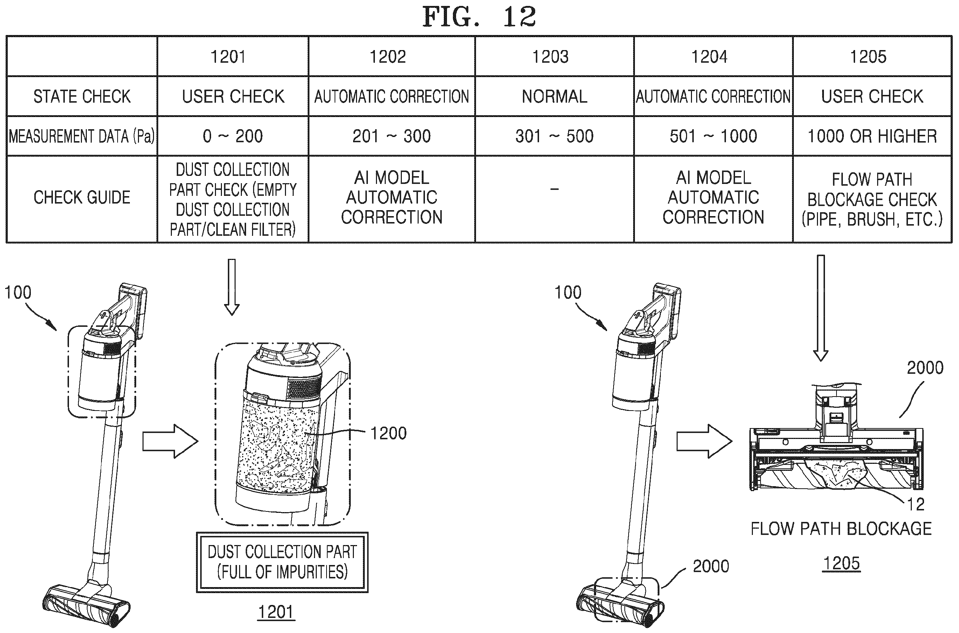

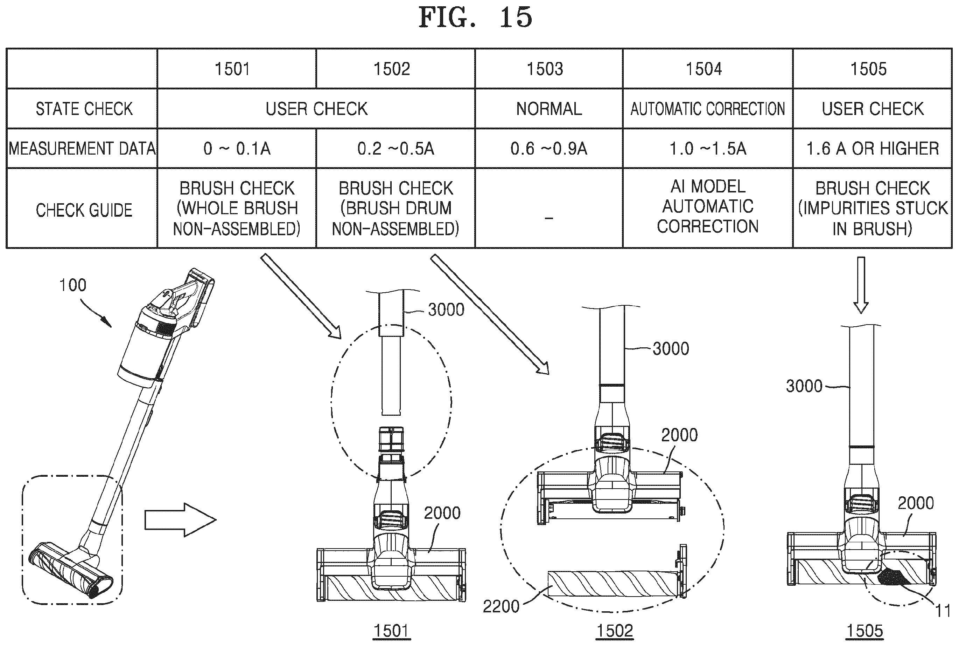

When the wireless vacuum cleaner 100 is identified as being in the lift state, the first processor 1800 may perform the self-diagnosis with respect to the state of the wireless vacuum cleaner 100 by using at least one of the load value (e.g., the operation current value) of the brush device 2000 and the flow path pressure value. Here, the first processor 1800 may perform the self-diagnosis with respect to the wireless vacuum cleaner 100 by comparing self-diagnosis condition data (or diagnosis condition data (e.g., measurement data Pa of FIG. 12 to be described below)) for identifying the state of the wireless vacuum cleaner 100 related to the flow path pressure value stored in the first memory 1900 with the flow path pressure value. The first processor 1800 may perform the self-diagnosis with respect to the wireless vacuum cleaner 100 by comparing self-diagnosis condition data (or diagnosis condition data (e.g., measurement data A of FIG. 15 to be described below)) for identifying the state of the wireless vacuum cleaner 100 related to the load value (e.g., the operation current value) of the brush device 2000 stored in the first memory 1900 with the load value (e.g., the operation current value) of the brush device 2000.

The first processor 1800 may output information about a result of performing the self-diagnosis to the first user interface 1700 or transmit the information to at least one of the station device 200, the server device 300, or the user terminal 400 through the first communication interface 1600. The first processor 1800 may cyclically transmit the self-diagnosis result information or the data (e.g., the flow path pressure value and the load value (e.g., the operation current value) of the brush device 2000) used for performing the self-diagnosis to the station device 200 through short-range wireless communication (e.g., BLE communication) through the first communication interface 1600.

The third processor 1131 may obtain the state data (e.g., the drum RPM, the trip level, normal, abnormal, etc.) of the brush device 2000 from the brush device 2000 through signal line communication with the fourth processor 2410 of the brush device 2000. The third processor 1131 may transmit the state data of the brush device 2000 to the first processor 1800 through an UART. According to an embodiment of the present disclosure, the third processor 1131 may transmit the state data (or the flow path pressure value) of the first suction motor 1110 and the state data (or the load value (e.g., the operation current value) of the brush device 2000) of the brush device 2000 to the first processor 1800 according to different cycles from each other. For example, the third processor 1131 may transmit the state data (or the flow path pressure value) of the first suction motor 1110 to the first processor 1800 for every 0.02 seconds and may transmit the state data (or the load value (e.g., the operation current value) of the brush device 2000) of the brush device 2000 to the first processor 1800 for every 0.2 seconds, but is not limited thereto.

When the third processor 1131 of the cleaning body 1000 and the fourth processor 2410 of the brush device 2000 are connected to each other through the UART or the I2C, damage (e.g., excess over a maximum voltage of a Micom AD port) may occur to a circuit device, etc. due to high impedance effects caused by a line in the extension pipe 3000, etc., electro static discharge (ESD), and/or over voltage. Thus, according to an embodiment of the present disclosure, the third processor 1131 of the cleaning body 1000 and the fourth processor 2410 of the brush device 2000 may communicate with each other through signal line communication rather than using the UART or the I2C. Here, circuits for the signal line communication may include a voltage distribution circuit (hereinafter, referred to as a voltage distributor) in order to prevent the damage to the circuit device caused by over voltage, a power noise, surge, ESD, electrical overstress (EOS), etc. However, the communication between the third processor 1131 of the cleaning body 1000 and the fourth processor 2410 of the brush device 2000 is not limited to the signal line communication.

According to an embodiment of the present disclosure, when a noise reduction circuit is applied to the cleaning body 1000 and the brush device 2000, the third processor 1131 of the cleaning body 1000 and the fourth processor 2410 of the brush device 2000 may perform communication using the UART or the I2C. The noise reduction circuit may include at least one of a low pass filter, a high pass filter, a band pass filter, a damping resistor, and a distribution resistor but is not limited thereto. According to an embodiment of the present disclosure, when a level shifter circuit is applied to the cleaning body 1000 or the brush device 2000, the third processor 1131 of the cleaning body 1000 and the fourth processor 2410 of the brush device 2000 may perform communication using the UART or the I2C.

The first processor 1800 may receive a user input with respect to a setting button (e.g., an ON/OFF button or a +/- setting button) included in the first user interface 1700 and may control an output operation of an LCD. The first processor 1800 may identify a use environment state (e.g., the state of a cleaning object surface (a floor, a carpet, a mat, a corner, etc.), a lift state with respect to the cleaning object surface, etc.) of the brush device 2000 by using a pre-trained AI model (e.g., an SVM algorithm) and may determine operation information (e.g., the power consumption of the suction motor 1110, the drum RPM, the trip level, etc.) of the wireless vacuum cleaner 100 according to the use environment state of the brush device 2000. Here, the first processor 1800 may transmit the operation information of the wireless vacuum cleaner 100 according to the use environment state of the brush device 2000 to the third processor 1131. The first processor 1131 may adjust the intensity of the suction force (the power consumption or the RPM) of the first suction motor 1110 according to the operation information of the wireless vacuum cleaner 100 and may transmit the operation information of the wireless vacuum cleaner 100 according to the use environment state of the brush device 2000 to the fourth processor 2410 through the signal line communication. In this case, the fourth processor 2410 may adjust the drum RPM, the trip level, the illumination device (e.g., the LED display), etc. according to the operation information of the wireless vacuum cleaner 100.

FIG. 6 is a diagram for describing types of the brush device 2000 according to an embodiment of the present disclosure.

Types of the brush device 2000 may be various as illustrated in FIG. 6. For example, the brush device 2000 may include a floor brush, a turbo brush (or a carpet brush), a bedclothes brush, a pet brush, a wet mop brush, an AI floor brush, an AI multi-brush, etc. but is not limited thereto.

The floor brush is a hard floor-dedicated brush and may be configured to use a DC 20 W motor. The turbo brush is a carpet-dedicated brush and may be configured to use a DC 40 W motor. The bedclothes brush is a blanket and bedding-dedicated brush and may be configured to use a DC 20 W motor. The pet brush is a bedclothes and sofa pet-dedicated brush and may be configured to use a DC 40 W motor. The wet mop brush is a wet mopping-dedicated brush and may be configured to use a DC 40 W motor. The AI floor brush is a floor-dedicated brush, but may be used for a carpet, a mat, and a corner and may be configured to use a planet-geared DC 30 W motor. The AI multi-brush is a carpet-dedicated brush, but may be used for a hard floor, a mat, and a corner and may be configured to use a brushless DC motor (BLDC) 120 W motor.

The brush device 2000 may include a motor 2100, a drum to which a rotating brush is attached, an illumination device etc. but is not limited thereto. The motor 2100 of the brush device 2000 may be provided in the drum or outside the drum. When the motor 2100 is provided outside the drum, the drum may receive a driving force from the motor 2100 through a belt.

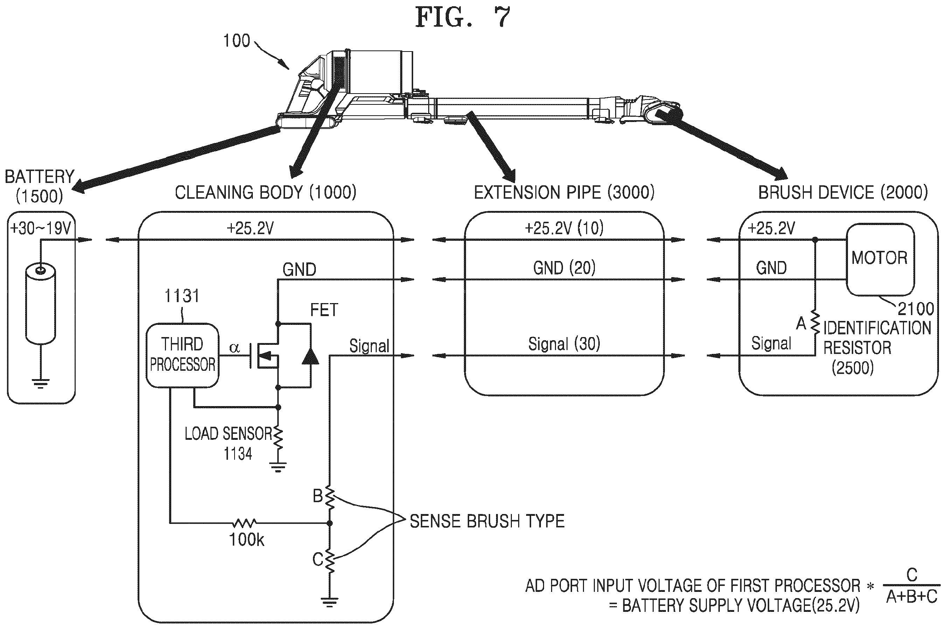

According to an embodiment of the present disclosure, the types of the brush device 2000 may be identified via an identification resistor included in the brush device 2000. An operation, performed by the cleaning body 1000, of identifying a type of the brush device 2000 attached to the wireless vacuum cleaner 100, is described with reference to FIG. 7.

FIG. 7 is a diagram for describing an operation, performed by the cleaning body 1000, of identifying a type of the brush device 2000, according to an embodiment of the present disclosure.

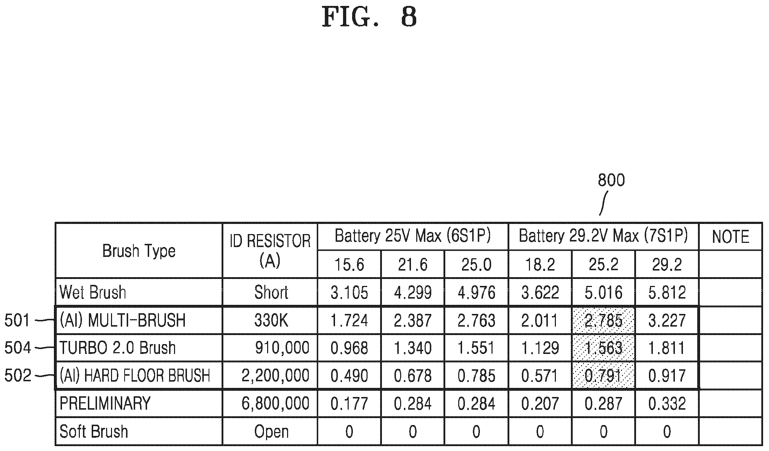

Referring to FIG. 7, the motor assembly 1100 of the cleaning body 1000 may include the third processor 1131 and the load sensor 1134 (e.g., a shut resistor) and the brush device 2000 may include an identification resistor 2500. The identification resistor 2500 may be located between power lines 10 and 20 and a signal line 30. The identification resistor 2500 may indicate a type of the brush device 2000 and may vary according to each type of the brush device 2000. For example, as illustrated in FIG. 8, the identification resistor 2500 of a multi-brush 501 may be 330 KΩ, the identification resistor 2500 of a floor brush 502 may be 2.2 KΩ, and the identification resistor 2500 of a turbo (carpet) brush 504 may be 910 KΩ, but the identification resistor 2500 is not limited thereto. FIG. 8 is a diagram for describing an identification resistor (an ID resistor) of the brush device 2000 according to an embodiment of the present disclosure.

The third processor 1131 may sense whether the brush device 2000 is attached or detached by using the load sensor 1134. For example, when the brush device 2000 is not attached to the wireless vacuum cleaner 100 (e.g., a handy mode), the operation current of the brush device 2000 sensed by the load sensor 1134 may be 0 (zero). However, when the brush device 2000 is attached to the wireless vacuum cleaner 100 (e.g., a brush mode), the operation current of the brush device 2000 sensed by the load sensor 1134 may be 50 mA or higher. Thus, the third processor 1131 may determine that the brush device 2000 is detached when the operation current of the brush device 2000 sensed by the load sensor 1134 is 0 and may determine that the brush device 2000 is attached when the operation current of the brush device 2000 sensed by the load sensor 1134 is 50 mA or higher. The reference operation current value for determining that the brush device 2000 is attached is not limited to 50 mA and may be changed. The third processor 1131 may transmit a result of the sensing of whether or not the brush device 2000 is detached to the first processor 1800. Accordingly, the first processor 1800 may identify whether or not the brush device 2000 is attached to the wireless vacuum cleaner 100. That the brush device 2000 is attached to the wireless vacuum cleaner 100 may also be referred to as that the brush device 2000 is attached to the cleaning body 1000. That the brush device 2000 is attached to the cleaning body 1000 may indicate a state in which the extension pipe 3000 is connected between the brush device 2000 and the cleaning body 1000 or a state in which the extension pipe 3000 is not connected between the brush device 2000 and the cleaning body 1000.

When it is determined that the brush device 2000 is attached to the wireless vacuum cleaner 100, the third processor 1131 may identify a type of the brush device 2000 based on a voltage value input to an input port of the third processor 1131. For example, when the brush device 2000 includes an identification resistor A, and the driving circuit 1130 of the cleaning body 1000 includes a voltage distributor (a resistor B and a resistor C) connected to the signal line 30, the voltage input to the input port of the third processor 1131 may be as below.

$$\text{AD port input voltage} = \text{Battery supply voltage} * (C/(A+B+C))$$

The voltage value input to the input port of the third processor 1131 may decrease as the value of the identification resistor 2500 increases. When the resistor B and the resistor C are constant, the voltage value input to the input port may vary according to the value of the identification resistor A, and thus, the third processor 1131 may identify the type of the brush device 2000 corresponding to the identification resistor 2500, based on the voltage value input to the input port. The third processor 1131 may transmit information corresponding to the voltage value input to the input port to the first processor 1800. Accordingly, the first processor 1800 may identify the type of the brush device 2000 based on the voltage value of the input port connected to the brush device 2000 and a voltage value of the battery 1500 illustrated in FIG. 8 to be described below.

Referring to a table 800 of FIG. 8, the identification resistor of the multi-brush 501 may be 330 KΩ, the identification resistor of the floor brush 502 may be 2.2 MΩ, and the identification resistor of the turbo (carpet) brush 504 may be 910 KΩ. When the voltage of the battery 1500 is 25.2 V, the voltage value input to the input port of the third processor 1131 may be 2.785 V when the multi-brush 501 is attached to the wireless vacuum cleaner 100, the voltage value input to the input port of the third processor 1131 may be 0.791 V when the floor brush 502 is attached to the wireless vacuum cleaner 100, and the voltage value input to the input port of the third processor 1131 may be 1.563 V when the turbo (carpet) brush 504 is attached to the wireless vacuum cleaner 100. Thus, when it is determined that the brush device 2000 is attached to the wireless vacuum cleaner 100 and the voltage of the battery 1500 is 25.2 V, the third processor 1131 may identify that the multi-brush 501 is attached, when the voltage value input to the input port is 2.785 V, identify that the floor brush 502 is attached, when the voltage value input to the input port is 0.791 V, and identify that the turbo (carpet) brush 504 is attached, when the voltage value input to the input port is 1.563 V.

As described above, the third processor 1131 may identify the type of the brush device 2000 based on the voltage value of the battery 1500 and the voltage value input to the input port and may transmit the identified information to the first processor 1800. The first processor 1800 may receive the information about the type of the brush device 2000 from the third processor 1131 or may identify the type of the brush device 2000 based on the voltage value input to the input port and the voltage value of the battery 1500, transmitted from the third processor 1131.

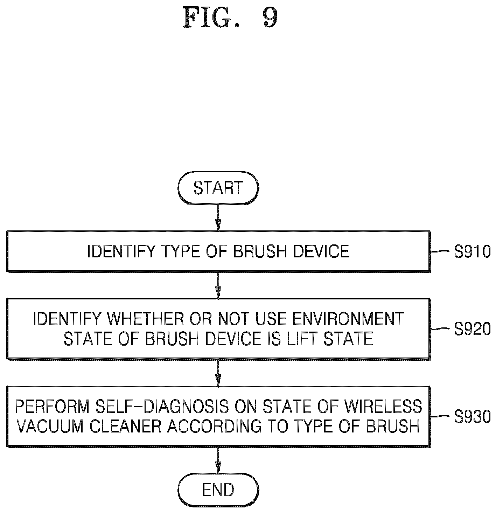

FIG. 9 is a flowchart of a self-diagnosis method of the cleaning system 1, according to an embodiment of the present disclosure. FIG. 9 shows a case in which the wireless vacuum cleaner 100 included in the cleaning system 1 solely performs a self-diagnosis.

Referring to FIG. 9, in operation S910, the first processor 1800 of the wireless vacuum cleaner 100 may identify a type of the brush device 2000. Before the first processor 1800 of the wireless vacuum cleaner 100 identifies the type of the brush device 2000, the first processor 1800 may identify whether the brush device 2000 is attached or detached, as described with reference to FIG. 7. For example, whether the brush device 2000 is attached or detached may be identified based on a load value (e.g., an operation current value) of the brush device 2000 sensed by the load sensor 1134. For example, when the third processor 1131 identifies whether the brush device 2000 is attached or detached and transmits the identified information to the first processor 1800, the first processor 1800 may identify whether the brush device 2000 is attached or detached, based on the received identification information, but it is not limited thereto. For example, the third processor 1131 may transmit the load value (e.g., the operation current value) of the brush device 2000 sensed by the load sensor 1134 to the first processor 1800, and the first processor 1800 may identify whether the brush device 2000 is attached or detached based on the received load value (e.g., operation current value) of the brush device 2000.

In operation S910, the first processor 1800 of the wireless vacuum cleaner 100 may obtain each of a voltage value input to an input port of the third processor 1131 connected to the brush device 2000 and a voltage value of the battery 1500. For example, the first processor 1800 may obtain the voltage value input to the input port of the third processor 1131 and the voltage value of the battery 1500 through the third processor 1131 but is not limited thereto. For example, the first processor 1800 may obtain the voltage value input to the input port of the third processor 1131 through the third processor 1131 and may obtain the voltage value of the battery 1500 from the battery 1500. When the first processor 1800 includes the third processor 1131, the first processor 1800 may obtain the voltage value input through the input port connected to the brush device 2000.

In operation S910, the first processor 1800 may identify the type of the brush device 2000 as described above with reference to FIG. 8, based on the obtained voltage value input to the input port and the obtained voltage value of the battery 1500. For example, when the voltage of the battery 1500 is 25.2 V and the voltage value input to the input port of the third processor 1131 is 2.785 V, the first processor 1800 may identify the type of the brush device 2000 as the multi-brush 501. For example, when the voltage of the battery 1500 is 25.2 V and the voltage value input to the input port of the third processor 1131 is 0.791 V, the first processor 1800 may identify the type of the brush device 2000 as the floor brush 502. For example, when the voltage of the battery 1500 is 25.2 V and the voltage value input to the input port of the third processor 1131 is 5.016 V, the first processor 1800 may identify the type of the brush device 2000 as the wet brush. In order to identify the type of the brush device 2000, the table illustrated in FIG. 8 may be pre-stored in the first memory 1900 and used.

In operation S920, the first processor 1800 of the wireless vacuum cleaner 100 may identify whether or not the wireless vacuum cleaner 100 is in a lift state. Whether or not the wireless vacuum cleaner 100 is in the lift state may be identified based on a flow path pressure value and a load value (e.g., an operation current value) of the brush device 200 according to the type of the brush device 2000. For example, when the load value of the brush device 2000 is the operation current value of the brush device 2000 that is less than 0.8 A and the flow path pressure value is -800 Pa or higher, the first processor 1800 may identify that the wireless vacuum cleaner 100 is in the lift state. However, the load value (or the reference load value) of the brush device 2000 and the flow path pressure value (or the reference flow path pressure value) that are used to identify whether or not the wireless vacuum cleaner 100 is in the lift state are not limited to the values described above. This is because the load value (e.g., the operation current value) of the brush device 2000 and the flow path pressure value that are used to identify whether or not the wireless vacuum cleaner 100 is in the lift state may vary according to the type of the brush device 2000 connected to the wireless vacuum cleaner 100, as described with reference to 10 of FIG. 1.

FIG. 10 is a diagram for describing a use environment state of the brush device 2000 according to an embodiment of the present disclosure. FIG. 10 may be inferred based on an AI model. The use environment state of the brush device 2000 is not limited to the illustration of FIG. 10.

Referring to FIG. 10, a Y axis is a load value (e.g., an operation current value) of the brush device 2000 and an X axis is a flow path pressure value of the wireless vacuum cleaner 100. According to an embodiment of the present disclosure, a use environment state of the brush device 2000 may be related to an environment in which the brush device 2000 is being used during cleaning. For example, the use environment state of the brush device 2000 may include at least one of a state of a cleaning object surface on which the brush device 2000 is located, a relative position state of the brush device 2000 on the cleaning object surface, or a lift state of the brush device 2000 with respect to the cleaning object surface, but is not limited thereto. Here, the cleaning object surface may denote a surface facing the brush device 2000 during the cleaning, such as a floor, bedclothes, a sofa, etc. The state of the cleaning object surface may indicate a material of the cleaning object surface, for example, a floor 1011, a general carpet (a normal load 1012), a high-density carpet (an overload), a mat 1013, etc. The relative position state may include a floor center, a floor side (wall), a corner, etc. but is not limited thereto. Hereinafter, for convenience of explanation, a mat state, a floor state, a carpet state, and a lift state are described, for example, from among various use environment states.

According to an embodiment of the present disclosure, the first processor 1800 of the cleaning body 1000 may obtain a current use environment state of the brush device 2000 by using a flow path pressure value obtained by using a pressure value measured by the first pressure sensor 1400 and a load value (e.g., an operation current value or data related to a load) of the brush device 2000 obtained from the third processor 1131. Here, the first processor 1800 may obtain the current use environment state of the brush device 2000 by using a learning model. The current use environment state of the brush device 2000 may be referred to as a current use environment state of the wireless vacuum cleaner 100.

According to an embodiment of the present disclosure, a reference value used to identify the current use environment state of the brush device 2000 may vary according to the type of the brush device 2000. For example, when the brush device 2000 is the floor brush 502, the first processor 1800 may input a load value (e.g., an operation current value) of the floor brush 502 to an AI model corresponding to the floor brush 502. However, when the brush device 2000 is the multi-brush 501, power consumption (or an operation current value or an applied voltage value) of the multi-brush 501 may be input to an AI model corresponding to the multi-brush 501.

In general, when the wireless vacuum cleaner 100 is in the lift state, the flow path pressure value and the load value (e.g., the operation current value) of the brush device 200 may be low for all types of the brush device 2000. The first processor 1800 may identify whether or not the current use environment state of the brush device 2000 is the lift state, based on the flow path pressure value PB obtained by using the pressure value measured by the first pressure sensor 1400 and the load value (e.g., the operation current value) of the brush device 2000 obtained from the third processor 1131. Although the data related to the load may be different according to the type of the brush device 2000, the first processor 1800 may identify the use environment state of the brush device 2000 as a lift state 1014, when a low flow path pressure value and a low load value are obtained. FIG. 10 may be inferred by inputting the flow path pressure value and the load value (e.g., the operation current value) of the brush device 2000 to an AI model stored in the first memory 1900.

As illustrated in FIG. 10, as the flow path pressure value increases, a distance between the brush device 2000 and a cleaning object surface may decrease (an over-contact state), and as the flow path pressure value decreases, the distance between the brush device 2000 and the cleaning object surface may increase. Also, as illustrated in FIG. 10, as the load value (e.g., the operation current value) of the brush device 2000 decreases, the brush device 2000 may be in a low-load state, and as the load value (e.g., the operation current value) of the brush device 2000 increases, the brush device 2000 may be in a high-load state.

When the use environment state of the wireless vacuum cleaner 100 is identified as the lift state in operation S920, the first processor 1800 of the wireless vacuum cleaner 100 may perform a self-diagnosis with respect to the wireless vacuum cleaner 100 according to the type of the brush device 2000 in operation S930.

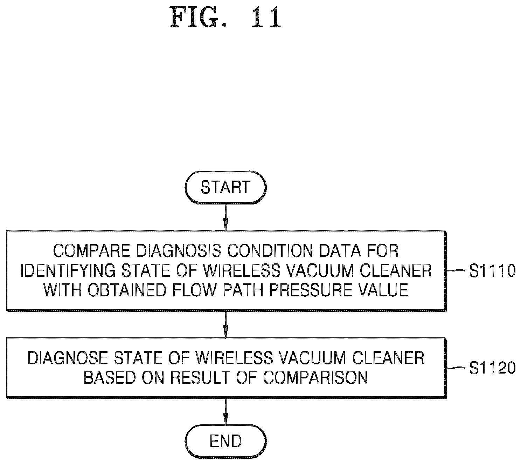

FIG. 11 is a detailed flowchart of a self-diagnosis process according to an embodiment of the present disclosure. FIG. 11 may be referred to as a detailed flowchart of operation S930 of FIG. 9. FIG. 11 may be referred to as a self-diagnosis process on the state of the wireless vacuum cleaner 100 based on a flow path pressure value.

In operation S1110, the first processor 1800 of the wireless vacuum cleaner 100 may compare an obtained flow path pressure value with pre-set diagnosis condition data. The pre-set diagnosis condition data used here may be data (first diagnosis condition data) for identifying the state of the wireless vacuum cleaner 100 related to the flow path pressure value. The pre-set diagnosis condition data may be referred to as data for deriving a result of performing the self-diagnosis on the state of the wireless vacuum cleaner 100. For example, the pre-set diagnosis condition data may include 0 to 200, 201 to 300, 301 to 500, 501 to 1000, and 1000 or higher, which is the measurement data Pa illustrated in FIG. 12, but is not limited thereto. The diagnosis condition data may be referred to as set reference data or a set reference value. The diagnosis condition data may be differently set according to the type of the brush device 2000.

In operation S1120, the first processor 1800 of the wireless vacuum cleaner 100 may diagnose the state of the wireless vacuum cleaner 100 based on a comparison result. The state of the wireless vacuum cleaner 100 may be diagnosed as illustrated in FIG. 12.

FIG. 12 is a diagram for describing a process of performing a self-diagnosis on the state of the wireless vacuum cleaner 100 based on a flow path pressure value (or a flow path internal pressure value) of the wireless vacuum cleaner 100, according to an embodiment of the present disclosure. FIG. 12 illustrates a case in which the brush device 2000 is a turbo brush (carpet brush) type and operates at the power consumption of 115 W.

FIG. 12 is a diagram for describing a process in which software related to the control of the wireless vacuum cleaner 100 performs a self-diagnosis on the state of the wireless vacuum cleaner 100 based the flow path pressure value PB of the wireless vacuum cleaner 100. When the self-diagnosis on the state of the wireless vacuum cleaner 100 is performed, the wireless vacuum cleaner 100 may predict the state of the first dust collection part 1200, the state of the flow path, etc. based on the pressure value measured by the first pressure sensor 1400 and may display check guide information (notification) to the user 5 or automatically correct a self-diagnosis program (or a self-diagnosis AI model).

For example, in a case 1201 where the flow path pressure value PB is 0 to 200 Pa, the wireless vacuum cleaner 100 may determine that the first dust collection part 1200 is full of impurities and may output, to the user 5, a notification (check guide information) requesting a check of the first dust collection part 1200. When the pressure sensor 1400 is provided at the suction duct 40, the first dust collection part 1200 may be arranged at a downstream (a rear end) of air flow compared to the first pressure sensor 1400. Thus, as the dust is accumulated in the first dust collection part 1200, the pressure value measured by the first pressure sensor 1400 may decrease.

In a case 1202 where the flow path pressure value PB is 201 to 300 Pa, the wireless vacuum cleaner 100 may determine that the first dust collection part 1200 contains an appropriate amountl of impurities. Here, the wireless vacuum cleaner 100 may not output an additional notification to the user 5 and may automatically correct a parameter value of an AI model. This is because when the flow path pressure value PB is 201 to 300 Pa, the state of the wireless vacuum cleaner 100 corresponds to a progressive breakdown state (a state requiring an automatic correction), which is neither a normal state nor an abnormal state, and thus, an automatic correction correcting a boundary surface (a boundary surface at which a condition is changed) dividing each area may be performed.

FIG. 13 is a diagram for describing a use environment state of the brush device 2000 for automatically correcting a boundary surface of a lift state, according to an embodiment of the present disclosure. FIG. 13 may be performed by an AI model. Referring to FIG. 13, a position of a rightmost straight line 1311 separating the lift state 1014 from the carpet state 1012 is adjusted.

For example, when the flow path pressure value PB gradually decreases according to the lift state 1013, a boundary surface (or the straight line 1311) separating the lift state 1013 from another state may become gradually closer, and thus, a slope of the boundary surface 1311 may be shifted in direction A so that the slope is made steep or a hyper plane of the boundary surface 1311 may be adjusted so that the flow path pressure value PB may slightly increase in the lift state 1014. Thus, the operation state of the wireless vacuum cleaner 100 may be maintained to be an almost normal state. In contrast, when the flow path pressure value PB gradually increases according to the lift state 1013, the boundary surface (or the straight line 1311) separating the lift state 1013 from another state may become gradually apart away, and thus, the slope of the boundary surface 1311 may be shifted in direction B so that the slope is increased or the hyper plane of the boundary surface 1311 may be adjusted so that the flow path pressure value PB may slightly decrease in the lift state 1014.

For example, when the flow path pressure value increases by 20%, the wireless vacuum cleaner 100 may automatically correct (or amend) the parameter value of the AI model corresponding to the boundary surface 1311 (the hyper plane) illustrated in FIG. 13 to be described below to be a parameter value of an AI model corresponding to a first boundary surface 1312 which is decreased by -20% or may automatically correct an offset value of the flow path pressure value by decreasing the offset value by -20% (a direction of the left arrow of 1314). For example, when the flow path pressure value decreases by 20%, the wireless vacuum cleaner 100 may automatically correct (or amend) the parameter value of the AI model corresponding to the boundary surface 1311 illustrated in FIG. 13 to be described below to be a parameter value of an AI model corresponding to a second boundary surface 1313 which is increased by +20% or may automatically correct the offset value of the flow path pressure value by increasing the offset value by +20% (a direction of the right arrow of 1314).

In FIG. 12, in a case 1203 where the flow path pressure value PB is 301 to 500 Pa, the wireless vacuum cleaner 100 may determine that the state of the wireless vacuum cleaner 100 is normal. Also, in a case 1204 where the pressure value is 501 to 1000 Pa, the wireless vacuum cleaner 100 may determine that small impurities (e.g., dust or hair) are slightly stuck in the flow path. Here, the wireless vacuum cleaner 100 may not output an additional notification to the user 5 and may automatically amend (or correct) the parameter value of the AI model, as described with reference to FIG. 13.

In FIG. 12, in a case 1205 where the flow path pressure value is 1001 Pa or higher, the wireless vacuum cleaner 100 may determine that the flow path is blocked with large impurities 12 (e.g., paper, handkerchief, etc.). Here, the wireless vacuum cleaner 100 may output a notification requesting a check of the flow path blockage or a notification requesting a removal of the large impurities 12 from the brush device 2000 to the user 5. When the pressure sensor 1400 is provided at the suction duct 40, the extension pipe 3000 and the brush device 2000 may be arranged at an upstream of the air flow compared to the first pressure sensor 1400. Thus, when the extension pipe 3000 is blocked or impurities are stuck in the brush device 2000, the pressure value measured by the first pressure sensor 1400 may increase.

According to an embodiment of the present disclosure, in the self-diagnosis with respect to the state of the wireless vacuum cleaner 100, when a flow path pressure value (pre-set diagnosis condition data) for identifying the state of the wireless vacuum cleaner 100 is corrected or the state of the wireless vacuum cleaner 100 is further classified, a new version of software related to the self-diagnosis on the state of the wireless vacuum cleaner 100 may be registered (or downloaded) to the wireless vacuum cleaner 100 or the station device 200.

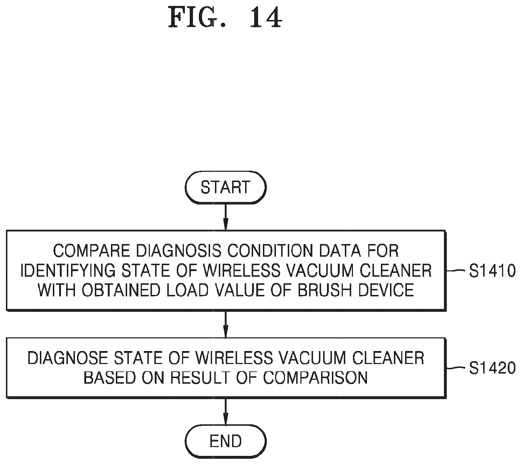

FIG. 14 is a detailed flowchart of a self-diagnosis process according to an embodiment of the present disclosure. FIG. 14 may be referred to as a detailed flowchart of operation S930 of FIG. 9. FIG. 14 may be referred to as a self-diagnosis process on the state of the wireless vacuum cleaner 100 based on a load value (e.g., an operation current value) of the brush device 2000.

In operation S1410 of FIG. 14, the first processor 1800 of the wireless vacuum cleaner 100 may compare the obtained load value (e.g., operation current value) of the brush device 2000 with the pre-set diagnosis condition data (or the reference load value (e.g., the operation current value)). The pre-set diagnosis condition data used here may be data for identifying the state of the wireless vacuum cleaner 100 and may be referred to as diagnosis condition data (second diagnosis condition data) related to the load value (e.g., the operation current value) of the brush device 2000. The measured data illustrated in FIG. 15 is the pre-set diagnosis condition data. For example, the pre-set diagnosis condition data may include 0 to 0.1 A, 0.2 to 0.5 A, 0.6 to 0.9 A, 1.0 to 1.5 A, and 1.6 A, but is not limited thereto. The pre-set diagnosis condition data may be differently set according to the type of the brush device 2000.

In operation S1120 of FIG. 14, the first processor 1800 of the wireless vacuum cleaner 100 may diagnose the state of the wireless vacuum cleaner 100 based on a comparison result.

FIG. 15 is a diagram for describing a self-diagnosis process on the state of the wireless vacuum cleaner 100 based on the data (the load value (e.g., the operation current value) of the brush device 2000) related to the load of the brush device 2000.

Referring to FIG. 15, according to an embodiment of the present disclosure, software related to the self-diagnosis with respect to the state of the wireless vacuum cleaner 100 may perform a self-diagnosis (or a state check) on the state of the wireless vacuum cleaner 100 based on the data (or the load value (e.g., the operation current value) of the brush device 2000) related to the load of the brush device 2000. According to the self-diagnosis on the state of the wireless vacuum cleaner 100, the wireless vacuum cleaner 100 may predict an assembling state, an impurity stuck state, etc. of the brush device 2000 based on the load value (e.g., the operation current value) of the brush device 2000 sensed through the load sensor 1134 and may display diagnosis guide information (notification) to the user 5 or may automatically correct the self-diagnosis function (or the AI model).

For example, in a case 1401 where the load value (e.g., the operation current value) of the brush device 2000 is 0 to 0.1 A, the wireless vacuum cleaner 100 may determine that the brush device 2000 is detached from the extension pipe 3000 (or that the brush device 2000 is completely not assembled). Here, the wireless vacuum cleaner 100 may output, to the user 5, a notification (or a check guide) requiring a check as to whether or not the brush device 2000 is attached.

In a case 1402 where the load value (e.g., the operation current value) of the brush device 2000 is 0.2 to 0.5 A, the wireless vacuum cleaner 100 may determine that a drum 2200 is not assembled to the brush device 2000. Thus, the wireless vacuum cleaner 100 may output, to the user 5, a notification (or a check guide) requiring a check as to whether or not the drum 2200 is assembled.

In a case 1403 where the load value (e.g., the operation current value) of the brush device 2000 is 0.6 to 0.9 A, the wireless vacuum cleaner 100 may determine that the state of the wireless vacuum cleaner 100 is normal. Also, in a case 1404 where the load value (e.g., the operation current value) of the brush device 2000 is 1.0 to 1.5A, it may be determined that small impurities (e.g., dust or hair) are stuck in the brush device 2000. Here, the wireless vacuum cleaner 100 may not output an additional notification to the user 5 and may automatically correct a parameter value of the AI model. In other words, the wireless vacuum cleaner 100 may determine that the region requires an automatic correction, although it is not broken or abnormal. In performing automatic correction by a learning model, the position of the rightmost straight line 1311 distinguishing the lift state 1014 from another state in FIG. 13 is adjusted. In other words, because the load current according to the lift state 1014 gradually increases, the rightmost straight line 1311 for distinguishing the lift state 1014 from another state in FIG. 13 gradually comes closer, and thus, the slope of the straight line may be changed to be steep or the hyper plane of the straight line 1311 may be adjusted so that the straight line 1311 may have a slightly further increased distance from a point having an increased load current in the lift state 1014.

In FIG. 14, in a case 1105 where the load value (e.g., the operation current value) of the brush device 2000 is 1.6 A or higher, the wireless vacuum cleaner 100 may determine that large impurities 11 (e.g., paper, handkerchief, etc.) are stuck in the brush device 2000. Here, the wireless vacuum cleaner 100 may output, to the user 5, a notification (a check guide) for a check on the state of the brush device 2000 or a notification (a check guide) for a removal of the large impurities from the brush device 2000.

According to an embodiment of the present disclosure, for performing the self-diagnosis on the state of the wireless vacuum cleaner 100, when the diagnosis condition data (the reference operation current value) for identifying the state (or the diagnosis result) of the wireless vacuum cleaner 100 is corrected or the state of the wireless vacuum cleaner 100 is further classified, a self-diagnosis program of a new version related to the self-diagnosis with respect to the state of the wireless vacuum cleaner 100 is registered to the server device 300, and the self-diagnosis program of the new version registered to the server device 300 may be downloaded to the wireless vacuum cleaner 100 or the station device 200.

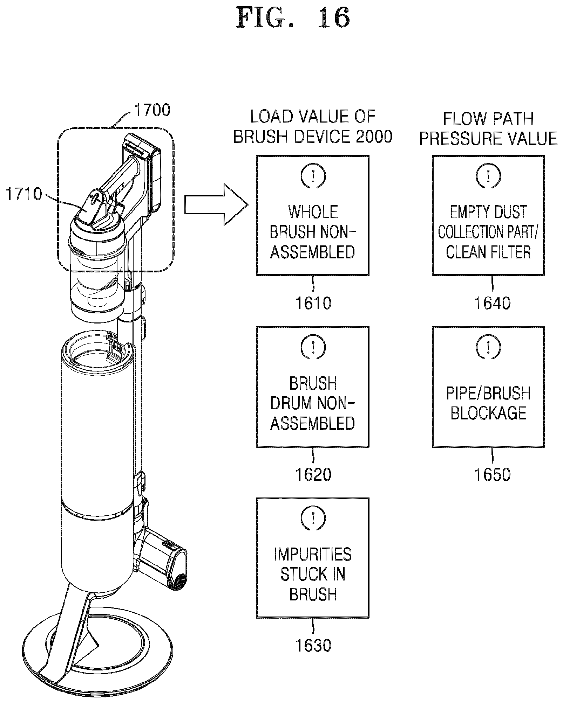

An operation (or a step) of outputting information about a result of performing the self-diagnosis may be added to the flowchart illustrated in FIG. 9. FIG. 16 is a diagram of an example of a display of the information about the result of performing the self-diagnosis through the display 1710 included in the first user interface 1700. The notification with respect to the result of performing the self-diagnosis based on the load value (e.g., the operation current value) of the brush device 2000 may include the information 1610 that the whole brush is not assembled, the information 1620 that a brush drum is not assembled, and the information 1630 that impurities are stuck in the brush, but is not limited thereto. The notification with respect to the result of the self-diagnosis based on the flow path pressure value PB may include emptying of the dust collection part/filter cleaning 1640 and pipe/brush blockage 1650 but is not limited thereto. For example, even when the state of the wireless vacuum cleaner 100 is normal as a result of the self-diagnosis, a notification (e.g., a normal state based on the diagnosis) may be output. The notification sound corresponding to the example of the display illustrated in FIG. 16 may be output through a speaker (not shown) included in the first user interface 1700. The notification sound may be output as a voice message or predetermined sound but is not limited thereto. The operation of outputting information related to a result of performing the self-diagnosis may be performed by the first processor 1800.

According to the self-diagnosis method of the cleaning system 1 according to an embodiment of the present disclosure, the first processor 1800 of the wireless vacuum cleaner 100 may not perform the self-diagnosis on the state of the wireless cleaner 100, when the state of the wireless vacuum cleaner 100 is not a lift state in operation S920 of FIG 9. According to the self-diagnosis method of the cleaning system 1 according to an embodiment of the present disclosure, the first processor 1800 of the wireless vacuum cleaner 100 may not perform the self-diagnosis on the state of the wireless cleaner 100, when the identified type of the brush device 2000 is not a type, for which self-diagnosis is available.

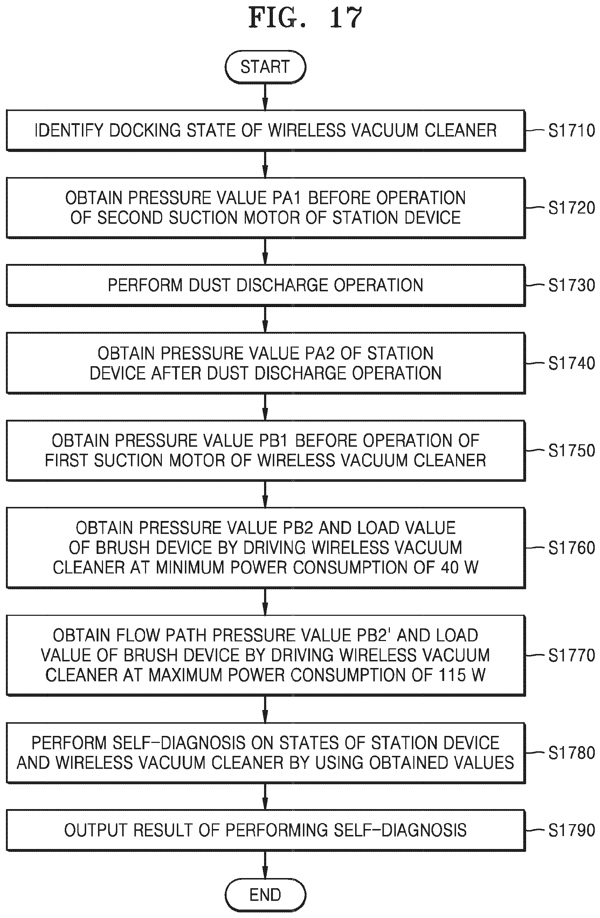

FIG. 17 is a flowchart of a self-diagnosis method with respect to the state of the cleaning system 1, according to an embodiment of the present disclosure. FIG. 17 shows a state in which the wireless vacuum cleaner 100 is docked on the station device 200.

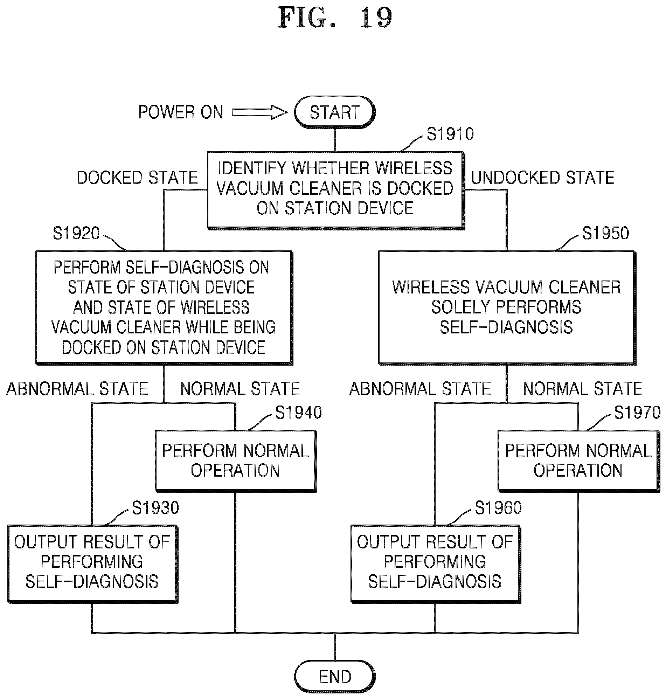

Referring to FIG. 17, in operation S1710, the first processor 1800 of the wireless vacuum cleaner 100 may identify whether or not the wireless vacuum cleaner 100 is docked on the station device 200. The operation of identifying whether or not the wireless vacuum cleaner 100 is docked on the station device 200 may denote an operation of identifying whether or not the wireless vacuum cleaner 100 is in a lift state or an operation of identifying whether or not the brush device 2000 is in a lift state. The identifying of whether or not the wireless vacuum cleaner 100 is docked on the station device 200, according to an embodiment of the present disclosure, will be described in more detail with reference to operation S1910 of FIG. 19 and FIG. 20 to be described below. In operation S1710, the first processor 1800 of the wireless cleaner 100 may identify whether the brush device 2000 is attached or detached to or from the wireless vacuum cleaner 100 and a type of the brush device 2000. The identifying of whether the brush device 2000 is attached or detached to or from the wireless vacuum cleaner 100 and the type of the brush device 2000 may be performed as described above with reference to operation S910 of FIG. 9.

When it is identified that the wireless vacuum cleaner 100 is docked on the station device 200 in operation S1710, the wireless vacuum cleaner 100 may obtain a pressure value PA1 measured by the second pressure sensor 206 of the station device 200 in operation S1720. The wireless vacuum cleaner 100 may obtain the pressure value PA1 (an atmospheric pressure value) measured by the second pressure sensor 206 through data transmission and reception based on short-range wireless communication (e.g., BLE communication) with the station device 200. When it is identified that the wireless vacuum cleaner 100 is not docked on the station device 200 in operation S1710, the wireless cleaner 100 may not perform the self-diagnosis according to an embodiment of the present disclosure in FIG. 17. The state in which the wireless vacuum cleaner 100 is not docked on the station device 200 may include a state in which the wireless vacuum cleaner 100 is not normally docked on the station device 200. The state in which the wireless vacuum cleaner 100 is not docked on the station device 200 may include a state in which models or standards do not correspond to each other between the wireless vacuum cleaner 100 and the station device 200 or a state in which the models or the standards are not compatible with each other between the wireless vacuum cleaner 100 and the station device 200.

When the wireless vacuum cleaner 100 is not docked on the station device 200 in operation S1710, the wireless cleaner 100 may perform the self-diagnosis as described above with reference to FIG. 9. For example, when the wireless vacuum cleaner 100 is not docked on the station device 200, the wireless vacuum cleaner 100 may solely perform the self-diagnosis. However, when the wireless vacuum cleaner 100 is in the lift state and the brush device 2000 is mounted, the self-diagnosis may be performed as described with reference to FIG. 9.

In operation S1730, the wireless vacuum cleaner 100 may perform a dust discharge operation of discharging dust in the first dust collection part 1200 to the second dust collection part 209 of the station device 200. To perform the dust discharge operation, the wireless vacuum cleaner 100 may open the door of the first dust collection part 1200. The dust discharge operation may be performed by driving the second suction motor 207 of the station device 200. The dust discharge operation may be simultaneously performed when the wireless vacuum cleaner 100 is docked on the station device 200, but is not limited thereto. For example, the dust discharge operation may be performed according to a user input that is input through the second user interface 204 of the station device 200. The dust discharge operation may be performed according to a user input that is input through the first user interface 1700 of the wireless vacuum cleaner 100. The dust discharge operation may be performed according to a user input that is input through the user terminal 400. The user input for the dust discharge operation is not limited to the description above. The dust discharge operation may be performed according to the amount of dust in the first dust collection part 1200 of the wireless vacuum cleaner 100. The dust discharge operation may not be performed according to the amount of dust in the second dust collection part 209 of the station device 200. When the self-diagnosis according to an embodiment of the present disclosure is performed, as the dust discharge operation is performed, the state of the wireless vacuum cleaner 100 may be established to be proximate to an initial state. Accordingly, the state of the wireless vacuum cleaner 100 may be relatively more accurately diagnosed.

When the dust discharge operation is completed in operation S1730, in operation S1740, the wireless vacuum cleaner 100 may obtain the pressure value PA2 measured by the second pressure sensor 206 of the station device 200 through a data transmission and reception method based on the short-range wireless communication (e.g., the BLE communication) with the station device 200, when the door of the first dust collection part 1200 is closed. The completion of the dust discharge operation may be performed according to the amount of dust in the first dust collection part 1200 of the wireless vacuum cleaner 100. The completion of the dust discharge operation may be performed according to the amount of dust in the second dust collection part 209 of the station device 200. The completion of the dust discharge operation may be performed according to a user input that is input through the first user interface 1700 of the wireless vacuum cleaner 100. The completion of the dust discharge operation may be performed according to a user input that is input through the second user interface 204 of the station device 200. The completion of the dust discharge operation may be performed according to a user input that is input through the user terminal 400.

In operation S1750, the wireless vacuum cleaner 100 may obtain the pressure value PB1 (the atmospheric pressure value) measured by the first pressure sensor 1400 before an operation of the first suction motor 1110.

In operation S1760, the wireless vacuum cleaner 100 may obtain the pressure value PB2 measured by the first pressure sensor 1400 by driving the first suction motor 1110 of the wireless vacuum cleaner 100 using the minimum power consumption (e.g., 40 W). Here, the wireless vacuum cleaner 100 may obtain the load value (e.g., the operation current value) of the brush device 2000 sensed by the load sensor 1134 when the wireless vacuum cleaner 100 is driven by the minimum power consumption (e.g., 40 W).

In operation S1770, the wireless vacuum cleaner 100 may obtain a pressure value PB2' measured by the first pressure sensor 1400 by driving the first suction motor 1110 of the wireless vacuum cleaner 100 using the maximum power consumption (e.g., 115 W). Here, the wireless vacuum cleaner 100 may obtain the load value (e.g., the operation current value) of the brush device 2000 sensed by the load sensor 1134 when the wireless vacuum cleaner 100 is driven by the maximum power consumption (e.g., 115 W).

In operation S1780, the wireless vacuum cleaner 100 may perform the self-diagnosis on the states of the station device 200 and the wireless vacuum cleaner 100 by using the values (the data) obtained in operations S1720, S1740, S1750, S1760, and S1770 and may output information related to results of the self-diagnosis in operation S1790. The information about the result of performing the self-diagnosis may be output through the first user interface 1700 of the wireless vacuum cleaner 100. That the information about the result of performing the self-diagnosis is output through the first user interface 1700 may denote that the information about the result of performing the self-diagnosis is displayed on the display 1710 included in the first user interface 1700. That the information about the result of performing the self-diagnosis is output through the first user interface 1700 may denote that a voice message or sound related to the result of performing the self-diagnosis is output on a speaker (not shown) included in the first user interface 1700.

The information about the result of performing the self-diagnosis may be output through the second user interface 204 of the station device 200. That the information about the result of performing the self-diagnosis is output through the second user interface 204 may denote that the information about the result of performing the self-diagnosis is displayed on a display (not shown) included in the second user interface 204. That the information about the result of performing the self-diagnosis is output through the second user interface 204 may denote that a voice message or sound related to the result of performing the self-diagnosis is output on a speaker (not shown) included in the second user interface 204.

To output the information about the result of performing the self-diagnosis through the second user interface 204, the wireless vacuum cleaner 100 may transmit the information about the result of performing the self-diagnosis to the station device 200 through a short-range wireless communication (e.g., BLE communication) method through the first communication interface 1600. The communication method between the wireless vacuum cleaner 100 and the station 200 to output the information about the result of performing the self-diagnosis is not limited to the short-range wireless communication (e.g., the BLE) method described above. The station device 200 may transmit the information about the result of performing the self-diagnosis to the user terminal 400 or the server device 300 through the short-range wireless communication (e.g., WiFi communication) through the second communication interface 201. The communication method between the station device 200 and the user terminal 400 and the communication method between the station device 200 and the server device 300 for transmitting the information about the result of performing the self-diagnosis are not limited to the short-range wireless communication (e.g., the WiFi communication) method. The operation of performing the self-diagnosis on the states of the station device 200 and the wireless vacuum cleaner 100 and the operation of outputting the information about the result of performing the self-diagnosis will be described in more detail when FIG. 18 is described below. The wireless vacuum cleaner 100 may transmit the information about the result of performing the self-diagnosis to the station device 200 through the first communication interface 1600. The station device 200 may receive the information about the result of performing the self-diagnosis from the wireless vacuum cleaner 100 through the second communication interface 201. The station device 200 may transmit the information about the result of performing the self-diagnosis to the user terminal 400 and the server device 300 through the second communication interface 201. The information about the result of performing the self-diagnosis to be described below may be output also as described above.

The flowchart illustrated in FIG. 17 may be modified not to include operation S1790. For example, an embodiment illustrated in FIG. 17 may be modified not to output the result of performing the self-diagnosis.

FIG. 18 is a diagram for describing a self-diagnosis with respect to a state of the station device 200, according to an embodiment of the present disclosure.

Referring to FIG. 18, in a case 1801 where a difference value (or measurement data PA = the pressure value PA1 before a dust discharge operation - the pressure value PA2 after the dust discharge operation) between the pressure values measured by the second pressure sensor 206 of the station device 200 is 5000 or less, the wireless vacuum cleaner 100 may determine that the state of the station device 200 is a service center (hereinafter, abbreviated as SVC) check recommendation (or a service check recommendation) in operation S1780. Accordingly, because the state of the station device 200 is AC input power or an abnormal state of the second suction motor 207, the wireless vacuum cleaner 100 may output a notification indicating the SVC check recommendation as the information about the result of performing the self-diagnosis on the state of the station device 200, in operation S1790, but may not output the information about the result of performing the self-diagnosis.

In a case 1802 where the difference value (or the measurement data PA) between the pressure values measured by the second pressure sensor 206 of the station device 200 is 5001 to 8000, the wireless vacuum cleaner 100 may determine that the state of the station device 200 is a user check state in operation S1780. Accordingly, the wireless vacuum cleaner 100 may output a notification (a dust collection part mis-assembly notification) requesting a check of the docking state as the information about the result of performing the self-diagnosis on the state of the station device 200, in operation S1790, but may not output the information about the result of performing the self-diagnosis.

In a case 1803 where the difference value (or the measurement data PA) between the pressure values measured by the second pressure sensor 206 of the station device 200 is 8001 to 11000, the wireless vacuum cleaner 100 may determine that the state of the station device 200 is normal in operation S1780. Accordingly, the wireless vacuum cleaner 100 may not output a notification with respect to the station device 200 or may output a notification indicating that the station device 200 is in the normal state as the information about the result of performing the self-diagnosis on the state of the station device 200 in operation S1790 or may not output the information about the result of performing the self-diagnosis.

In a case 1804 where the difference value (or the measurement data PA) between the pressure values measured by the second pressure sensor 206 of the station device 200 is 11001 to 18000, the wireless vacuum cleaner 100 may determine that the state of the station device 200 is a user check state in operation S1780. Accordingly, the wireless vacuum cleaner 100 may output a notification (a dust collection part replacement necessity notification) indicating a blockage of the dust collection part of the station device 200 as the information about the result of performing the self-diagnosis on the state of the station device 200 in operation S1790 or may not output the information about the result of performing the self-diagnosis.

In a case 1805 where the difference value (or the measurement data PA) between the pressure values measured by the second pressure sensor 206 of the station device 200 is 18001 or higher, the wireless vacuum cleaner 100 may determine that the state of the station device 200 is a user check and an SVC check recommendation state in operation S1780. Accordingly, the wireless vacuum cleaner 100 may output a notification (a notification indicating the need for a breakdown check, such as a door not opened to perform the dust discharge operation) indicating a complete entrance blockage as the information about the result of performing the self-diagnosis on the state of the station device 200 in operation S1790 but may not output the information about the result of performing the self-diagnosis.

The information about the result of performing the self-diagnosis on the state of the station device 200 of FIG. 18 may be transmitted to the station device 200. The station device 200 may display the received information about the result of performing the self-diagnosis on a display (not shown) included in the second user interface 204 of the station device 200 or through a speaker (not shown), but is not limited thereto. For example, the station device 200 may transmit the information about the result of performing the self-diagnosis on the state of the station device 200 that is transmitted from the wireless vacuum cleaner 100 to the server device 300 or the user terminal 400 through the second communication interface 201.

In operation S1780, the wireless vacuum cleaner 100 may determine (S1780) the state of the wireless vacuum cleaner 100 by comparing the difference value PB=PB1-PB2 between the pressure value PB2 obtained at the minimum power consumption (e.g., 40 W) and the pressure value PB1 obtained before the operation of the first suction motor 1110 with the diagnosis condition data for identifying the state of the wireless vacuum cleaner 100 related to the flow path pressure value, which is stored in the first memory 1900, and in operation S1790, may output (S1790) the determined information (information about the self-diagnosis) about the result of the self-diagnosis as the notification information, but may not output the determined information about the result of the self-diagnosis.

In operation S1780, the wireless vacuum cleaner 100 may determine (S1780) the state of the wireless vacuum cleaner 100 by comparing the load value (e.g., the operation current value) of the brush device 2000 obtained at the minimum power consumption (e.g., 40 W) with the diagnosis condition data for identifying the state of the wireless vacuum cleaner 100 related to the load value (e.g., the operation current value) of the brush device 2000, which is stored in the first memory 1900, and in operation S1790, may output (S1790) the determined information (information about the self-diagnosis) about the result of the self-diagnosis as the notification information, but may not output the determined information.

In operation S1780, the wireless vacuum cleaner 100 may determine (S1780) the state of the wireless vacuum cleaner 100 by comparing the difference value PB=PB1-PB2 between the pressure value PB2 obtained at the maximum power consumption (e.g., 115 W) and the pressure value PB1 obtained before the operation of the first suction motor 1110 with the diagnosis condition data for identifying the state of the wireless vacuum cleaner 100 related to the flow path pressure value, which is stored in the first memory 1900, and in operation S1790, may output (S1790) the determined information (information about the self-diagnosis) about the result of the self-diagnosis as the notification information, but may not output the determined information. FIG. 12 shows an example of the self-diagnosis on the state of the wireless vacuum cleaner 100 based on the difference value PB=PB1-PB2 between the pressure value PB2 obtained at the maximum power consumption of 115 W and the pressure value PB1 obtained before the operation of the first suction motor 1110, and thus, in operation S1780, the state of the wireless vacuum cleaner 100 may be self-diagnosed as illustrated in FIG. 12.

In operation S1780, the wireless vacuum cleaner 100 may determine (S1780) the state of the wireless vacuum cleaner 100 by comparing the load value (e.g., the operation current value) of the brush device 2000 obtained at the maximum power consumption (e.g., 115 W) with the diagnosis condition data for identifying the state of the wireless vacuum cleaner 100 related to the load value (e.g., the operation current value) of the brush device 2000, which is stored in the first memory 1900, and in operation S1790, may output (S1790) the determined information (information about the self-diagnosis) about the result of the self-diagnosis as the notification information, but may not output the determined information. FIG. 15 shows an example of the self-diagnosis on the state of the wireless vacuum cleaner 100 based on the load value (e.g., the operation current value) of the brush device 2000 obtained at the maximum power consumption of 115 W, and thus, in operation S1780, the state of the wireless vacuum cleaner 100 may be self-diagnosed as illustrated in FIG. 15.

In operation S1780, the wireless vacuum cleaner 100 may obtain the information about the result of performing the self-diagnosis on the state of the wireless vacuum cleaner 100, based on a result (a first result) of the self-diagnosis on the state of the wireless vacuum cleaner 100 based on the flow path pressure value obtained at the maximum power consumption of 115 W and the load value (e.g., the operation current value) of the brush device 2000 and a result (a second result) of the self-diagnosis on the state of the wireless vacuum cleaner 100 based on the pressure value obtained at the minimum power consumption of 40 W and the load value (e.g., the operation current value) of the brush device 2000, and in operation S1790, the wireless vacuum cleaner 100 may output the obtained information about the result of performing the self-diagnosis, but may not output the obtained information.

For example, when the information (the first result) about the result of the self-diagnosis at the maximum power consumption of 115 W and the information (the second result) about the result of the self-diagnosis at the minimum power consumption of 40 W correspond to each other, the result of performing the self-diagnosis on the state of the wireless vacuum cleaner 100 may be obtained and the obtained result of performing the self-diagnosis may be output, but the result of performing the self-diagnosis may not be output. For example, when the information (the first result) about the result of the self-diagnosis at the maximum power consumption of 115 W and the information (the second result) about the result of the self-diagnosis at the minimum power consumption of 40 W do not correspond to each other, the self-diagnosis operation on the state of the wireless cleaner 100 may be determined as an error, and the self-diagnosis may be performed again. For example, at least one abnormal state is diagnosed in the information (the first result) about the result of the self-diagnosis at the maximum power consumption of 115 W and the information (the second result) about the result of the self-diagnosis at the minimum power consumption of 40 W, the wireless vacuum cleaner 100 may obtain the information about the result of performing the self-diagnosis, as the information that the abnormal state occurs, and may output the obtained information, but may not output the obtained information. As described above, a relatively more accurate self-diagnosis result may be obtained based on the result (the first result) of the self-diagnosis at the maximum power consumption of 115 W and the result (the second result) of the self-diagnosis at the minimum power consumption of 40 W.

In operation S1780 of FIG. 17, the wireless vacuum cleaner 100 may perform the self-diagnosis on the state of the wireless vacuum cleaner 100 by using at least one value from among the obtained values. For example, the self-diagnosis on the state of the wireless vacuum cleaner 100 may be performed by using only the flow path pressure value obtained at the minimum power consumption of 40 W. For example, the self-diagnosis on the state of the wireless vacuum cleaner 100 may be performed by using only the load value (e.g., the operation current value) of the brush device 2000 obtained at the minimum power consumption of 40 W. For example, the self-diagnosis on the state of the wireless vacuum cleaner 100 may be performed by using only the flow path pressure value obtained at the maximum power consumption of 115 W. For example, the self-diagnosis on the state of the wireless vacuum cleaner 100 may be performed by using only the load value (e.g., the operation current value) of the brush device 2000 obtained at the maximum power consumption of 115 W. For example, based on the result information of the self-diagnosis on the state of the wireless vacuum cleaner 100 using the flow path pressure value obtained at the minimum power consumption of 40 W and the result information of the self-diagnosis on the state of the wireless vacuum cleaner 100 using the flow path pressure value obtained at the maximum power consumption of 40 W, the information about the result of performing the self-diagnosis on the wireless vacuum cleaner 100 may be output. For example, based on the result information of the self-diagnosis performed on the state of the wireless vacuum cleaner 100 using the load value (e.g., the operation current value) of the brush device 2000 obtained at the minimum power consumption of 40 W and the result information of the self-diagnosis performed on the state of the wireless vacuum cleaner 100 using only the load value (e.g., the operation current value) of the brush device 2000 obtained at the maximum power consumption of 115 W, the information about the result of performing the self-diagnosis on the state of the wireless vacuum cleaner 100 may be output.

When the self-diagnosis result information is not output in the embodiment illustrated in FIG. 17, the first processor 1800 may store the self-diagnosis result information in the first memory 1900 and may use the stored self-diagnosis result information to control an operation of the wireless vacuum cleaner 100. For example, when the self-diagnosis result information is a progressive abnormal state, at least one of an operation parameter value related to the flow path pressure value of the wireless vacuum cleaner 100 and an operation parameter value related to the load value (e.g., the operation current value) of the brush device 2000 may be corrected based on the self-diagnosis result information stored in the first memory 1900.

FIG. 19 is a flowchart of a self-diagnosis method of the cleaning system 1, according to an embodiment of the present disclosure. FIG. 19 includes both a case where the wireless vacuum cleaner 100 is docked on the station device 200 and a case where the wireless vacuum cleaner 100 is not docked on the station device 200.

According to the self-diagnosis method of FIG. 19, operations may be started when the wireless vacuum cleaner 100 and the station device 200 are turned on, but the self-diagnosis method is not limited thereto. For example, when a user input for requesting a self-diagnosis is received through the first user interface 1700 of the wireless vacuum cleaner 100, the self-diagnosis according to an embodiment of the present disclosure may be performed. For example, when a user input for requesting a self-diagnosis is received through the second user interface 204 of the station device 200, the self-diagnosis according to an embodiment of the present disclosure may be performed. For example, when a self-diagnosis request command transmitted from the user terminal 400 is received by the wireless vacuum cleaner 100 or the station device 200, the self-diagnosis according to an embodiment of the present disclosure may be performed.

In operation S1910 of FIG. 19, whether or not the wireless vacuum cleaner 100 is docked on the station device 200 is identified. According to an embodiment of the present disclosure, when the battery 1500 is in contact with a charge terminal of the station device 200, the first processor 1800 may sense that the battery 1500 is started to be charged. Thus, when the charging of the battery 1500 is started, the first processor 1800 of the wireless vacuum cleaner 100 may identify that the wireless vacuum cleaner 100 or the cleaning body 1000 is docked on the station device 200. According to an embodiment of the present disclosure, when the battery 1500 is charged through the charge terminal of the station device 200, the station device 200 may sense the power (the current) charged to the battery 1500 of the wireless vacuum cleaner 100 or the cleaning body 1000 through the charge terminal. Thus, the second processor 203 of the station device 200 may identify that the wireless vacuum cleaner 100 is docked when the power (current) charged to the battery 1500 is sensed.

According to an embodiment of the present disclosure, a state in which the wireless vacuum cleaner 100 is docked on the station device 200 may be identified as illustrated in FIG. 20. FIG. 20 is a diagram for describing an operation, performed by the station device 200, of sensing a docked state of the wireless vacuum cleaner 100, according to an embodiment of the present disclosure.

Referring to FIG. 20, the station device 200 may identify whether or not the wireless vacuum cleaner 100 is docked on the station device 200 by using the docking sensor 210. For example, the wireless vacuum cleaner 100 may include a magnetic material 1450, and the station device 200 may include the docking sensor 210. The docking sensor 210 may include a TMR sensor but is not limited thereto.

When the user 5 docks the wireless vacuum cleaner 100 on the station device 200, a distance d between the magnetic material 1450 attached to the first dust collection part 1200 of the cleaning body 1000 included in the wireless vacuum cleaner 100 and the docking sensor 210 decreases, and thus, the docking sensor 210 may sense the magnetic material 1450 attached to the first dust collection part 1200. When the docking sensor 210 senses the magnetic material 1450, the station device 200 may identify that the wireless vacuum cleaner 100 is docked.

According to an embodiment of the present disclosure, the wireless vacuum cleaner 100 may receive information indicating the docking on the station device 200 from the station device 200 through short-range wireless communication (e.g., BLE communication) with the station device 200. The station device 200 may receive, from the wireless vacuum cleaner 100, the information indicating that the wireless vacuum cleaner 100 is docked on the station device 200, through short-range wireless communication (e.g., the BLE communication) with the wireless vacuum cleaner 100.

In operation S1910, when the wireless vacuum cleaner 100 is docked on the station device 200, the wireless vacuum cleaner 100 may perform the self-diagnosis on the state of the station device 200 and the wireless vacuum cleaner 100 in operation S1920, as illustrated in FIG. 17. For example, the wireless vacuum cleaner 100 may obtain the pressure value PA1 of the station device 200 before the dust discharge operation and may perform the dust discharge operation. Thereafter, the wireless vacuum cleaner 100 may obtain the pressure value PA2 of the station device 200 and may self-diagnose the state of the station device 200 by comparing the difference value PA=PA1-PA2 between the obtained pressure values with the diagnosis condition data (or the diagnosis reference data) for identifying the state of the station device 200.

In operation S1920, the wireless vacuum cleaner 100 may obtain the pressure value PB1 before the first suction motor 1110 operates and may operate the wireless vacuum cleaner 100 by the minimum power consumption (e.g., 40 W) to obtain at least one of the flow path pressure value PB=PB1-PB2 and the load value (e.g., the operation current value) of the brush device 2000 to perform the self-diagnosis on the state of the wireless vacuum cleaner 100. In operation S1920, the wireless vacuum cleaner 100 may operate the wireless vacuum cleaner 100 by the maximum power consumption (e.g., 115 W) to obtain at least one of the flow path pressure value PB'=PB1-PB2' and the load value (e.g., the operation current value) of the brush device 2000 to perform the self-diagnosis on the state of the wireless vacuum cleaner 100.

As a result of the performing of the self-diagnosis in operation S1920, when at least one abnormal state is sensed, the wireless vacuum cleaner 100 may output information with respect to the self-diagnosis in operation S1930, but may not output the information with respect to the self-diagnosis and may store the information with respect to the self-diagnosis in the first memory 1900.

As a result of the performing of the self-diagnosis in operation S1920, when both the state of the station device 200 and the state of the wireless vacuum cleaner 100 are normal, the wireless vacuum cleaner 100 and the station device 200 may perform normal operations in operation S1940. For example, when the wireless vacuum cleaner 100 is docked on the station device 200, the normal operations may include a charging operation of the battery 1500, a dust discharge operation, etc.

When, in operation S1910, it is identified that the wireless vacuum cleaner 100 is not docked on the station device 200, the wireless vacuum cleaner 100 may solely perform the self-diagnosis in operation S1950. For example, as described above with reference to FIG. 9, the self-diagnosis on the state of the wireless vacuum cleaner 100 may be performed based on at least one of the flow path pressure value PB obtained by operating the wireless vacuum cleaner 100 based on one type of power consumption and the load value (e.g., the operation current value) of the brush device 2000. However, according to the self-diagnosis on the state of the wireless vacuum cleaner 100 according to an embodiment of the present disclosure, the self-diagnosis result information may be obtained based on a self-diagnosis result (a second result) on the state of the wireless vacuum cleaner 100 based on at least one of the flow path pressure value PB and the load value (e.g., the operation current value) of the brush device 2000 obtained by operating the wireless vacuum cleaner 100 at the minimum power consumption (e.g., 40 W) and a self-diagnosis result (a first result) on the state of the wireless vacuum cleaner 100 based on at least one of the flow path pressure value PB and the load value (e.g., the operation current value) of the brush device 2000 obtained by operating the wireless vacuum cleaner 100 at the maximum power consumption (e.g., 115 W), and the obtained result information may be output, or may not be output but may be stored in the first memory 1900.

In operation S1950, when at least one abnormal state is diagnosed as a result of the self-diagnosis, the wireless vacuum cleaner 100 may output the self-diagnosis result information in operation S1960 or may not output but may store the self-diagnosis result information in the first memory 1900.

In operation S1950, when the state of the wireless vacuum cleaner 100 is all normal, as a result of the self-diagnosis, the wireless vacuum cleaner 100 may perform a normal operation in operation S1970. For example, when the brush device 2000 is not mounted, the normal operation of the wireless vacuum cleaner 100 may perform a handy operation mode. The handy operation mode may be selectively performed as a jet, ultra-intense, intense, or general mode. The handy operation mode may be selected by the user 5, but may be selectively performed by an AI model according to the state of a cleaning object surface. When the brush device 2000 is mounted and the mounted brush device 2000 is a wet mop brush, the wireless vacuum cleaner 100 may operate in a wet mop mode. When the mounted brush device 2000 is a floor/carpet/AI multi-brush, the jet, ultra-intense, intense, general, or smart AI mode may be selectively performed. The smart AI mode is available for only a brush type having an AI function. The operation mode of the brush device 2000 may be selected by the user 5 but may be selectively performed according to a cleaning object surface.

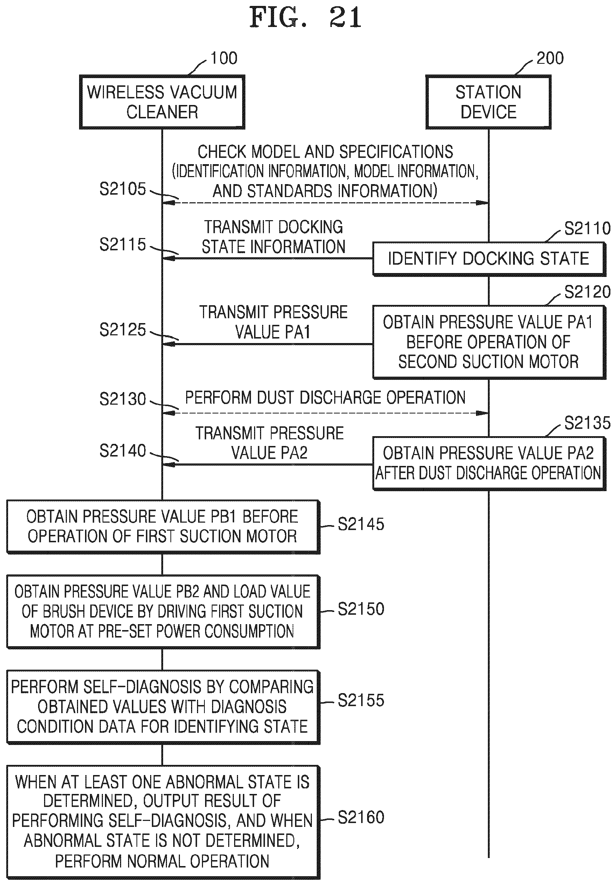

FIG. 21 is a flowchart of an operation of a self-diagnosis method of the cleaning system 1, according to an embodiment of the present disclosure. FIG. 21 shows a case where the self-diagnosis is performed by the wireless vacuum cleaner 100 when the wireless vacuum cleaner 100 is docked on the station device 200.

Referring to FIG. 21, in operation S2105, the first processor 1800 of the wireless vacuum cleaner 100 and the second processor 203 of the station device 200 may check the specifications (standards) and the model (model information and identification information) of the wireless vacuum cleaner 100 based on the short-range wireless communication with each other (through the first communication interface 1600 of the wireless vacuum cleaner 100 and the second communication interface 201 of the station device 200). Here, whether the brush device 2000 is attached or detached to or from the wireless vacuum cleaner 100 and the type of the brush device 2000 may be identified. In operation S2105, when the checked specifications and the checked model of the wireless vacuum cleaner 100 are not the specifications and the model appropriate for the station device 200, subsequent operations may not be performed. Here, a notification indicating that the specifications or the models do not correspond to each other or are not compatible with each other between the wireless vacuum cleaner 100 and the station device 200 may be output through the wireless vacuum cleaner 100 or the station device 200 or a message corresponding to the notification may be displayed.

In operation S2110, the station device 200 may identify a docking state of the wireless vacuum cleaner 100. The operation of identifying the docking state of the wireless vacuum cleaner 100 may be performed by using the docking sensor 210 included in the station device 200 as described above with reference to FIG. 20. Alternatively, as described above with reference to operation S1901 of FIG. 19, the docking state of the wireless vacuum cleaner 100 may be identified based on the charge state of the battery 1500. When it is identified that the wireless vacuum cleaner 100 is docked, the station device 200 may transmit docking state information indicating the docking state to the wireless vacuum cleaner 100 in operation S2115.

In operation S2120, the station device 200 may obtain a pressure value PA1 measured by the second pressure sensor 206. In operation S2125, the station device 200 may transmit a pressure value PA1 (an atmospheric pressure value) measured by the second pressure sensor 206 to the wireless vacuum cleaner 100 based on short-range wireless communication between the wireless vacuum cleaner 100 and the station device 200. Accordingly, the wireless vacuum cleaner 100 may obtain the pressure value PA1 of the station device 200.

In operation S2130, a dust discharge operation that discharges the dust in the first dust collection part 1200 of the wireless vacuum cleaner 100 to the second dust collection part 209 of the station device 200 may be performed by opening a door of the first dust collection part 1200 of the wireless vacuum cleaner 100 and operating the second suction motor 207 of the station device 200.

In operation S2135, when the dust discharge operation is completed and the door of the first dust collection part 1200 of the wireless vacuum cleaner 100 is closed, the station device 200 may obtain a pressure value PA2 measured by the second pressure sensor 206. In operation S2140, the station device 200 may transmit the obtained pressure value PA2 to the wireless vacuum cleaner 100 through the short-range wireless communication method.

In operation S2145, the wireless vacuum cleaner 100 may obtain a pressure value PB1 (an atmospheric pressure value) measured by the first pressure sensor 1400 before an operation of the first suction motor 1110.

In operation S2150, the wireless vacuum cleaner 100 may obtain a pressure value PB2 measured by the first pressure sensor 1400 and a load value (e.g., an operation current value) of the brush device 2000 by driving the first suction motor 1110 of the wireless vacuum cleaner 100 using pre-set power consumption (e.g., 40 W or 115 W).

In operation S2155, the wireless vacuum cleaner 100 may perform a self-diagnosis on the state of the wireless vacuum cleaner 100 and the state of the station device 200 by comparing the obtained values (a difference value between the pressure values PA1 and PA2 of the station device 200, a difference value between the pressure values PB1 and PB2 of the wireless vacuum cleaner 100, and the load value (e.g., the operation current value) of the brush device 200) with diagnosis condition data stored in the first memory 1900. Here, the wireless vacuum cleaner 100 may perform the self-diagnosis on the state of the wireless vacuum cleaner 100 by using at least one of the difference value between the pressure values obtained by the first pressure sensor 1400 and the load value (e.g., the operation current value) of the brush device 200.

In operation S2160, when at least one abnormal state is determined as a result of performing the self-diagnosis, the wireless vacuum cleaner 100 may output information with respect to the self-diagnosis, but may not output the information with respect to the self-diagnosis and may store the information in the first memory 1900. In operation S2160, when an abnormal state is not determined as a result of performing the self-diagnosis, the wireless vacuum cleaner 100 may perform a normal operation. For example, the normal operation may include a charge operation of the battery 1500.

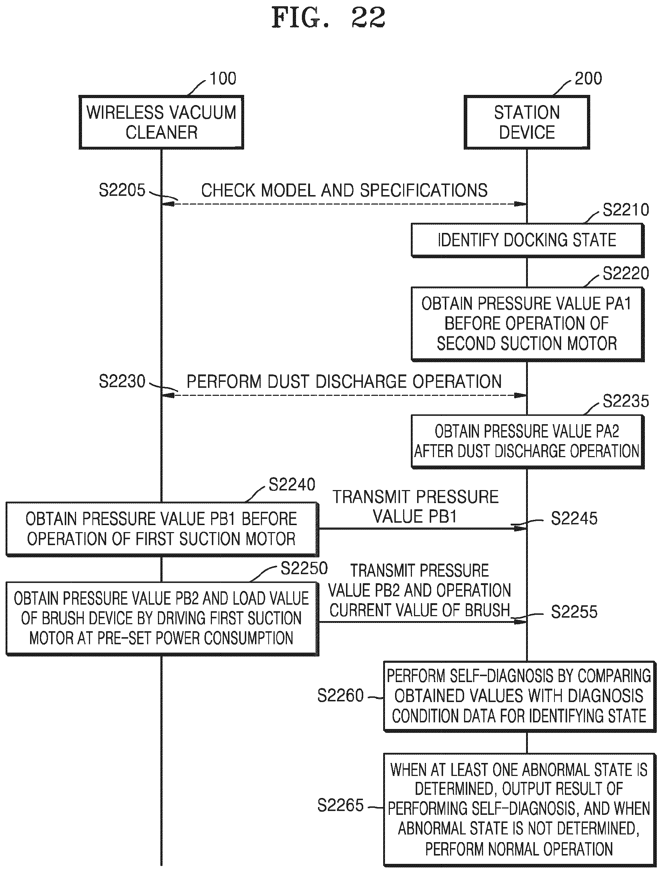

FIG. 22 is a flowchart of an operation of a self-diagnosis method of the cleaning system 1, according to an embodiment of the present disclosure. FIG. 22 shows a case where the self-diagnosis is performed by the station device 200 when the wireless vacuum cleaner 100 is docked on the station device 200.

Referring to FIG. 22, in operation S2205, the first processor 1800 of the wireless vacuum cleaner 100 and the second processor 203 of the station device 200 may check the specifications and the model of the wireless vacuum cleaner 100 based on short-range wireless communication with each other (through the first communication interface 1600 of the wireless vacuum cleaner 100 and the second communication interface 201 of the station device 200). Here, whether the brush device 2000 is attached or detached to or from the wireless vacuum cleaner 100 and the type of the brush device 2000 may be identified. In operation S2205, when the checked specifications and the checked model of the wireless vacuum cleaner 100 are not the specifications and the model appropriate for the station device 200, subsequent operations may not be performed. Here, a notification indicating that the specifications or the models do not correspond to each other or are not compatible with each other between the wireless vacuum cleaner 100 and the station device 200 may be output through a speaker (not shown) included in the wireless vacuum cleaner 100 or the station device 200 or a message corresponding to the notification may be displayed on the display 1710 included in the wireless vacuum cleaner 100 or a display (not shown) included in the station device 200.

In operation S2210, the station device 200 may identify a docking state of the wireless vacuum cleaner 100. The operation of identifying the docking state of the wireless vacuum cleaner 100 on the station device 200 may be performed by using the docking sensor 210 included in the station device 200 as described above with reference to FIG. 20. The operation of identifying the docking state of the wireless vacuum cleaner 100 on the station device 200 may be performed based on the charge operation of the battery 1500 as described with reference to operation S1910 of FIG. 19.

In operation S2220, the station device 200 may obtain a pressure value PA1 measured by the second pressure sensor 206 before performing a dust discharge operation.

In operation S2230, the dust discharge operation in which the wireless vacuum cleaner 100 opens the door of the first dust collection part 1200 and the station device 200 discharges the dust in the first dust collection part 1200 of the wireless vacuum cleaner 100 to the second dust collection part 209 of the station device 200 by driving the second suction motor 207, may be performed. The dust discharge operation may be performed as described above with reference to operation S2130 of FIG. 21.

In operation S2235, when the dust discharge operation is completed and the door of the first dust collection part 1200 of the wireless vacuum cleaner 100 is closed, the station device 200 may obtain a pressure value PA2 measured by the second pressure sensor 206.

In operation S2240, the wireless vacuum cleaner 100 may obtain a pressure value PB1 (an atmospheric pressure value) measured by the first pressure sensor 1400 before an operation of the first suction motor 1110. In operation S2245, the wireless vacuum cleaner 100 may transmit the pressure value PB1 to the station device 200 through a short-range wireless communication method established through the first communication interface 1600. The station device 200 may receive the pressure value PB1 through the second communication interface 201.

In operation S2250, by driving the first suction motor 1110 of the wireless vacuum cleaner 100 using pre-set power consumption (e.g., 40 W or 115 W), the wireless vacuum cleaner 100 may obtain a pressure value PB2 measured by the first pressure sensor 1400 and a load value (e.g., an operation current value) of the brush device 2000.

In operation S2255, the wireless vacuum cleaner 100 may transmit the obtained pressure value PB2 and the load value (e.g., operation current value) of the brush device 2000 to the station device 200 through the short-range wireless communication method established through the first communication interface 1600. The station device 200 may receive the pressure value PB2 and the load value (e.g., the operation current value) of the brush device 2000 through the second communication interface 201.

In operation S2260, the station device 200 may perform a self-diagnosis on the state of the wireless vacuum cleaner 100 and the state of the station device 200 by comparing the obtained values (a difference value between the pressure values PA1 and PA2 of the station device 200, a difference value between the pressure values PB1 and PB2 of the wireless vacuum cleaner 100, and the load value (e.g., the operation current value) of the brush device 200) with diagnosis condition data for identifying the states of the wireless vacuum cleaner 100 and the station device 200 stored in the second memory 202. Here, the station device 200 may perform the self-diagnosis on the state of the wireless vacuum cleaner 100 based on at least one of a flow path pressure value of the wireless vacuum cleaner 100 and the load value (e.g., the operation current value) of the brush device 2000.

In operation S2265, when at least one abnormal state is determined as a result of performing the self-diagnosis, the wireless vacuum cleaner 100 may output information with respect to the self-diagnosis. The station device 200 may output the information with respect to the self-diagnosis in various methods. For example, the station device 200 may output the information with respect to the self-diagnosis through the second user interface 204. The station device 200 may transmit the information with respect to the self-diagnosis to the user terminal 400 but is not limited thereto. When an abnormal state is not determined as a result of performing the self-diagnosis, the station device 200 may perform a normal operation. For example, the normal operation may be a charge operation of the battery 1500.

FIG. 23 is a diagram for describing the cleaning system 1 according to an embodiment of the present disclosure.

Referring to FIG. 23, the cleaning system 1 according to an embodiment of the present disclosure may further include the server device 300 and the user terminal 400 in addition to the wireless vacuum cleaner 100 and the station device 200. The cleaning system 1 including the wireless vacuum cleaner 100 and the station device 200 is described with reference to FIG. 1, and thus, herein, the server device 300 and the user terminal 400 will be described.

The user terminal 400 according to an embodiment of the present disclosure may be a device registered to the server device 300 by using the same account as the station device 200 or the wireless vacuum cleaner 100. The user terminal 400 may include a smartphone, a laptop computer, a tablet personal computer (PC), a digital camera, an electronic book terminal, a digital broadcasting terminal, a personal digital assistant (PDA), a portable multimedia player (PMP), a wearable device, a device including a display, etc. but is not limited thereto. Hereinafter, for convenience of explanation, the case where the user terminal 400 is a smartphone is described as an example.

According to an embodiment of the present disclosure, the user terminal 400 may communicate with at least one of the server device 300, the station device 200, and the wireless vacuum cleaner 100. The user terminal 400 may directly communicate with the station device 200 or the wireless vacuum cleaner 100 through short-range wireless communication or may indirectly communicate with the station device 200 or the wireless vacuum cleaner 100 through the server device 300.

According to an embodiment of the present disclosure, the user terminal 400 may execute, based on a user input, a certain application (for example, a home appliance management application) provided by the server device 300. In this case, a user may identify the state of the wireless vacuum cleaner 100 or the state of the station device 200 through an execution window of the application.

For example, through the execution window of the application, the user terminal 400 may provide state information (e.g., a normal state, a pre-notification of replacement, a replacement notification, etc.) of the second dust collection part 209 of the station device 200, information (e.g., dust bin last emptied - before one minute) related to a dust discharge operation of the station device 200, an icon with respect to the dust charge operation (e.g., empty dust), an icon (e.g., automatic emptying of dust) for setting an operation mode with respect to the dust discharge operation, etc. but is not limited thereto. According to an embodiment of the present disclosure, the user terminal 400 may provide, to the user 5, a notification with respect a self-diagnosis result on the state of the wireless vacuum cleaner 100 or the state of the station device 200.

The server device 300 according to an embodiment of the present disclosure may be a device configured to manage the station device 200 and the wireless vacuum cleaner 100. For example, the server device 300 may be a home appliance management server. The server device 300 may manage user account information and information about the home appliance linked to a user account. For example, the user 5 may create a user account by accessing the server device 300 through the user terminal 400. The user account may be identified by an identification and a password set by the user 5.

The server device 300 may register the station device 200 and the wireless vacuum cleaner 100 to the user account, according to a predetermined procedure. For example, the server device 300 may register the station device 200 and the wireless vacuum cleaner 100 by linking identification information (e.g., a serial number or a MAC address) of the station device 200 and identification information of the wireless vacuum cleaner 100 to the user account. When the station device 200 and the wireless vacuum cleaner 100 are registered to the server device 300, the server device 300 may periodically receive the state information of the station device 200 or the state information of the wireless vacuum cleaner 100 from the station device 200 and may manage the state of the station device 200 or the state of the wireless vacuum cleaner 100. The state of the station device 200 or the state of the wireless vacuum cleaner 100 may include a state according to a self-diagnosis. The state information of the station device 200 may include the state information (e.g., a normal state, a replacement pre-notification state, a replacement notification state, etc.) of the second dust collection part 209 included in the station device 200. The state information of the wireless vacuum cleaner 100 may include the flow path blockage location information of the wireless vacuum cleaner 100 and the state information (e.g., a normal state, a state requiring emptying of dust, etc.) of the first dust collection part 1110.

According to an embodiment of the present disclosure, the AI model (the learning model) may include at least one of a support vector machine (SVM) model, a neural network model, a random forest model, or a graphical model but is not limited thereto.

The SVM model may be an algorithm that uses a kernel function to form a hyper plane with a maximum margin to classify data in a three-dimensional space based on the properties in the data. The random forest model may be an ensemble algorithm for training a plurality of decision trees and comprehensively predicting results of the plurality of decision trees. The neural network model may be an algorithm for deriving an output by combining a weight for each input value with a conversion function. The graphical model may be an algorithm for representing independence between probability variables as a graph. Here, the probability variables may be represented as nodes, and the conditional independency between the probability variables may be represented as an edge. In the case of the SVM model, it has relatively high accuracy and a fast response rate, allowing an operation of the wireless vacuum cleaner 100 to be quickly switched to optimal specifications, and thus, the AI model described according to an embodiment of the present disclosure may be the SVM model.

The SVM model may be generated through supervised learning. The SVM model may be configured to figure out to which group, from among training groups, data, which is newly input after being trained through training data with labels attached, belongs. According to an embodiment of the present disclosure, the SVM model may be trained by using, as the training data, the load value (e.g., the operation current value) of the brush device 2000 and the pressure value (the flow path pressure value) of the first suction motor 1110 in a predetermined use environment state.

The trained SVM model may be formed of at least one hyper plane for classifying the use environment states. For example, the SVM model for predicting the use environment state may be formed of a hyper plane for distinguishing between the hard floor 1011 and the carpet 1012 of FIG. 10, a hyper plane for distinguishing between the hard floor 1011 and the mat 1013 of FIG. 10, and a hyper plane for distinguishing between the carpet 1012 and the lift state 1014 of FIG. 10. Each hyper plane may be represented by a straight line equation ($y=ax+b$). In the straight line equation, a and b may be parameters, and the parameters may be corrected according to the intensity of the suction force of the first suction motor 1110, the type of the brush device 2000, the state of the wireless vacuum cleaner 100 (e.g., the amount of dust), etc. Also, the equation of the hyper plane may be an equation of higher degree (e.g., $y=ax^2+b$, $y=ax^3+b$, etc.).

When the hard floor 1011 of FIG. 10 is cleaned, the flow path pressure value and the load value (e.g., the operation current value) of the brush device 2000 may be normal, but when the mat 1013 is cleaned, the flow path pressure value and the load value (e.g., the operation current value) of the brush device 2000 may significantly increase. Also, when the carpet 1012 is cleaned, the flow path pressure value may be normal, but the load value (e.g., the operation current value) of the brush device 2000 may significantly increase, and when the brush device 2000 is in the lift state 1014, the flow path pressure value and the load value (e.g., the operation current value) of the brush device 2000 may significantly decrease. Thus, when a normal flow path pressure value and a normal load value (e.g., operation current value) of the brush device 2000 are input to the SVM model, the SVM model may output the "hard floor 1011" as a use environment state of the brush device 2000. When a high flow path pressure value and a high load value (e.g., operation current value) of the brush device 2000 are input to the SVM model, the SVM model may output the "mat 1013" as the use environment state of the brush device 2000. When a normal flow path pressure value and a high load value (e.g., operation current value) of the brush device 2000 are input to the SVM model, the SVM model may output the "carpet 1012" as the use environment state of the brush device 2000. When a low flow path pressure value and a low load value (e.g., operation current value) of the brush device 2000 are input to the SVM model, the SVM model may output the "lift state 1014" as the use environment state of the brush device 2000. Here, the hard floor 1011 may be mapped to a first operation condition (condition #1) of FIG. 3, the carpet 1012 may be mapped to a second operation condition (condition #2) of FIG. 3, the mat 1013 may be mapped to a third operation condition (condition #3) of FIG. 3, and the lift state 1014 may be mapped to a fourth operation condition (condition #4) of FIG. 3.

According to an embodiment of the present disclosure, when the equation defining the hyper plane of the SVM model is changed from the straight line equation to the equation of higher degree, when a new hyper plane is added to the SVM model, or when the SVM model is updated and a parameter is changed, a new version of software related to controlling the wireless vacuum cleaner 100 may be registered to the server device 300.

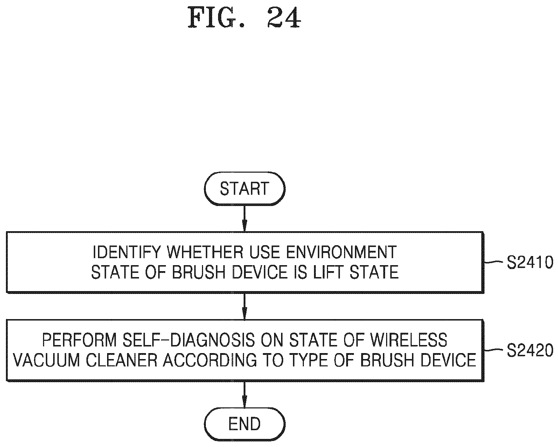

FIG. 24 is a flowchart of a self-diagnosis method of the cleaning system 1, according to an embodiment of the present disclosure. FIG. 24 shows a case where the wireless vacuum cleaner 100 included in the cleaning system 1 solely performs the self-diagnosis, whereby the type of the brush device 2000 is not identified.

Referring to FIG. 24, in operation S2410, the first processor 1800 of the wireless vacuum cleaner 100 may identify whether or not the wireless vacuum cleaner 100 is in a lift state. Whether or not the wireless vacuum cleaner 100 is in the lift state may be identified based on a flow path pressure value and a load value (e.g., an operation current value) of the brush device 200 according to the type of the brush device 2000. For example, when the load value of the brush device 2000 is an operation current value of the brush device 2000 that is less than 0.8 A and the flow path pressure value of the brush device 2000 is -800 Pa or higher, the first processor 1800 may identify that the wireless vacuum cleaner 100 is in the lift state, but the load value (or the reference load value) and the flow path pressure value (or the reference flow path pressure value) of the brush device 2000, used to identify whether or not the wireless vacuum cleaner 100 is in the lift state, are not limited to the values described above. This is because the load value (e.g., the operation current value) of the brush device 2000 and the flow path pressure value used to identify whether or not the wireless vacuum cleaner 100 is in the lift state may vary according to the type of the brush device 2000 connected to the wireless vacuum cleaner 100, as described with reference to 10 of FIG. 1. The lift state of the wireless vacuum cleaner 100 may include a state in which the wireless vacuum cleaner 100 is docked on the station device 200.

When a use environment state of the wireless vacuum cleaner 100 is identified as the lift state in operation S2410, the first processor 1800 of the wireless vacuum cleaner 100 may perform the self-diagnosis with respect to the state of the wireless vacuum cleaner 100 in operation S2420. For example, the self-diagnosis may be performed as described above with reference to FIGS. 12 and 15 by using at least one of the flow path pressure value of the wireless vacuum cleaner 100 and the load value (e.g., the operation current value) of the brush device 2000 as described above with reference to operation S930 of FIG. 9.

FIG. 24 may include an operation of displaying information with respect to a self-diagnosis result through the display 1710 of the wireless vacuum cleaner 100 or outputting the information as notification sound or a notification message through a speaker included in the wireless vacuum cleaner 100.

The first processor 1800 included in the wireless vacuum cleaner 100 according to an embodiment of the present disclosure may identify whether or not the use environment state of the brush device 2000 is the lift state as illustrated in FIG. 24, and when the brush device 2000 is identified to be in the lift state, the first processor 1800 may be configured to perform the self-diagnosis on the state of the wireless vacuum cleaner 100 as described with reference to operation S2420. The first processor 1800 of the wireless vacuum cleaner 100 may identify at least one of a case where the load value of the brush device 2000 is the operation current value of the brush device 2000 that is less than 0.8 A and the flow path pressure value is -800 Pa or greater and a state in which the wireless vacuum cleaner 100 is docked on the station device 200, as the lift state of the brush device 2000.

A wireless vacuum cleaner 100 according to an embodiment of the present disclosure includes: a cleaning body 1000 including a first suction motor 1110 configured to generate a suction force of the wireless vacuum cleaner 100; a brush device 2000 connected to the cleaning body 1000; a load sensor 1134 configured to sense a load value of the brush device 2000; a first pressure sensor 1400 configured to measure a pressure value in a flow path in which the cleaning body 1000 and the brush device 2000 are connected to each other; a first memory 1900 storing one or more instructions; and at least one processor 1800, wherein the at least one processor 1800 is configured to execute the one or more instructions to: identify a type of the brush device 2000; identify whether or not a use environment state of the brush device 2000 is a lift state; and, when the use environment state of the brush device 2000 is the lift state, perform a self-diagnosis on a state of the wireless vacuum cleaner 100 by using at least one of the load value of the brush device 2000 sensed by the load sensor 1134 according to the type of the brush device 2000 and a flow path pressure value based on the pressure value measured by the first pressure sensor 1400.

The load value of the brush device 2000 according to an embodiment of the present disclosure may include an operation current value of the brush device 2000, and the at least one processor 1800 may identify at least one of a case where the operation current value of the brush device 2000 is less than a defined current value (e.g., 0.8 A) and the flow path pressure value is a defined pressure value (e.g., -800 Pa) or higher and a state in which the wireless vacuum cleaner 100 is docked on a station device 200, as the lift state of the brush device 2000.

The at least one processor 1800 according to an embodiment of the present disclosure may be configured to: obtain a first pressure value measured by the first pressure sensor 1400 mounted on an inner portion of the flow path in which the cleaning body 1000 and the brush device 2000 are connected to each other before the first suction motor 1110 is operated; obtain a second pressure value measured by the first pressure sensor 1400 while the first suction motor 1110 is being operated at first power consumption; and obtain a first difference value between the first pressure value and the second pressure value as the flow path pressure value.

The at least one processor 1800 according to an embodiment of the present disclosure may further be configured to perform at least one of an operation of performing the self-diagnosis by comparing first diagnosis condition data for identifying the state of the wireless vacuum cleaner 100 with respect to the flow path pressure value with the flow path pressure value and an operation of performing the self-diagnosis by comparing second diagnosis condition data for identifying the state of the wireless vacuum cleaner 100 with respect to the load value of the brush device 2000 sensed by the load sensor 1134 with the load value of the brush device 2000.

The at least one processor 1800 according to an embodiment of the present disclosure may further be configured to: obtain a third pressure value measured by the first pressure sensor 1400 while the first suction motor 1110 is being operated at second power consumption; obtain a difference value between the first pressure value and the third pressure value as the flow path pressure value at the second power consumption; perform the self-diagnosis on the state of the wireless vacuum cleaner 100 by using the flow path pressure value obtained at the second power consumption; and obtain information about a result of performing the self-diagnosis, based on a first result of the self-diagnosis performed on the state of the wireless vacuum cleaner 100 by using the flow path pressure value obtained at the first power consumption and a second result of the self-diagnosis performed on the state of the wireless vacuum cleaner 100 by using the flow path pressure value obtained at the second power consumption.

When the wireless vacuum cleaner 100 is docked on the station device 200 according to an embodiment of the present disclosure, the at least one processor 1800 may further be configured to: obtain a first pressure value measured by a second pressure sensor 206 of the station device 200 before a dust discharge operation of the station device 200 is performed; obtain a second pressure value measured by the second pressure sensor 206 of the station device 200 after the dust discharge operation is performed; obtain a second difference value between the first pressure value before the dust discharge operation is performed and the second pressure value after the dust discharge operation is performed; and perform a self-diagnosis on a state of the station device 200, based on the second difference value.

A check guide item with respect to the state of the wireless vacuum cleaner 100 based on the flow path pressure value of the wireless vacuum cleaner 100 according to an embodiment of the present disclosure may be different from a check guide item with respect to the state of the wireless vacuum cleaner 100 based on the load value of the brush device 2000.

The wireless vacuum cleaner 100 according to an embodiment of the present disclosure may further include a battery 1500 configured to supply power of the wireless vacuum cleaner 100, and the at least one processor 1800 may further be configured to identify the type of the brush device 2000 based on a voltage value input to an input port connected to the brush device 2000 and a voltage value of the battery 1500.

The at least one processor 1800 according to an embodiment of the present disclosure may further be configured to perform the self-diagnosis on the state of the wireless vacuum cleaner 100 after the dust discharge operation from the wireless vacuum cleaner 100 to the station device 200 is completed.

The wireless vacuum cleaner 100 according to an embodiment of the present disclosure may include a display 1710 configured to display information, and the at least one processor 1800 may further be configured to control the display 1710 such that the information about the result of performing the self-diagnosis is displayed through the display 17100.

The first memory 1900 according to an embodiment of the present disclosure may store a learning model for self-diagnosing the state of the wireless vacuum cleaner 100 according to the type of the brush device 2000, and the at least one processor 1800 may be configured to perform the self-diagnosis by applying the flow path pressure value and the load value of the brush device 200 to the learning model.

When at least one of the obtained flow path pressure value and the load value of the brush device 2000 according to an embodiment of the present disclosure is included in an automatic correction range, the at least one processor 1800 may further be configured to automatically correct a parameter of the learning model with respect to a boundary surface for identifying the state of the wireless vacuum cleaner 100.

A self-diagnosis method of a wireless vacuum cleaner 100 including a cleaning body 1000 including a first suction motor 1110, a brush device 2000 connected to the cleaning body 1000, a load sensor 1134 configured to sense a load value of the brush device 2000, and a first pressure sensor 1400 configured to measure a pressure value in a flow path in which the cleaning body 1000 and the brush device 2000 are connected to each other, according to an embodiment of the present disclosure, may include: identifying a type of the brush device 2000; identifying whether or not a use environment state of the brush device 2000 is a lift state; and, when the use environment state of the brush device 2000 is the lift state, performing a self-diagnosis on a state of the wireless vacuum cleaner 100 by using at least one of the load value of the brush device 2000 sensed by the load sensor 1134 according to the type of the brush device 2000 and a flow path pressure value based on the pressure value measured by the first pressure sensor 1400.

The identifying of the lift state according to an embodiment of the present disclosure may include: identifying whether the load value of the brush device 2000 includes an operation current value of the brush device 2000, whether the operation current value of the brush device 2000 is less than a defined current value (e.g., 0.8 A), and whether the flow path pressure value is a defined pressure value (e.g., -800 Pa) or higher; and identifying whether the wireless vacuum cleaner 100 is in a state in which the wireless vacuum cleaner 100 is docked on a station device 200.

The performing of the self-diagnosis according to an embodiment of the present disclosure may include: obtaining a first pressure value measured by the first pressure sensor 1400 mounted on an inner portion of the flow path in which the cleaning body 1000 and the brush device 2000 are connected to each other before the first suction motor 1110 is operated; obtaining a second pressure value measured by the first pressure sensor 1400 while the first suction motor 1110 is being operated at first power consumption; and obtaining a first difference value between the first pressure value and the second pressure value as the flow path pressure value.

The performing of the self-diagnosis according to an embodiment of the present disclosure may include performing at least one of an operation of performing the self-diagnosis by comparing first diagnosis condition data for identifying the state of the wireless vacuum cleaner 100 with respect to the flow path pressure value with the flow path pressure value and an operation of performing the self-diagnosis by comparing second diagnosis condition data for identifying the state of the wireless vacuum cleaner 100 with respect to the load value of the brush device 2000 sensed by the load sensor 1134 with the operation current value of the brush device 2000.

The performing of the self-diagnosis according to an embodiment of the present disclosure may include: obtaining a third pressure value measured by the first pressure sensor 1400 while the first suction motor 1110 is being operated at second power consumption; obtaining a difference value between the first pressure value and the third pressure value as the flow path pressure value at the second power consumption; performing the self-diagnosis on the state of the wireless vacuum cleaner 100 by using the flow path pressure value obtained at the second power consumption; and obtaining information about a result of performing the self-diagnosis, based on a first result of the self-diagnosis performed on the state of the wireless vacuum cleaner 100 by using the flow path pressure value obtained at the first power consumption and a second result of the self-diagnosis performed on the state of the wireless vacuum cleaner 100 by using the flow path pressure value obtained at the second power consumption.

The self-diagnosis method according to an embodiment of the present disclosure may further include, when the wireless vacuum cleaner 100 is docked on the station device 200, obtaining a first pressure value measured by a second pressure sensor 206 of the station device 200 before a dust discharge operation of the station device 200 is performed; obtaining a second pressure value measured by the second pressure sensor 206 of the station device 200 after the dust discharge operation is performed; obtaining a second difference value between the first pressure value before the dust discharge operation is performed and the second pressure value after the dust discharge operation is performed; and performing a self-diagnosis on a state of the station device 200, based on the second difference value.

The self-diagnosis method of the wireless vacuum cleaner 100 according to an embodiment of the present disclosure may be performed after the dust discharge operation from the wireless vacuum cleaner 100 to the station device 200 is completed and may include displaying the information about the result of performing the self-diagnosis through a display 1710 included in the cleaning body 1000.

The self-diagnosis method of the wireless vacuum cleaner 100 according to an embodiment of the present disclosure may be performed by applying the flow path pressure value and the operation current value of the brush device 2000 to a learning model for self-diagnosing the state of the wireless vacuum cleaner 100 according to the type of the brush device 2000.

The identifying of the type of the brush device 2000 according to an embodiment of the present disclosure may include identifying the type of the brush device 2000 based on a voltage value input to an input port connected to the brush device 2000 and a voltage value of a battery 1500.

The self-diagnosis method according to an embodiment of the present disclosure may include, when at least one of the obtained flow path pressure value and the load value of the brush device 2000 is included in an automatic correction range, automatically correcting a parameter of the learning model with respect to a boundary surface for identifying the state of the wireless vacuum cleaner 100.

A station device 200 on which a wireless vacuum cleaner 100 is docked, according to an embodiment of the present disclosure, may include a second communication interface 201 communicating with the wireless vacuum cleaner 100, a second memory 202 storing one or more instructions, and at least one processor 203, and the at least one processor 203 may be configured to: execute the one or more instructions to receive at least one of a flow path pressure value from the wireless vacuum cleaner 100 and an operation current value of a brush device 2000 included in the wireless vacuum cleaner 100 through the second communication interface 201; perform a self-diagnosis on a state of the wireless vacuum cleaner by using the received at least one of the flow path pressure value and the operation current value of the brush device; and output information about a result of performing the self-diagnosis.

A self-diagnosis method of a station device 20 on which a wireless vacuum cleaner 100 is docked, according to an embodiment of the present disclosure, may include: receiving at least one of a flow path pressure value from the wireless vacuum cleaner 100 and an operation current value of a brush device 2000 included in the wireless vacuum cleaner 100 through a second communication interface 201; performing a self-diagnosis on a state of the wireless vacuum cleaner 100 by using the at least one of the flow path pressure value and the operation current value of the brush device 2000; and outputting information about a result of performing the self-diagnosis.

A wireless vacuum cleaner 100 according to an embodiment of the present disclosure may include a cleaning body 1000, a brush device 2000, a load sensor 1134, a first pressure sensor 1400, a first memory 1900, and at least one processor 1800. The cleaning body 1000 may include a first suction motor 1110 configured to generate a suction force of the wireless vacuum cleaner 100. The brush device 2000 may be connected to the cleaning body 1000. The load sensor 1134 may be configured to sense a load value of the brush device 2000. The first pressure sensor 1400 may be configured to measure a pressure value in a flow path in which the cleaning body 1000 and the brush device 2000 are connected to each other. The first memory 1900 may store one or more instructions. The at least one processor 1800 may execute the one or more instructions to identify whether or not a use environment state of the brush device 2000 is a lift state. When the use environment state of the brush device 2000 is the lift state, the at least one processor 1800 may perform a self-diagnosis on a state of the wireless vacuum cleaner 100 by using at least one of the load value of the brush device 2000 sensed by the load sensor 1134 according to the type of the brush device 2000 and a flow path pressure value based on the pressure value measured by the first pressure sensor 1400.

A self-diagnosis method of a wireless vacuum cleaner 100 according to an embodiment of the present disclosure may include identifying whether or not a use environment state of a brush device 2000 is a lift state. The self-diagnosis method of the wireless vacuum cleaner 100 according to an embodiment of the present disclosure may include, when the use environment state of the brush device 2000 is the lift state, performing a self-diagnosis on a state of the wireless vacuum cleaner 100 by using at least one of a load value of the brush device 2000 sensed by a load sensor 1134 according to the type of the brush device and a flow path pressure value based on a pressure value measured by a first pressure sensor 1400.

Machine-readable storage media may be provided as non-transitory storage media. Here, the term "non-transitory storage media" only denotes that the media are tangible devices and do not include signals (e.g., electromagnetic waves), and does not distinguish the storage media semi-permanently storing data and the storage media temporarily storing data. For example, the "non-transitory storage media" may include a buffer temporarily storing data.

According to an embodiment, the method according to various embodiments disclosed in the present specification may be provided as an inclusion of a computer program product. The computer program product may be, as a product, transacted between a seller and a purchaser. The computer program product may be distributed in the form of a machine-readable storage medium (e.g., a compact disc (CD)-ROM) or may be distributed online (e.g., downloaded or uploaded) through an application store or directly between two user devices (e.g., smartphones). In the case of online distribution, at least part of a computer program product (e.g., a downloadable application) may be at least temporarily stored in a machine-readable storage medium, such as a server of a manufacturer, a server of an application store, or a memory of a relay server, or may be temporarily generated.

**Claims**

1. A wireless vacuum cleaner comprising:

   a suction motor configured to generate a suction force to suction impurities so that the impurities flow along a flow path of the wireless vacuum cleaner;
   a pressure sensor configured to measure a pressure value in the flow path;
   a display configured to display information;
   a communication interface configured to perform communication with a station device to which the wireless vacuum cleaner is dockable; and
   at least one processor configured to:

   based on a state of the wireless vacuum cleaner having been identified as a lift state or based on information indicating that the wireless vacuum cleaner is docked in the station device having been received from the station device through the communication interface,
   obtain the pressure value measured by the pressure sensor, and
   control the display to display self-diagnosis result information obtained by performing a self-diagnosis of the state of the wireless vacuum cleaner by using a flow path pressure value based on the obtained pressure value.

2. The wireless vacuum cleaner of claim 1, wherein the at least one processor is configured to:

obtain a first pressure value measured by the pressure sensor before the suction motor is operated to generate the suction force,

obtain a second pressure value measured by the pressure sensor while the suction motor is being operated to generate the suction force at a predefined power consumption level,

obtain a difference value between the first pressure value and the second pressure value as the flow path pressure value, and

perform the self-diagnosis of the state of the wireless vacuum cleaner by using the flow path pressure value.

3. The wireless vacuum cleaner of claim 2, wherein the at least one processor is configured to:

diagnose the flow path as being blocked based on the flow path pressure value being greater than a first reference pressure value, and

diagnose that at least one of a motor filter and a dust bin of the wireless vacuum cleaner requires cleaning based on the flow path pressure value being less than or equal to a second reference pressure value.

4. The wireless vacuum cleaner of claim 3, wherein the first reference pressure value is 1000 Pascal (Pa), and the second reference pressure value is 200 Pascal (Pa).

5. The wireless vacuum cleaner of claim 1, wherein

the wireless vacuum cleaner includes a current sensing sensor configured to detect an operation current value of a brush device mounted on the wireless vacuum cleaner, and

the at least one processor is configured to:

perform the self-diagnosis of the state of the wireless vacuum cleaner by using the operation current value detected by the current sensing sensor.

6. The wireless vacuum cleaner of claim 5, wherein the at least one processor is configured to:
diagnose that the brush device requires inspection due to an impurity-stuck state of the brush device, based on the operation current value detected by the current sensing sensor being equal to or greater than a first reference current value.

7. The wireless vacuum cleaner of claim 6, wherein the at least one processor is configured to:

identify a type of the brush device, and
set the first reference current value according to the identified type,
wherein the first reference current value is 1.6A.

8. The wireless vacuum cleaner of claim 1, wherein the at least one processor is configured to:
control the display to display information indicating a normal state of the wireless vacuum cleaner based on the self-diagnosis of the state of the wireless vacuum cleaner determining that the state is normal.

9. The wireless vacuum cleaner of claim 1, wherein the at least one processor is configured to:
transmit the self-diagnosis result information to an external device through the communication interface so that the self-diagnosis result information is displayable through a running window of an application executed by the external device.

10. The wireless vacuum cleaner of claim 1, wherein the at least one processor is configured to:
control the display to display information indicating that the self-diagnosis of the state of the wireless vacuum cleaner is in progress when the self-diagnosis of the state of the wireless vacuum cleaner is being performed.

11. A self-diagnosis method of a wireless vacuum cleaner that includes a suction motor configured to generate a suction force to suction impurities so that the impurities flow along a flow path of the wireless vacuum cleaner, a pressure sensor configured to measure a pressure value in the flow path, a display configured to display information, and a communication interface configured to perform communication with a station device to which the wireless vacuum cleaner is dockable, the self-diagnosis method comprising:
based on a state of the wireless vacuum cleaner having been identified as a lift state or based on information indicating that the wireless vacuum cleaner is docked in the station device having been received from the station device through the communication interface,

obtaining the pressure value measured by the pressure sensor, and

controlling the display to display self-diagnosis result information obtained by performing a self-diagnosis of the state of the wireless vacuum cleaner by using a flow path pressure value based on the obtained pressure value.

12. The self-diagnosis method of claim 11, further comprising:
performing the self-diagnosis of the state of the wireless vacuum cleaner, wherein the performing the self-diagnosis of the state of the wireless vacuum cleaner includes:

obtaining a first pressure value measured by the pressure sensor before the suction motor is operated to generate the suction force,

obtaining a second pressure value measured by the pressure sensor while the suction motor is being operated to generate the suction force at a predefined power consumption level,

obtaining a difference value between the first pressure value and the second pressure value as the flow path pressure value, and

performing the self-diagnosis of the state of the wireless vacuum cleaner by using the flow path pressure value.

13. The self-diagnosis method of claim 12, wherein the performing the self-diagnosis of the state of the wireless vacuum cleaner by using the flow path pressure value includes:

diagnosing the flow path as being blocked based on the flow path pressure value being greater than a first reference pressure value, and

diagnosing that at least one of a motor filter and a dust bin of the wireless vacuum cleaner requires cleaning based on the flow path pressure value being less than or equal to a second reference pressure value.

14. The self-diagnosis method of claim 13, wherein the first reference pressure value is 1000 Pascal (Pa), and the second reference pressure value is 200 Pascal (Pa).

15. The self-diagnosis method of claim 11, wherein

the wireless vacuum cleaner includes a current sensing sensor configured to detect an operation current value of a brush device mounted on the wireless vacuum cleaner, and

the self-diagnosis method further comprising:
performing the self-diagnosis of the state of the wireless vacuum cleaner by using the operation current value detected by the current sensing sensor.

**Patentansprüche**

1. Kabelloser Staubsauger, umfassend:

einen Saugmotor, der dazu konfiguriert ist, eine Saugkraft zu erzeugen, um Verunreinigungen anzusaugen, sodass die Verunreinigungen entlang eines Strömungsweges des kabellosen Staubsaugers strömen;

einen Drucksensor, der dazu konfiguriert ist, einen Druckwert in dem Strömungsweg zu messen;

eine Anzeige, die dazu konfiguriert ist, Informationen anzuzeigen;

eine Kommunikationsschnittstelle, die dazu konfiguriert ist, Kommunikation mit einer Stationsvorrichtung durchzuführen, an die der kabellose Staubsauger andockbar ist; und

zumindest einen Prozessor, der zu Folgendem konfiguriert ist:

basierend darauf, dass ein Zustand des kabellosen Staubsaugers als ein Hebezustand identifiziert worden ist, oder basierend auf Informationen, die angeben, dass der kabellose Staubsauger in der Stationsvorrichtung angedockt ist, die von der Stationsvorrichtung durch die Kommunikationsschnittstelle empfangen worden sind,

Erhalten des Druckwertes, der durch den Drucksensor gemessen wird, und

Steuern der Anzeige, um Selbstdiagnoseergebnisinformationen anzuzeigen, die durch Durchführen einer Selbstdiagnose des Zustands des kabellosen Staubsaugers durch Verwenden eines Strömungswegdruckwertes basierend auf dem erhaltenen Druckwert erhalten werden.

2. Kabelloser Staubsauger nach Anspruch 1, wobei der zumindest eine Prozessor zu Folgendem konfiguriert ist:

Erhalten eines ersten Druckwertes, der durch den Drucksensor gemessen wird, bevor der Saugmotor betrieben wird, um die Saugkraft zu erzeugen,
Erhalten eines zweiten Druckwertes, der durch den Drucksensor gemessen wird, während der Saugmotor betrieben wird, um die Saugkraft bei einem vordefinierten Leistungsverbrauchsniveau zu erzeugen,
Erhalten eines Differenzwertes zwischen dem ersten Druckwert und dem zweiten Druckwert als den Strömungswegdruckwert, und
Durchführen der Selbstdiagnose des Zustands des kabellosen Staubsaugers durch Verwenden des Strömungswegdruckwertes.

3. Kabelloser Staubsauger nach Anspruch 2, wobei der zumindest eine Prozessor zu Folgendem konfiguriert ist:

Diagnostizieren des Strömungsweges als blockiert basierend darauf, dass der Strömungswegdruckwert größer als ein erster Referenzdruckwert ist, und
Diagnostizieren, dass zumindest eines von einem Motorfilter und einem Staubbehälter des kabellosen Staubsaugers Reinigung erfordert, basierend darauf, dass der Strömungswegdruckwert kleiner als ein oder gleich einem zweiten Referenzdruckwert ist.

4. Kabelloser Staubsauger nach Anspruch 3, wobei der erste Referenzdruckwert 1000 Pascal (Pa) ist und der zweite Referenzdruckwert 200 Pascal (Pa) ist.

5. Kabelloser Staubsauger nach Anspruch 1, wobei

der kabellose Staubsauger einen Stromerfassungssensor beinhaltet, der dazu konfiguriert ist, einen Betriebsstromwert einer Bürstenvorrichtung, die an dem kabellosen Staubsauger montiert ist, zu detektieren, und
der zumindest eine Prozessor zu Folgendem konfiguriert ist:
Durchführen der Selbstdiagnose des Zustands des kabellosen Staubsaugers durch Verwenden des Betriebsstromwertes, der durch den Stromerfassungssensor detektiert wird.

6. Kabelloser Staubsauger nach Anspruch 5, wobei der zumindest eine Prozessor zu Folgendem konfiguriert ist:
Diagnostizieren, dass die Bürstenvorrichtung Inspektion erfordert, aufgrund eines Zustands der Bürstenvorrichtung mit feststeckenden Verunreinigungen, basierend darauf, dass der Betriebsstromwert, der durch den Stromerfassungssensor detektiert wird, gleich einem oder größer als ein erster Referenzstromwert ist.

7. Kabelloser Staubsauger nach Anspruch 6, wobei der zumindest eine Prozessor zu Folgendem konfiguriert ist:

Identifizieren einer Art der Bürstenvorrichtung, und
Festlegen des ersten Referenzstromwertes gemäß der identifizierten Art,
wobei der erste Referenzstromwert 1,6A ist.

8. Kabelloser Staubsauger nach Anspruch 1, wobei der zumindest eine Prozessor zu Folgendem konfiguriert ist:
Steuern der Anzeige, um Informationen anzuzeigen, die einen normalen Zustand des kabellosen Staubsaugers angeben, basierend darauf, dass die Selbstdiagnose des Zustands des kabellosen Staubsaugers bestimmt, dass der Zustand normal ist.

9. Kabelloser Staubsauger nach Anspruch 1, wobei der zumindest eine Prozessor zu Folgendem konfiguriert ist:
Übertragen der Selbstdiagnoseergebnisinformationen an eine externe Vorrichtung durch die Kommunikationsschnittstelle, sodass die Selbstdiagnoseergebnisinformationen durch ein laufendes Fenster einer Anwendung, die durch die externe Vorrichtung ausgeführt wird, anzeigbar sind.

10. Kabelloser Staubsauger nach Anspruch 1, wobei der zumindest eine Prozessor zu Folgendem konfiguriert ist:
Steuern der Anzeige, um Informationen anzuzeigen, die angeben, dass die Selbstdiagnose des Zustands des kabellosen Staubsaugers im Gange ist, wenn die Selbstdiagnose des Zustands des kabellosen Staubsaugers durchgeführt wird.

**11.** Selbstdiagnoseverfahren eines kabellosen Staubsaugers, der einen Saugmotor, der dazu konfiguriert ist, eine Saugkraft zu erzeugen, um Verunreinigungen anzusaugen, sodass die Verunreinigungen entlang eines Strömungsweges des kabellosen Staubsaugers strömen, einen Drucksensor, der dazu konfiguriert ist, einen Druckwert in dem Strömungsweg zu messen, eine Anzeige, die dazu konfiguriert ist, Informationen anzuzeigen, und eine Kommunikationsschnittstelle, die dazu konfiguriert ist, Kommunikation mit einer Stationsvorrichtung durchzuführen, an die der kabellose Staubsauger andockbar ist, beinhaltet, wobei das Selbstdiagnoseverfahren Folgendes umfasst:

basierend darauf, dass ein Zustand des kabellosen Staubsaugers als ein Hebezustand identifiziert worden ist, oder basierend auf Informationen, die angeben, dass der kabellose Staubsauger in der Stationsvorrichtung angedockt ist, die von der Stationsvorrichtung durch die Kommunikationsschnittstelle empfangen worden sind, Erhalten des Druckwertes, der durch den Drucksensor gemessen wird, und
Steuern der Anzeige, um Selbstdiagnoseergebnisinformationen anzuzeigen, die durch Durchführen einer Selbstdiagnose des Zustands des kabellosen Staubsaugers durch Verwenden eines Strömungswegdruckwertes basierend auf dem erhaltenen Druckwert erhalten werden.

**12.** Selbstdiagnoseverfahren nach Anspruch 11, ferner umfassend:
Durchführen der Selbstdiagnose des Zustands des kabellosen Staubsaugers, wobei das Durchführen der Selbstdiagnose des Zustands des kabellosen Staubsaugers Folgendes beinhaltet:

Erhalten eines ersten Druckwertes, der durch den Drucksensor gemessen wird, bevor der Saugmotor betrieben wird, um die Saugkraft zu erzeugen,
Erhalten eines zweiten Druckwertes, der durch den Drucksensor gemessen wird, während der Saugmotor betrieben wird, um die Saugkraft bei einem vordefinierten Leistungsverbrauchsniveau zu erzeugen,
Erhalten eines Differenzwertes zwischen dem ersten Druckwert und dem zweiten Druckwert als den Strömungswegdruckwert, und
Durchführen der Selbstdiagnose des Zustands des kabellosen Staubsaugers durch Verwenden des Strömungswegdruckwertes.

**13.** Selbstdiagnoseverfahren nach Anspruch 12, wobei das Durchführen der Selbstdiagnose des Zustands des kabellosen Staubsaugers durch Verwenden des Strömungswegdruckwertes Folgendes beinhaltet:

Diagnostizieren des Strömungsweges als blockiert basierend darauf, dass der Strömungswegdruckwert größer als ein erster Referenzdruckwert ist, und
Diagnostizieren, dass zumindest eines von einem Motorfilter und einem Staubbehälter des kabellosen Staubsaugers Reinigung erfordert, basierend darauf, dass der Strömungswegdruckwert kleiner als ein oder gleich einem zweiten Referenzdruckwert ist.

**14.** Selbstdiagnoseverfahren nach Anspruch 13, wobei der erste Referenzdruckwert 1000 Pascal (Pa) ist und der zweite Referenzdruckwert 200 Pascal (Pa) ist.

**15.** Selbstdiagnoseverfahren nach Anspruch 11, wobei

der kabellose Staubsauger einen Stromerfassungssensor beinhaltet, der dazu konfiguriert ist, einen Betriebsstromwert einer Bürstenvorrichtung, die an dem kabellosen Staubsauger montiert ist, zu detektieren, und
das Selbstdiagnoseverfahren ferner Folgendes umfasst:
Durchführen der Selbstdiagnose des Zustands des kabellosen Staubsaugers durch Verwenden des Betriebsstromwertes, der durch den Stromerfassungssensor detektiert wird.

**Revendications**

**1.** Aspirateur sans fil comprenant :

un moteur d'aspiration configuré pour générer une force d'aspiration pour aspirer des impuretés afin que les impuretés s'écoulent le long d'un trajet d'écoulement de l'aspirateur sans fil ;
un capteur de pression configuré pour mesurer une valeur de pression dans le trajet d'écoulement ;
un dispositif d'affichage configuré pour afficher des informations ;
une interface de communication configurée pour réaliser une communication avec un dispositif de station auquel l'aspirateur sans fil peut être arrimé ; et
au moins un processeur configuré pour :

sur la base d'un état de l'aspirateur sans fil identifié comme étant un état de levage ou sur la base d'informations, indiquant que l'aspirateur sans fil est arrimé dans le dispositif de station, reçues en provenance du dispositif de station par l'intermédiaire de l'interface de communication,
obtenir la valeur de pression mesurée par le capteur de pression, et
commander le dispositif d'affichage pour afficher des informations de résultat d'autodiagnostic obtenues par la réalisation d'un autodiagnostic de l'état de l'aspirateur sans fil à l'aide d'une valeur de pression de trajet d'écoulement sur la base de la valeur de pression obtenue.

2. Aspirateur sans fil de la revendication 1, ledit au moins un processeur étant configuré pour :

obtenir une première valeur de pression mesurée par le capteur de pression avant que le moteur d'aspiration ne soit actionné pour générer la force d'aspiration,
obtenir une seconde valeur de pression mesurée par le capteur de pression pendant que le moteur d'aspiration est en cours d'actionnement pour générer la force d'aspiration à un niveau prédéfini de consommation d'énergie,
obtenir une valeur de différence entre la première valeur de pression et la seconde valeur de pression en tant que valeur de pression de trajet d'écoulement, et
réaliser l'auto-diagnostic de l'état de l'aspirateur sans fil à l'aide de la valeur de pression de trajet d'écoulement.

3. Aspirateur sans fil de la revendication 2, ledit au moins un processeur étant configuré pour :

diagnostiquer le trajet d'écoulement comme étant bloqué sur la base que la valeur de pression de trajet d'écoulement est supérieure à une première valeur de pression de référence, et
diagnostiquer qu'au moins l'un d'un filtre de moteur et d'un bac à poussière de l'aspirateur sans fil nécessite un nettoyage sur la base que la valeur de pression de trajet d'écoulement est inférieure ou égale à une seconde valeur de pression de référence.

4. Aspirateur sans fil de la revendication 3, ladite première valeur de pression de référence étant de 1000 pascals (Pa), et ladite seconde valeur de pression de référence étant de 200 pascals (Pa).

5. Aspirateur sans fil de la revendication 1,

ledit aspirateur sans fil comprenant un capteur de détection de courant configuré pour détecter une valeur de courant de fonctionnement d'un dispositif de brosse monté sur l'aspirateur sans fil, et
ledit au moins un processeur étant configuré pour :
réaliser l'auto-diagnostic de l'état de l'aspirateur sans fil à l'aide de la valeur de courant de fonctionnement détectée par le capteur de détection de courant.

6. Aspirateur sans fil de la revendication 5, ledit au moins un processeur étant configuré pour :
diagnostiquer que le dispositif de brosse nécessite une inspection en raison d'un état de blocage par impureté du dispositif de brosse, sur la base que la valeur de courant de fonctionnement détectée par le capteur de détection de courant est supérieure ou égale à une première valeur de courant de référence.

7. Aspirateur sans fil de la revendication 6, ledit au moins un processeur étant configuré pour :

identifier un type du dispositif de brosse, et
régler la première valeur de courant de référence selon le type identifié,
ladite première valeur de courant de référence étant de 1,6 A.

8. Aspirateur sans fil de la revendication 1, ledit au moins un processeur étant configuré pour :
commander le dispositif d'affichage pour afficher des informations indiquant un état normal de l'aspirateur sans fil sur la base que l'auto-diagnostic de l'état de l'aspirateur sans fil détermine que l'état est normal.

9. Aspirateur sans fil de la revendication 1, ledit au moins un processeur étant configuré pour :
transmettre les informations de résultat d'auto-diagnostic à un dispositif externe par l'intermédiaire de l'interface de communication afin que les informations de résultat d'autodiagnostic puissent être affichées par l'intermédiaire d'une fenêtre d'exécution d'une application exécutée par le dispositif externe.

10. Aspirateur sans fil de la revendication 1, ledit au moins un processeur étant configuré pour :
commander le dispositif d'affichage pour afficher des informations indiquant que l'autodiagnostic de l'état de l'aspirateur sans fil est en cours lorsque l'auto-diagnostic de l'état de l'aspirateur sans fil est réalisé.

11. Procédé d'auto-diagnostic d'un aspirateur sans fil qui comprend un moteur d'aspiration configuré pour générer une force d'aspiration pour aspirer des impuretés afin que les impuretés s'écoulent le long d'un trajet d'écoulement de l'aspirateur sans fil, un capteur de pression configuré pour mesurer une valeur de pression dans le trajet d'écoulement, un dispositif d'affichage configuré pour afficher des informations, et une interface de communication configurée pour réaliser une communication avec un dispositif de station auquel l'aspirateur sans fil peut être arrimé, le procédé d'auto-diagnostic comprenant :

sur la base d'un état de l'aspirateur sans fil identifié comme étant un état de levage ou sur la base d'informations, indiquant que l'aspirateur sans fil est arrimé dans le dispositif de station, reçues en provenance du dispositif de station par l'intermédiaire de l'interface de communication,
l'obtention de la valeur de pression mesurée par le capteur de pression, et
la commande du dispositif d'affichage pour afficher des informations de résultat d'autodiagnostic obtenues par la réalisation d'un autodiagnostic de l'état de l'aspirateur sans fil à l'aide d'une valeur de pression de trajet d'écoulement sur la base de la valeur de pression obtenue.

12. Procédé d'auto-diagnostic de la revendication 11, comprenant en outre :
la réalisation de l'auto-diagnostic de l'état de l'aspirateur sans fil, ladite réalisation de l'autodiagnostic de l'état de l'aspirateur sans fil comprenant :

l'obtention d'une première valeur de pression mesurée par le capteur de pression avant que le moteur d'aspiration ne soit actionné pour générer la force d'aspiration,
l'obtention d'une seconde valeur de pression mesurée par le capteur de pression pendant que le moteur d'aspiration est en cours d'actionnement pour générer la force d'aspiration à un niveau prédéfini de consommation d'énergie,
l'obtention d'une valeur de différence entre la première valeur de pression et la seconde valeur de pression en tant que valeur de pression de trajet d'écoulement, et
la réalisation de l'auto-diagnostic de l'état de l'aspirateur sans fil à l'aide de la valeur de pression de trajet d'écoulement.

13. Procédé d'auto-diagnostic de la revendication 12, ladite réalisation de l'auto-diagnostic de l'état de l'aspirateur sans fil à l'aide de la valeur de pression de trajet d'écoulement comprenant :

le diagnostic du trajet d'écoulement comme étant bloqué sur la base que la valeur de pression de trajet d'écoulement est supérieure à une première valeur de pression de référence, et
le diagnostic qu'au moins l'un d'un filtre de moteur et d'un bac à poussière de l'aspirateur sans fil nécessite un nettoyage sur la base que la valeur de pression de trajet d'écoulement est inférieure ou égale à une seconde valeur de pression de référence.

14. Procédé d'auto-diagnostic de la revendication 13, ladite première valeur de pression de référence étant de 1000 pascals (Pa), et ladite seconde valeur de pression de référence étant de 200 pascals (Pa).

15. Procédé d'auto-diagnostic de la revendication 11,

ledit aspirateur sans fil comprenant un capteur de détection de courant configuré pour détecter une valeur de courant de fonctionnement d'un dispositif de brosse monté sur l'aspirateur sans fil, et
le procédé d'auto-diagnostic comprenant en outre :
la réalisation de l'auto-diagnostic de l'état de l'aspirateur sans fil à l'aide de la valeur de courant de fonctionnement détectée par le capteur de détection de courant.

FIG. 1

# FIG. 2

# FIG. 3

| No | OPERATION CONDITION | USE ENVIRONMENT STATE | GENERAL MODE | | AI MODE | | NOTE |
|---|---|---|---|---|---|---|---|
| | | | POWER CONSUMPTION | RPM | POWER CONSUMPTION | RPM | |
| 1 | CONDITION #1 | FLOOR | 115 | 3,800 | 75 | 2,000 | INCREASE USE TIME |
| 2 | CONDITION #2 | CARPET (NORMAL LOAD) | 115 | 3,800 | 115 | 3,800 | PRIORITY ON CLEANING EFFICIENCY |
| 3 | CONDITION #3 | CARPET (OVERLOAD) | 115 | 3,800 | 58 | 2,000 | IMPROVE USABILITY (OPERABILITY) |
| 4 | CONDITION #4 | MAT | 115 | 3,800 | 58 | 1,500 | IMPROVE USABILITY (OPERABILITY) |
| 5 | CONDITION #5 | LIFT (MOVE) | 115 | 3,800 | 58 | 1,500 | INCREASE USE TIME |
| 6 | CONDITION #6 | CORNER | 115 | 3,800 | 150 | 2,000 | IMPROVEMENT IN CLEANING EFFICIENCY |

# FIG. 4

SUCTION DUCT 40

FLOW PATH

**1000**

**PCB** 1130

THIRD PROCESSOR 1131

FIRST SWITCH DEVICE 1132

PWM CONTROL SWITCH DEVICE 1133

LOAD SENSOR 1134

FIRST PROCESSOR 1800

FIRST COMMUNICATION INTERFACE 1600

FIRST USER INTERFACE 1700

FIRST MEMORY 1900

EP 4 505 926 B1

# FIG. 5

BATTERY 1500 — UART — FIRST PROCESSOR 1800 — UART — THIRD PROCESSOR 1131 — SIGNAL LINE COMMUNICATION — FOURTH PROCESSOR 2410

BATTERY VOLTAGE STATE (NORMAL, ABNORMAL, FULLY CHARGED, FULLY NON-CHARGED, ETC.)

SVM ALGORITHM SETTING BUTTON ON/OFF BUTTON +/- SETTING BUTTON LCD CONTROL

I2C

FIRST PRESSURE SENSOR 1400 FLOW PATH PRESSURE (NEGATIVE PRESSURE)

BRUSH LOAD CURRENT SUCTION FORCE INTENSITY BLDC OPERATION RPM BRUSH TYPE (KIND) STATE (NORMAL, ABNORMAL, ETC.)

BRUSH DRUM RPM TRIP(OVERLOAD) LEVEL, ETC.

# FIG. 6

| No | TYPE | HARD FLOOR BRUSH | TURBO (CARPET) BRUSH | BEDCLOTHES BRUSH | PET BRUSH | WET MOP BRUSH | AI FLOOR BRUSH | AI MULTI-BRUSH |
|---|---|---|---|---|---|---|---|---|
| 1 | IMAGE | | | | | | | |
| 2 | MAIN USAGE | HARD FLOOR-DEDICATED | CARPET-DEDICATED | BLANKET AND BEDCLOTHES-DEDICATED | BLANKET, SOFA, AND PET-DEDICATED | WET MOPPING-DEDICATED | HARD FLOOR-DEDICATED + CARPET/MAT /CORNER, ETC. | CARPET-DEDICATED + HARD FLOOR/MAT /CORNER, ETC. |
| 3 | BRUSH MOTOR TYPE | DC 20W | DC 40W | DC 20W | DC 20W | DC 40W | PLANET-GEARED DC 30 W | BLDC 120W |

EP 4 505 926 B1

# FIG. 7

100

BATTERY (1500)

CLEANING BODY (1000)

EXTENSION PIPE (3000)

BRUSH DEVICE (2000)

+30~19V

+25.2V

+25.2V (10)

+25.2V

MOTOR

GND

GND (20)

GND

2100

1131

FET

THIRD PROCESSOR

α

Signal

Signal (30)

Signal

A IDENTIFICATION RESISTOR (2500)

LOAD SENSOR 1134

B

C

SENSE BRUSH TYPE

100k

$$\text{AD PORT INPUT VOLTAGE OF FIRST PROCESSOR} * \frac{C}{A+B+C}$$
$$= \text{BATTERY SUPPLY VOLTAGE(25.2V)}$$

EP 4 505 926 B1

# FIG. 8

EP 4 505 926 B1

| Brush Type | ID RESISTOR (A) | Battery 25V Max (6S1P) | | | Battery 29.2V Max (7S1P) | | | NOTE |
|---|---|---|---|---|---|---|---|---|
| | | 15.6 | 21.6 | 25.0 | 18.2 | 25.2 | 29.2 | |
| Wet Brush | Short | 3.105 | 4.299 | 4.976 | 3.622 | 5.016 | 5.812 | |
| (AI) MULTI-BRUSH | 330K | 1.724 | 2.387 | 2.763 | 2.011 | 2.785 | 3.227 | |
| TURBO 2.0 Brush | 910,000 | 0.968 | 1.340 | 1.551 | 1.129 | 1.563 | 1.811 | |
| (AI) HARD FLOOR BRUSH | 2,200,000 | 0.490 | 0.678 | 0.785 | 0.571 | 0.791 | 0.917 | |
| PRELIMINARY | 6,800,000 | 0.177 | 0.284 | 0.284 | 0.207 | 0.287 | 0.332 | |
| Soft Brush | Open | 0 | 0 | 0 | 0 | 0 | 0 | |

800

# FIG. 9

```
                        ┌─────────┐
                        │  START  │
                        └─────────┘
                             │
                             ▼
    ┌──────────────────────────────────────────────────┐
    │        IDENTIFY TYPE OF BRUSH DEVICE              │── S910
    └──────────────────────────────────────────────────┘
                             │
                             ▼
    ┌──────────────────────────────────────────────────┐
    │   IDENTIFY WHETHER OR NOT USE ENVIRONMENT         │── S920
    │    STATE OF BRUSH DEVICE IS LIFT STATE            │
    └──────────────────────────────────────────────────┘
                             │
                             ▼
    ┌──────────────────────────────────────────────────┐
    │ PERFORM SELF-DIAGNOSIS ON STATE OF WIRELESS       │── S930
    │ VACUUM CLEANER ACCORDING TO TYPE OF BRUSH         │
    └──────────────────────────────────────────────────┘
                             │
                             ▼
                        ┌─────────┐
                        │   END   │
                        └─────────┘
```

# FIG. 10

# FIG. 11

```
           ( START )
              │
              ▼
┌─────────────────────────────────────┐
│   COMPARE DIAGNOSIS CONDITION DATA FOR   │
│ IDENTIFYING STATE OF WIRELESS VACUUM CLEANER │── S1110
│   WITH OBTAINED FLOW PATH PRESSURE VALUE   │
└─────────────────────────────────────┘
              │
              ▼
┌─────────────────────────────────────┐
│ DIAGNOSE STATE OF WIRELESS VACUUM CLEANER │── S1120
│      BASED ON RESULT OF COMPARISON      │
└─────────────────────────────────────┘
              │
              ▼
           ( END )
```

## FIG. 12

|  | 1201 | 1202 | 1203 | 1204 | 1205 |
|---|---|---|---|---|---|
| STATE CHECK | USER CHECK | AUTOMATIC CORRECTION | NORMAL | AUTOMATIC CORRECTION | USER CHECK |
| MEASUREMENT DATA (Pa) | 0 ~ 200 | 201 ~ 300 | 301 ~ 500 | 501 ~ 1000 | 1000 OR HIGHER |
| CHECK GUIDE | DUST COLLECTION PART CHECK (EMPTY DUST COLLECTION PART/CLEAN FILTER) | AI MODEL AUTOMATIC CORRECTION | - | AI MODEL AUTOMATIC CORRECTION | FLOW PATH BLOCKAGE CHECK (PIPE, BRUSH, ETC.) |

100

1200

DUST COLLECTION PART (FULL OF IMPURITIES)

1201

100

2000

12

FLOW PATH BLOCKAGE

1205

2000

EP 4 505 926 B1

FIG. 13

# FIG. 14

```
                    ( START )
                         │
                         ▼
┌────────────────────────────────────────────┐
│      COMPARE DIAGNOSIS CONDITION DATA FOR    │
│  IDENTIFYING STATE OF WIRELESS VACUUM CLEANER│──── S1410
│     WITH OBTAINED LOAD VALUE OF BRUSH DEVICE │
└────────────────────────────────────────────┘
                         │
                         ▼
┌────────────────────────────────────────────┐
│   DIAGNOSE STATE OF WIRELESS VACUUM CLEANER  │
│         BASED ON RESULT OF COMPARISON        │──── S1420
└────────────────────────────────────────────┘
                         │
                         ▼
                     ( END )
```

# FIG. 15

|  | 1501 | 1502 | 1503 | 1504 | 1505 |
|---|---|---|---|---|---|
| STATE CHECK | USER CHECK | | NORMAL | AUTOMATIC CORRECTION | USER CHECK |
| MEASUREMENT DATA | 0 ~ 0.1A | 0.2 ~0.5A | 0.6 ~0.9A | 1.0 ~1.5A | 1.6 A OR HIGHER |
| CHECK GUIDE | BRUSH CHECK (WHOLE BRUSH NON-ASSEMBLED) | BRUSH CHECK (BRUSH DRUM NON-ASSEMBLED) | - | AI MODEL AUTOMATIC CORRECTION | BRUSH CHECK (IMPURITIES STUCK IN BRUSH) |

EP 4 505 926 B1

# FIG. 16

LOAD VALUE OF
BRUSH DEVICE 2000

WHOLE
BRUSH NON-
ASSEMBLED

1610

BRUSH
DRUM NON-
ASSEMBLED

1620

IMPURITIES
STUCK IN
BRUSH

1630

FLOW PATH
PRESSURE VALUE

EMPTY DUST
COLLECTION PART/
CLEAN FILTER

1640

PIPE/BRUSH
BLOCKAGE

1650

# FIG. 17

START

IDENTIFY DOCKING STATE OF WIRELESS VACUUM CLEANER — S1710

OBTAIN PRESSURE VALUE PA1 BEFORE OPERATION
OF SECOND SUCTION MOTOR OF STATION DEVICE — S1720

PERFORM DUST DISCHARGE OPERATION — S1730

OBTAIN PRESSURE VALUE PA2 OF STATION
DEVICE AFTER DUST DISCHARGE OPERATION — S1740

OBTAIN PRESSURE VALUE PB1 BEFORE OPERATION OF
FIRST SUCTION MOTOR OF WIRELESS VACUUM CLEANER — S1750

OBTAIN PRESSURE VALUE PB2 AND LOAD VALUE
OF BRUSH DEVICE BY DRIVING WIRELESS VACUUM
CLEANER AT MINIMUM POWER CONSUMPTION OF 40 W — S1760

OBTAIN FLOW PATH PRESSURE VALUE PB2' AND LOAD
VALUE OF BRUSH DEVICE BY DRIVING WIRELESS VACUUM
CLEANER AT MAXIMUM POWER CONSUMPTION OF 115 W — S1770

PERFORM SELF-DIAGNOSIS ON STATES OF STATION DEVICE
AND WIRELESS VACUUM CLEANER BY USING OBTAINED VALUES — S1780

OUTPUT RESULT OF PERFORMING SELF-DIAGNOSIS — S1790

END

# FIG. 18

| | 1801 | 1802 | 1803 | 1804 | 1805 |
|---|---|---|---|---|---|
| STATE CHECK | SVC CHECK RECOMMENDATION | USER CHECK | NORMAL | USER CHECK | USER CHECK/SVC CHECK RECOMMENDATION |
| MEASUREMENT DATA | ~ 5000 | 5001 ~ 8000 | 8001~11000 | 11001~18000 | 18001 ~ |
| CHECK GUIDE | ABNORMALITY IN AC INPUT POWER OR STATION SUCTION MOTOR (SVC CHECK RECOMMENDATION) | DOCKING STATE CHECK (COUPLING ERROR OF DUST COLLECTION PART) | – | BLOCKAGE OF DUST COLLECTION PART (REPLACEMENT OF DUST COLLECTION PART NEEDED) | ENTRANCE FULLY BLOCKED (DOOR NOT OPENED, ETC. BREAKDOWN CHECK NEEDED) |

EP 4 505 926 B1

# FIG. 19

POWER ON ⟹ ( START )

S1910

IDENTIFY WHETHER WIRELESS
VACUUM CLEANER IS DOCKED
ON STATION DEVICE

DOCKED STATE | UNDOCKED STATE

S1920

PERFORM SELF-DIAGNOSIS ON
STATE OF STATION DEVICE
AND STATE OF WIRELESS
VACUUM CLEANER WHILE BEING
DOCKED ON STATION DEVICE

S1950

WIRELESS VACUUM CLEANER
SOLELY PERFORMS
SELF-DIAGNOSIS

ABNORMAL STATE | NORMAL STATE

ABNORMAL STATE | NORMAL STATE

S1940

PERFORM NORMAL
OPERATION

S1970

PERFORM NORMAL
OPERATION

S1930

OUTPUT RESULT OF
PERFORMING
SELF-DIAGNOSIS

S1960

OUTPUT RESULT OF
PERFORMING
SELF-DIAGNOSIS

( END )

# FIG. 20

DOCKING COMPLETED

# FIG. 21

100 — WIRELESS VACUUM CLEANER

200 — STATION DEVICE

S2105 — CHECK MODEL AND SPECIFICATIONS (IDENTIFICATION INFORMATION, MODEL INFORMATION, AND STANDARDS INFORMATION)

S2110 — IDENTIFY DOCKING STATE

S2115 — TRANSMIT DOCKING STATE INFORMATION

S2120 — OBTAIN PRESSURE VALUE PA1 BEFORE OPERATION OF SECOND SUCTION MOTOR

S2125 — TRANSMIT PRESSURE VALUE PA1

S2130 — PERFORM DUST DISCHARGE OPERATION

S2135 — OBTAIN PRESSURE VALUE PA2 AFTER DUST DISCHARGE OPERATION

S2140 — TRANSMIT PRESSURE VALUE PA2

S2145 — OBTAIN PRESSURE VALUE PB1 BEFORE OPERATION OF FIRST SUCTION MOTOR

S2150 — OBTAIN PRESSURE VALUE PB2 AND LOAD VALUE OF BRUSH DEVICE BY DRIVING FIRST SUCTION MOTOR AT PRE-SET POWER CONSUMPTION

S2155 — PERFORM SELF-DIAGNOSIS BY COMPARING OBTAINED VALUES WITH DIAGNOSIS CONDITION DATA FOR IDENTIFYING STATE

S2160 — WHEN AT LEAST ONE ABNORMAL STATE IS DETERMINED, OUTPUT RESULT OF PERFORMING SELF-DIAGNOSIS, AND WHEN ABNORMAL STATE IS NOT DETERMINED, PERFORM NORMAL OPERATION

# FIG. 22

/100
WIRELESS VACUUM
CLEANER

/200
STATION
DEVICE

S2205 — CHECK MODEL AND SPECIFICATIONS

S2210
IDENTIFY DOCKING STATE

S2220
OBTAIN PRESSURE VALUE PA1
BEFORE OPERATION OF
SECOND SUCTION MOTOR

S2230 — PERFORM DUST DISCHARGE OPERATION

S2235
OBTAIN PRESSURE VALUE PA2
AFTER DUST DISCHARGE OPERATION

S2240
OBTAIN PRESSURE VALUE PB1 BEFORE
OPERATION OF FIRST SUCTION MOTOR

TRANSMIT PRESSURE
VALUE PB1 — S2245

S2250
OBTAIN PRESSURE VALUE PB2 AND LOAD VALUE
OF BRUSH DEVICE BY DRIVING FIRST SUCTION
MOTOR AT PRE-SET POWER CONSUMPTION

TRANSMIT PRESSURE
VALUE PB2 AND OPERATION
CURRENT VALUE OF BRUSH — S2255

S2260 — PERFORM SELF-DIAGNOSIS BY COMPARING
OBTAINED VALUES WITH DIAGNOSIS
CONDITION DATA FOR IDENTIFYING STATE

S2265 — WHEN AT LEAST ONE ABNORMAL STATE IS
DETERMINED, OUTPUT RESULT OF
PERFORMING SELF-DIAGNOSIS, AND WHEN
ABNORMAL STATE IS NOT DETERMINED,
PERFORM NORMAL OPERATION

# FIG. 23

# FIG. 24

START

IDENTIFY WHETHER USE ENVIRONMENT
STATE OF BRUSH DEVICE IS LIFT STATE — S2410

PERFORM SELF-DIAGNOSIS ON STATE OF WIRELESS
VACUUM CLEANER ACCORDING TO TYPE OF BRUSH DEVICE — S2420

END

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022008869 A